(19) Europäisches Patentamt
European Patent Office
Office européen des brevets

(11) EP 4 471 089 A1

(12) **EUROPEAN PATENT APPLICATION**
published in accordance with Art. 153(4) EPC

(43) Date of publication:
**04.12.2024 Bulletin 2024/49**

(21) Application number: **22924189.8**

(22) Date of filing: **23.12.2022**

(51) International Patent Classification (IPC):
***C08L 69/00*** (2006.01) ***C08K 3/013*** (2018.01)
***C08K 3/04*** (2006.01) ***C08K 3/10*** (2018.01)
***C08K 3/34*** (2006.01) ***C08K 3/38*** (2006.01)
***C08K 3/40*** (2006.01) ***C08K 5/5399*** (2006.01)
***C08L 51/04*** (2006.01) ***C08L 67/00*** (2006.01)

(52) Cooperative Patent Classification (CPC):
**C08K 3/013; C08K 3/04; C08K 3/10; C08K 3/34; C08K 3/38; C08K 3/40; C08K 5/5399; C08L 51/04; C08L 67/00; C08L 69/00**

(86) International application number:
**PCT/JP2022/047542**

(87) International publication number:
**WO 2023/145342 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.01.2022 JP 2022011504**
**22.02.2022 JP 2022025253**
**08.03.2022 JP 2022035352**

(71) Applicant: **Teijin Limited**
**Osaka 530-0005 (JP)**

(72) Inventors:
- **HIGASHI Kengo**
  **Osaka-shi Osaka 530-0005 (JP)**
- **ODA Koji**
  **Osaka-shi Osaka 530-0005 (JP)**
- **SUMITA Atsushi**
  **Osaka-shi Osaka 530-0005 (JP)**
- **MINAGAWA Ken**
  **Osaka-shi Osaka 530-0005 (JP)**

(74) Representative: **Kraus & Lederer PartGmbB**
**Thomas-Wimmer-Ring 15**
**80539 München (DE)**

# (54) FLAME RETARDANT POLYCARBONATE RESIN COMPOSITION AND MOLDED ARTICLE THEREOF

(57) The flame-retardant polycarbonate resin composition containing (A) 100 parts by weight of polycarbonate resin (component A); and with respect to (A); (B) (B-1)1 to 30 parts by weight of ABS resin (component B-1-1), 1 to 10 parts by weight of methyl methacrylate-butadiene-styrene copolymer (component B-1-2), (B-2) 1 to 100 parts by weight of aromatic polyester resin (component B-2), or (B-3) 0. 1 to 160 parts by weight of inorganic filler (component B-3); (D) 1 to 45 parts by weight of phosphazene (component D) containing 98.5 mol% or more of phosphazene cyclic trimer; and (E) 0.05 to 4 parts by weight of anti-drip agent (component E), and a molded product thereof, which has excellent impact strength, flame retardancy, and durability.

EP 4 471 089 A1

## Description

[Technical Field]

The present invention relates to a flame-retardant polycarbonate resin composition and molded products thereof.

[Background Art]

Polycarbonate resins have excellent mechanical and thermal properties and are therefore industrially used widely. However, many polymer alloys with other thermoplastic resins have been developed due to the poor processability and moldability and to improve heat resistance, and among these, polymer alloys with styrene resins such as ABS resins, polyarylates such as aromatic polyester resins, and liquid crystalline polyester resins are widely used in the fields of automobiles, OA devices, electronic and electrical devices, etc. In contrast, in recent years, there has been a strong demand of flame retardancy for resin materials used mainly in applications such as office automation devices and home appliances, and to meet these demands, many studies have also been made for flame retardancy on polymer alloys of polycarbonate resin with ABS resin and aromatic polyester resin or polycarbonate resin compositions of polycarbonate resin blended with inorganic fillers.

Although in such polymer alloys and polycarbonate resin compositions, a combination of halogenated flame retardants containing bromine atoms etc. and flame-retardant aids such as antimony trioxide has been conventionally used, halogen compounds have a problem of generating harmful substances during combustion, and thus more studies have been made on flame retardancy without halogen compounds. For example, there have been proposed a method of blending triphenyl phosphate and polytetrafluoroethylene having fibril-forming ability into a polymer alloy of polycarbonate resin with ABS resin (PTL 1), a method of blending a phosphate-based oligomer of a condensed phosphate ester (PTL 2), etc.

In addition, for example, there have been proposed a method of blending diphenylpentaerythritol diphosphate and polytetrafluoroethylene having fibril-forming ability into a polymer alloy of a polycarbonate resin with an aromatic polyester resin (PTL 3), a method of blending a phosphate oligomer of a condensed phosphate ester and a fibrous material thereinto (PTL 4), etc.

Further, for example, there have been proposed a method of blending triphenyl phosphate and polytetrafluoroethylene having fibril-forming ability with polycarbonate resin and glass fiber (PTL 5), a method of blending a phosphate oligomer of a condensed phosphate ester into a laser direct structuring resin (PTL 6), a method of blending a cyclic phosphate ester and a fluororesin with a polycarbonate resin and talc (PTL 3), etc.

In contrast, in recent years, performance retention during long-term use has become extremely important from the viewpoints of product safety, reducing environmental impact due to extending product life, product assurance of manufacturers, etc.

However, polymer alloys and polycarbonate resin compositions blended with these phosphate ester flame retardants have problems, as well as insufficient heat resistance, during the long-term use, such as a significant reduction of impact strength and flame retardancy, which cause is acceleration of the hydrolysis of carbonate bonds in the polycarbonate resin due to the decomposition product by hydrolysis of the blended phosphate ester flame retardants.

In order to solve this problem, for example, there have been proposed a method of blending cyclic phenoxyphosphazene and polytetrafluoroethylene into a polymer alloy of polycarbonate resin and ABS resin (PTL 7), and a method of blending phosphazene, containing 98.5 mol% or more of phosphazene cyclic trimer, and polytetrafluoroethylene into a polymer alloy of polycarbonate resin and AS resin (PTL 8).

Further, for example, there have been proposed a method of blending cyclic phenoxyphosphazene and polytetrafluoroethylene into a polymer alloy of polycarbonate resin and polyethylene terephthalate resin (PTL 7), a method of blending cyclic phenoxyphosphazene into a polymer alloy of polycarbonate resin and liquid crystal polyester resin (PTL 9), a resin composition having a specific phase structure containing cyclic phenoxyphosphazene in a polymer alloy of a polycarbonate resin and a thermoplastic polyester resin (PTL 10), and a resin composition containing phosphazene containing 98.5 mol% or more of a phosphazene cyclic trimer, polytetrafluoroethylene, and an impact modifier in a polymer alloy of a polycarbonate resin and a specific polyester resin (PTL 8).

Further, for example, there have been proposed a method of blending carbon fiber with polycarbonate resin, cyclic phenoxyphosphazene, and polytetrafluoroethylene (PTL 11), a method of blending glass fiber therewith (PTL 12), a method of blending talc therewith (PTL 13), a method of blending laser direct structuring resin with glass fiber (PTL 14), a method of blending a polycarbonate-polydiorganosiloxane copolymer resin with an aromatic polycarbonate resin, phosphazene, and an inorganic filler (PTL 15), etc.

Incidentally, in recent years, polymer alloys of polycarbonate resin and ABS resin and aromatic polyester resin, and polycarbonate resin compositions of polycarbonate resin blended with inorganic fillers, due to diversified usage

environments including indoors and outdoors and increase in the utilization ratio of recycled materials through closed recycling, are required for durability of deterioration resistance even when exposed to ultraviolet rays and wind and rain, as typified by UL746C f1 rating certification.

However, the above-mentioned conventional polycarbonate/ABS (AS) resin alloy compositions, polycarbonate/polyester resin alloy compositions, and polycarbonate resin compositions containing polycarbonate/inorganic fillers exhibited insufficient suppression of decrease in the impact strength and flame retardancy after a water exposure test in UL746C f1 rating certification.

[Citation List]

[Patent Literature]

[PTL 1] JP-A-2-32154
[PTL 2] JP-A-2-115262
[PTL 3] JP-A-11-256022
[PTL 4] JP-A-2002-30209
[PTL 5] JP-A-9-278990
[PTL 6] JP-A-2015-108119
[PTL 7] JP-A-2013-1801
[PTL 8] WO 2020/066535
[PTL 9] JP-A-2000-26741
[PTL 10] JP-A-2010-24312
[PTL 11] JP-A-2015-137308
[PTL 12] WO 2020/118478
[PTL 13] WO 2020/212245
[PTL 14] JP-A-2015-108120
[PTL 15] JP-A-2015-137307

[Summary of Invention]

[Technical Problem]

In view of the above, an object of the present invention is to provide a flame-retardant polycarbonate resin composition having excellent impact strength, flame retardancy, and durability, and a molded product thereof. Another object of the present invention is preferably to provide a flame-retardant polycarbonate resin composition having excellent heat resistance and surface nature, and a molded product thereof.

[Solution to Problem]

As a result of intensive studies to solve the above problems, the present inventors have found a method for obtaining a flame-retardant polycarbonate resin composition having excellent impact strength, flame retardancy, and durability by adding phosphazene containing 98.5 mol% or more of phosphazene cyclic trimer and an anti-drip agent to a specific polycarbonate resin composition, and have completed the present invention.

According to the present invention, the above objects are achieved by the following items 1 to 20.

1. A flame-retardant polycarbonate resin composition comprising:

(A) 100 parts by weight of polycarbonate resin (component A); and with respect to (A);
(B) (B-1) 1 to 30 parts by weight of ABS resin (component B-1-1) and 1 to 10 parts by weight of methyl methacrylate-butadiene-styrene copolymer (component B-1-2), (B-2) 1 to 100 parts by weight of aromatic polyester resin (component B-2), or (B-3) 0.1 to 160 parts by weight of inorganic filler (component B-3);
(C) 1 to 45 parts by weight of phosphazene (component C) containing 98.5 mol% or more of phosphazene cyclic trimer; and
(D) 0.05 to 4 parts by weight of anti-drip agent (component D)

2. The flame-retardant polycarbonate resin composition according to item 1, wherein the resin composition contains

(A) 100 parts by weight of polycarbonate resin (component A); and with respect to (A); (B) (B-1)1 to 30 parts by weight of ABS resin (component B-1-1) and 1 to 10 parts by weight of methyl methacrylate-butadiene-styrene copolymer (component B-1-2); (C) 1 to 30 parts by weight of phosphazene (component C) containing 98.5 mol% or more of phosphazene cyclic trimer; and (D) 0.05 to 2 parts by weight of anti-drip agent (component D).

3. The flame-retardant polycarbonate resin composition according to item 1 or 2, wherein the total amount of sodium ion and potassium ion contained in the resin composition is 1 to 40 ppm.

4. The flame-retardant polycarbonate resin composition according to item 1 or 2, wherein the total amount of sodium ion and potassium ion contained in component B-1-1 and component B-1-2 in the resin composition is 0.1 to 30 ppm.

5. The flame-retardant polycarbonate resin composition according to item 1 or 2, wherein component B-1-1 is an ABS resin produced by a bulk polymerization method.

6. The flame-retardant polycarbonate resin composition according to the item 1, wherein the resin composition contains (A) 100 parts by weight of polycarbonate resin (component A); and with respect to (A); (B) (B-2) 1 to 100 parts by weight of aromatic polyester resin (component B-2); (C)1 to 30 parts by weight of phosphazene (component C) containing 98.5 mol% or more of phosphazene cyclic trimer; and (D) 0.05 to 2 parts by weight of anti-drip agent (component D).

7. The flame-retardant polycarbonate resin composition according to item 1 or 6, wherein component B-2 is at least one aromatic polyester resin selected from the group consisting of polyarylate resins and liquid crystal polyester resins.

8. The flame-retardant polycarbonate resin composition according to item 7, wherein the polyarylate resin of component B-2 is a polyarylate resin containing a polymerized unit represented by one of the following formulas (1) to (3).

[Chem. 1]

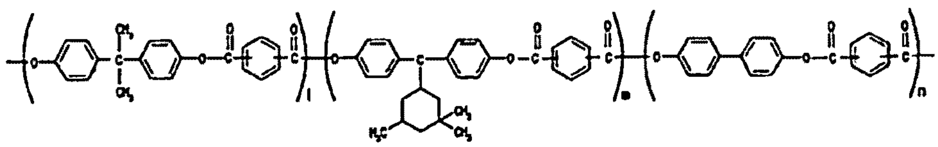

· · · (1)

(Wherein, l, m, and n are positive integers satisfying l+m+n=100, l:n=50:50 to 70:30, and (l+n):m=75:25 to 40:60. )

[Chem. 2]

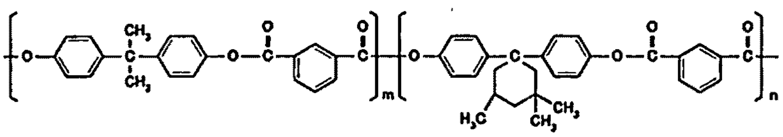

· · · (2)

(Wherein, m and n are positive integers satisfying m/n = 8/2 to 2/8.)

[Chem. 3]

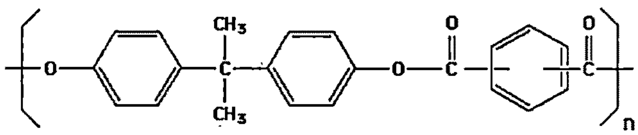

· · · (3)

(Wherein, n is a positive integer.)

9. The flame-retardant polycarbonate resin composition according to item 1 or 6, wherein the total amount of sodium ion and potassium ion contained in the resin composition is 1 to 40 ppm.

10. The flame-retardant polycarbonate resin composition according to item 1 or 6, wherein the total amount of sodium

ion and potassium ion contained in component B-2 is 0.1 to 40 ppm.

11. The flame-retardant polycarbonate resin composition according to item 1, wherein the resin composition contains (A) 100 parts by weight of polycarbonate resin (component A); and with respect to (A); (B) (B-3) 0.1 to 160 parts by weight of inorganic filler (component B-3); (C) 1 to 45 parts by weight of phosphazene (component C) containing 98.5 mol% or more of phosphazene cyclic trimer; and (D) 0.05 to 4 parts by weight of anti-drip agent (component D).

12. The flame-retardant polycarbonate resin composition according to item 1 or 11, wherein component B-3 is at least one inorganic filler selected from the group consisting of a carbon-based filler, a silicate mineral, a glass-based filler, an additive, containing at least two types of metals, for molding Laser Direct Structuring (LDS) resin, a metal oxide, and a boron-based filler.

13. The flame-retardant polycarbonate resin composition according to item 1 or 11, wherein component B-3 is at least one inorganic filler selected from the group consisting of carbon fiber, carbon black, Ketjen black, graphite, mica, talc, wollastonite, kaolin, glass fiber, glass flake, a compound containing at least two metals selected from the group consisting of chromium, tin, and antimony, titanium oxide, and boron nitride.

14. The flame-retardant polycarbonate resin composition according to item 1 or 11, further comprising, with respect to 100 parts by weight of component A, (E) as an impact modifier, 0.1 to 50 parts by weight of a rubbery polymer (component E-1) or an aromatic vinyl-(hydrogenated) conjugated diene type block copolymer (component E-2).

15. The flame-retardant polycarbonate resin composition according to item 14, wherein component E-1 is a rubbery polymer obtained by copolymerizing, in the presence of at least one rubber component selected from the group consisting of diene rubber, ethylene rubber, acrylic rubber, and silicone rubber, an acrylic monomer, an aromatic vinyl monomer, a mixture of an acrylic monomer and a monomer copolymerizable with an acrylic monomer, or a mixture of an aromatic vinyl monomer and a monomer copolymerizable with an aromatic vinyl monomer, and component E-2 is one or more aromatic vinyl-(hydrogenated) conjugated diene type block copolymer(s) selected from the group consisting of SEBS (polystyrene-poly(ethylene/butylene) block-polystyrene copolymer), SEPS (polystyrene-poly(ethylene/propylene) block-polystyrene copolymer), SEP (polystyrene-poly(ethylene/propylene) block copolymer) and SEEPS (polystyrene-poly(ethylene-ethylene/propylene) block-polystyrene copolymer).

16. The flame-retardant polycarbonate resin composition according to item 1 or 11, further comprising, with respect to 100 parts by weight of component A, (F) 0.01 to 20 parts by weight of an acid-modified polyolefin resin (component F) having a carboxyl group and/or acid anhydride group thereof.

17. The flame-retardant polycarbonate resin composition according to item 1 or 11, further comprising, with respect to 100 parts by weight of component A, (G) 0.001 to 1 part by weight of a phosphorus stabilizer (component G).

18. The flame-retardant polycarbonate resin composition according to item 1 or 11, further comprising, with respect to 100 parts by weight of component A, (H) 0.01 to 15 parts by weight of an ultraviolet absorber (component H).

19. The flame-retardant polycarbonate resin composition according to item 1, 2, 6 or 11, wherein component A contains a recycled polycarbonate resin.

20. A molded product obtained by molding the resin composition according to any one of items 1 to 19.

[Advantageous Effects of Invention]

The flame-retardant polycarbonate resin composition of the present invention satisfies impact strength, flame retardancy, and durability at high levels, and thus is widely useful for housing equipment, building materials, daily life materials, infrastructure equipment, automobiles, OA/EE, and other various fields, especially in outdoor applications where durability is required. Therefore, the present invention can have extremely large effects on the industry.

[Description of Embodiments]

The details of the present invention will be explained below.

(Component A: Polycarbonate resin)

The polycarbonate resin used in the present invention is obtained by reacting a dihydric phenol with a carbonate precursor. Examples of reaction methods include interfacial polymerization, melt transesterification, solid phase transesterification of carbonate prepolymers, and ring-opening polymerization of cyclic carbonate compounds.

Typical examples of dihydric phenols used here include hydroquinone, resorcinol, 4,4'-biphenol, 1,1-bis(4-hydroxyphenyl)ethane, 2,2-bis(4-hydroxyphenyl))propane (common name: bisphenol A), 2,2-bis(4-hydroxy-3-methylphenyl)propane, 2,2-bis(4-hydroxyphenyl)butane, 1,1-bis(4-hydroxyphenyl)-1-phenylethane, 1,1-bis(4-hydroxyphenyl) cyclohexane, 1,1-bis(4-hydroxyphenyl)-3,3,5-trimethylcyclohexane, 2,2-bis(4-hydroxyphenyl)pentane, 4,4'-(p-phenylene diisopropylidene)diphenol, 4,4'-(m-phenylene diisopropylidene)diphenol, 1,1-bis(4-hydroxyphenyl)-4-isopropylcyclohexane, bis(4-hydroxyphenyl)oxide, bis(4-hydroxyphenyl)sulfide, bis(4-hydroxyphenyl)sulfoxide, bis(4-hydroxyphenyl)sulfone, bis(4-hydroxyphenyl) ketone, bis(4-hydroxyphenyl) ester, bis(4-hydroxy-3-methylphenyl)sulfide, 9,9-bis(4-hydroxyphenyl)fluorene, and 9,9-bis(4-hydroxy-3-methylphenyl)fluorene. Preferred dihydric phenols are bis(4-hydroxyphenyl)alkanes, and among these, bisphenol A is particularly preferred from the viewpoint of impact resistance and thus is used widely.

In the present invention, in addition to bisphenol A-based polycarbonate, which is a general-purpose polycarbonate, special polycarbonates produced using other dihydric phenols can be used as component A.

For example, polycarbonate (homopolymer or copolymer) using, as part or all of the divalent phenol component, 4,4'-(m-phenylenediisopropylidene)diphenol (hereinafter may be abbreviated as "BPM"), 1,1-bis(4-hydroxyphenyl)cyclohexane, 1,1-bis(4-hydroxyphenyl)-3,3,5-trimethylcyclohexane (hereinafter may be abbreviated as "Bis-TMC"), 9,9-bis(4-hydroxyphenyl)fluorene, and 9,9-bis(4-hydroxy-3-methylphenyl)fluorene (hereinafter may be abbreviated as "BCF") is suitable for applications having severe requirements on a size change due to water absorption and form stability. These dihydric phenols other than BPA are preferably used in an amount of 5 mol% or more, particularly 10 mol% or more of the total dihydric phenol components constituting the polycarbonate.

In particular, when high rigidity and better hydrolysis resistance are required, component A constituting the resin composition is particularly preferably a copolymerized polycarbonate of the following (1) to (3).

(1) A copolymerized polycarbonate having, with respect to 100 mol% of the dihydric phenol component constituting the polycarbonate, 20 to 80 mol% of BPM (more preferably 40 to 75 mol%, further preferably 45 to 65 mol%), and 20 to 80 mol% of BCF (more preferably 25 to 60 mol%, further preferably 35 to 55 mol%).

(2) A copolymerized polycarbonate having, with respect to 100 mol% of the dihydric phenol component constituting the polycarbonate, 10 to 95 mol% of BPA (more preferably 50 to 90 mol%, further preferably 60 to 85 mol%), and 5 to 90 mol% of BCF (more preferably 10 to 50 mol%, further preferably 15 to 40 mol%).

(3) A copolymerized polycarbonate having, with respect to 100 mol% of the dihydric phenol component constituting the polycarbonate, 20 to 80 mol% of BPM (more preferably 40 to 75 mol%, further preferably 45 to 65 mol%), and 20 to 80 mol% of Bis-TMC (more preferably 25 to 60 mol%, further preferably 35 to 55 mol%).

These special polycarbonates may be used alone or in an appropriate mixture of two or more. Further, these can also be used in combination with a widely used bisphenol A type polycarbonate.

The production method and characteristics of these special polycarbonates are described in detail in, for example, JP-A-6-172508, JP-A-8-27370, JP-A-2001-55435, and JP-A-2002-117580.

Among the various polycarbonates mentioned above, those adjusted by the copolymer composition etc. to have water absorption and Tg (glass transition temperature) within the following ranges have good hydrolysis resistance of the polymer itself, and are also extremely excellent in low warpage after molding, and thus are particularly preferable for the fields requiring form stability.

(i) A polycarbonate having a water absorption of 0.05 to 0.15%, preferably 0.06 to 0.13%, and a Tg of 120 to 180°C; or
(ii) A polycarbonate having Tg of 160 to 250°C, preferably 170 to 230°C, and water absorption of 0.10 to 0.30%, preferably 0.13 to 0.30%, more preferably 0.14 to 0.27%.

Here, the water absorption of polycarbonate is obtained by measuring the moisture content of a disc-shaped test piece with a diameter of 45 mm and a thickness of 3.0 mm after immersing in water at 23°C for 24 hours in accordance with ISO62-1980. In addition, Tg (glass transition temperature) is determined by differential scanning calorimeter (DSC) measurement in accordance with JIS K7121.

Examples of carbonate precursors for use include carbonyl halides, carbonate diesters, haloformates, etc., and specific examples include phosgene, diphenyl carbonate, and dihaloformates of dihydric phenols.

When producing polycarbonate resin by interfacial polymerization of the dihydric phenol and carbonate precursor, may be used as necessary are a catalyst, a terminal terminator, an antioxidant to prevent the dihydric phenol from oxidizing, etc. The polycarbonate resin of the present invention includes a branched polycarbonate resin obtained by copolymerizing a trifunctional or higher polyfunctional aromatic compound, and a polyester carbonate resin obtained by copolymerizing an aromatic or aliphatic (including alicyclic) difunctional carboxylic acid, a copolymerized polycarbonate resin obtained by copolymerizing a difunctional alcohol (including alicyclic), and a polyester carbonate resin obtained by copolymerizing the difunctional carboxylic acid and difunctional alcohol together. Alternatively, the polycarbonate resin may include a mixture of two or more of the obtained polycarbonate resins.

The branched polycarbonate resin can impart anti-drip performance etc. to the resin composition of the present invention. Examples of trifunctional or higher polyfunctional aromatic compounds used in the branched polycarbonate resins include phloroglucin, phloroglucide; trisphenol such as 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl)ethane, 2,6-bis(2-hydroxy-5-methylbenzyl)-4-methylphenol, 4-{4-[1,1-bis(4-hydroxyphenyl)ethyl]benzene}-$\alpha$,$\alpha$-dimethylbenzylphe-

nol; tetra(4-hydroxyphenyl)methane, bis(2,4-dihydroxyphenyl)ketone, 1,4-bis(4,4-dihydroxytriphenylmethyl)benzene; trimellitic acid, pyromellitic acid, benzophenonetetracarboxylic acid, and acid chlorides thereof, among which 1,1,1-tris(4-hydroxyphenyl)ethane, 1,1,1-tris(3,5-dimethyl-4-hydroxyphenyl)ethane are preferred, and 1,1,1-tris(4-hydroxyphenyl)ethane is particularly preferred.

The structural unit derived from a polyfunctional aromatic compound in the branched polycarbonate is, with respect to 100 mole% of total amount of the structural unit derived from a dihydric phenol and the structural unit derived from the polyfunctional aromatic compound, preferably 0.01 to 1 mol%, more preferably 0.05 to 0.9 mol%, and further preferably 0.05 to 0.8 mol%.

In addition, particularly in the case of the melt transesterification method, branched structural units may be produced as a side reaction, and the amount of the branched structural units is also, with respect to 100 mol% of total of the structural units derived from dihydric phenol and the branched structural units, preferably 0.001 to 1 mol%, more preferably 0.005 to 0.9 mol%, and further preferably 0.01 to 0.8 mol%. Note that the ratio of the branched structure can be calculated from $^1$H-NMR measurement.

The aliphatic difunctional carboxylic acid is preferably $\alpha,\omega$-dicarboxylic acid. Examples of aliphatic difunctional carboxylic acids preferably include linear saturated aliphatic dicarboxylic acids such as sebacic acid (decanedioic acid), dodecanedioic acid, tetradecanedioic acid, octadecanedioic acid, and icosanedioic acid, and alicyclic dicarboxylic acids such as cyclohexanedicarboxylic acid. The difunctional alcohols are more preferably alicyclic diols, and examples thereof include cyclohexanedimethanol, cyclohexanediol, and tricyclodecane dimethanol.

The methods for producing the polycarbonate resin of the present invention are interfacial polymerization method, melt transesterification method, carbonate prepolymer solid-phase transesterification method, and ring-opening polymerization method of cyclic carbonate compounds, which reaction formats are well-known by various literatures and patent publications.

The viscosity average molecular weight (M) of the polycarbonate resin is, though not particularly limited to, is preferably $1.8\times10^4$ to $4.0\times10^4$, more preferably $2.0\times10^4$ to $3.5\times10^4$, further preferably $2.2\times10^4$ to $3.0\times10^4$. The polycarbonate resin having a viscosity average molecular weight of less than $1.8\times10^4$ may not exhibit good mechanical properties. In contrast, resin compositions obtained from polycarbonate resins having a viscosity average molecular weight of more than $4.0\times10^4$ exhibit poor fluidity during injection molding, and thus are poor in versatility.

In addition, the polycarbonate resin may be obtained by mixing those having viscosity average molecular weight outside the above range. In particular, polycarbonate resins having a viscosity average molecular weight exceeding the above range ($5\times10^4$) have the improved entropy elasticity. Therefore, good molding processability is exhibited in gas-assisted molding and foam molding, which are sometimes used when molding reinforced resin materials into structural members. This molding processability is improved even better than the above branched polycarbonate. There can also be used a more preferred embodiment: Polycarbonate resins (hereinafter may be referred to as "polycarbonate resin containing high molecular weight component") in which component A is a polycarbonate resin (component A-1-1) consisting of a polycarbonate resin (component A-1-1-1) having a viscosity average molecular weight of $7\times10^4$ to $3\times10^5$ and a polycarbonate resin (component A-1-1-2) having a viscosity average molecular weight of $1\times10^4$ to $3\times10^4$, and having a viscosity average molecular weight of $1.6\times10^4$ to $3.5\times10^4$.

In the polycarbonate resin containing high molecular weight component (component A-1-1), the molecular weight of component A-1-1-1 is preferably $7\times10^4$ to $2\times10^5$, more preferably $8\times10^4$ to $2\times10^5$, further preferably $1\times10^5$ to $2\times10^5$, and particularly preferably $1\times10^5$ to $1.6\times10^5$. The molecular weight of component A-1-1-2 is preferably $1\times10^4$ to $2.5\times10^4$, more preferably $1.1\times10^4$ to $2.4\times10^4$, further preferably $1.2\times10^4$ to $2.4\times10^4$, and particularly preferably $1.2\times10^4$ to $2.3\times10^4$.

Polycarbonate resin containing high molecular weight component (component A-1-1) can be prepared and obtained by mixing the above component A-1-1-1 and component A-1-1-2 in various ratios to be adjusted in a predetermined molecular weight range. Preferably, with respect to 100 wt% of component A-1-1, component A-1-1-1 is 2 to 40 wt%, more preferably 3 to 30 wt%, further preferably, 4 to 20 wt%, and particularly preferably 5 to 20 wt%.

In addition, methods for preparing component A-1-1 include: (1) a method of mixing the independently polymerized component A-1-1-1 and component A-1-1-2; (2) A method of producing a polycarbonate resin, using a method of producing polycarbonate resin showing multiple polymer peaks in the molecular weight distribution chart by GPC method in the same system as typified by the method shown in JP-A-5-306336, so that the polycarbonate resin satisfies the conditions of component A-1-1 of the present invention; and (3) a method of mixing the polycarbonate resin obtained by the preparing method (preparing method (2)) and separately produced component A-1-1-1 and/or component A-1-1-2.

The viscosity average molecular weight in the present invention is determined as follows: first, a specific viscosity ($\eta_{SP}$) is calculated using the following formula from a solution of 0.7 g of polycarbonate resin dissolved in 100 ml of methylene chloride at 20°C by an Ostwald viscometer,

$$\text{Specific viscosity } (\eta_{SP}) = (t-t_0) / t_0$$

[$t_0$: number of seconds for drop of methylene chloride, t: number of seconds for drop of sample solution] the viscosity average molecular weight M is calculated from the determined specific viscosity ($\eta_{SP}$) using the following formula.

$$\eta_{SP} / c = [\eta] + 0.45 \times [\eta]^2 c \text{ ([}\eta\text{]: limiting viscosity)}$$

$$[\eta] = 1.23 \times 10^{-4} M^{0.83}$$

$$c = 0.7$$

Note that the viscosity average molecular weight of the polycarbonate resin in the flame-retardant polycarbonate resin composition of the present invention is calculated in the following manner. That is, the composition is mixed with 20 to 30 times its weight of methylene chloride to dissolve the soluble content in the composition. The soluble content is collected by Celite filtration. The solvent in the resulting solution is then removed. The solvent-removed solid is sufficiently dried to obtain a solid of the components soluble in methylene chloride. The specific viscosity at 20°C is determined from a solution of 0.7 g of the solid dissolved in 100 ml of methylene chloride in the same manner as above, and the viscosity average molecular weight M is calculated from the specific viscosity in the same manner as above.

A polycarbonate-polydiorganosiloxane copolymer resin can also be used as the polycarbonate resin (component A) of the present invention. Polycarbonate-polydiorganosiloxane copolymer resin is preferably a copolymer resin of a unit derived from a dihydric phenol represented by the following general formula (4) and a unit derived from a hydroxyaryl-terminated polydiorganosiloxane represented by the following general formula (6).

[Chem. 4]

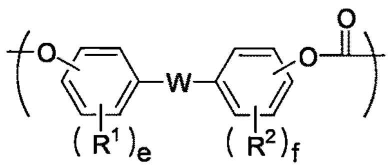

(4)

[Wherein, $R^1$ and $R^2$ each independently represent a group selected from the group consisting of a hydrogen atom, a halogen atom, an alkyl group having 1 to 18 carbon atoms, an alkoxy group having 1 to 18 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 14 carbon atoms, an aralkyl group having 7 to 20 carbon atoms, an aralkyloxy group having 7 to 20 carbon atoms, a nitro group, an aldehyde group, a cyano group, and a carboxy group, and when there is a plurality of each, they may be the same or different, e and f are each an integer of 1 to 4, and W is a single bond or at least one group selected from the groups represented by the following general formula (5).]

[Chem. 5]

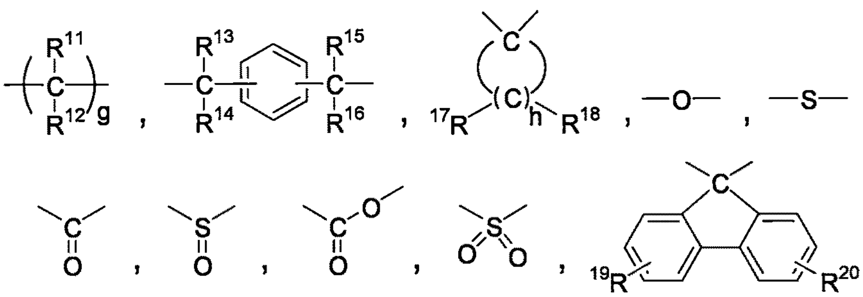

··· (5)

[Wherein, $R^{11}$, $R^{12}$, $R^{13}$, $R^{14}$, $R^{15}$, $R^{16}$, $R^{17}$ and $R^{18}$ each independently represent a group selected from the group consisting of a hydrogen atom, an alkyl group having 1 to 18 carbon atoms, a an aryl group having 6 to 14 carbon atoms and an aralkyl group having 7 to 20 carbon atoms, and $R^{19}$ and $R^{20}$ each independently represent a group selected

from the group consisting of a hydrogen atom, a halogen atom, an alkyl group having 1 to 18 carbon atoms, an alkoxy group having 1 to 10 carbon atoms, a cycloalkyl group having 6 to 20 carbon atoms, a cycloalkoxy group having 6 to 20 carbon atoms, an alkenyl group having 2 to 10 carbon atoms, an aryl group having 6 to 14 carbon atoms, an aryloxy group having 6 to 10 carbon atoms, an aralkyl group having 7 to 20 carbon atoms, an aralkyloxy group having 7 to 20 carbon atoms, a nitro group, an aldehyde group, a cyano group, and a carboxy group, and when there is a plurality of each, they may be the same or different, g is an integer of 1 to 10, and h is an integer of 4 to 7.]

[Chem. 6]

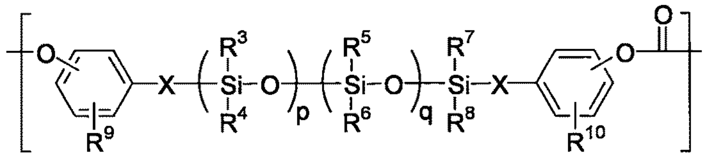

··· (6)

[Wherein, $R^3$, $R^4$, $R^5$, $R^6$, $R^7$ and $R^8$ are each independently a hydrogen atom, an alkyl group having 1 to 12 carbon atoms, an optionally substituted aryl group having 6 to 12 carbon atoms; $R^9$ and $R^{10}$ are each independently a hydrogen atom, a halogen atom, an alkyl group having 1 to 10 carbon atoms, an alkoxy group having 1 to 10 carbon atoms; and p is a natural number, q is 0 or a natural number, and p+q is a natural number of 4 or more and 150 or less. X is a divalent aliphatic group having 2 to 8 carbon atoms.]

Examples of the dihydric phenol (I) represented by the general formula (4) include 4,4'-dihydroxybiphenyl, bis(4-hydroxyphenyl)methane, 1,1-bis(4-hydroxyphenyl)ethane, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)-3,3,5-trimethylcyclohexane, 2,2-bis(4-hydroxy-3,3'-biphenyl)propane, 2,2-bis(4-hydroxy-3-isopropylphenyl)propane, 2,2-bis(3-t-butyl-4-hydroxyphenyl)propane, 2,2-bis(4-hydroxyphenyl)butane, 2,2-bis(4-hydroxyphenyl)octane, 2,2-bis(3-bromo-4-hydroxyphenyl) propane, 2,2-bis(3,5-dimethyl-4-hydroxyphenyl)propane, 2,2-bis(3-cyclohexyl-4-hydroxyphenyl)propane, 1,1-bis(3-cyclohexyl-4-hydroxyphenyl)cyclohexane, bis(4-hydroxyphenyl)diphenylmethane, 9,9-bis(4-hydroxyphenyl)fluorene, 9,9-bis(4-hydroxy -3-methylphenyl)fluorene, 1,1-bis(4-hydroxyphenyl)cyclohexane, 1,1-bis(4-hydroxyphenyl)cyclopentane, 4,4'-dihydroxydiphenyl ether, 4,4'-dihydroxy-3,3'-dimethyldiphenyl ether, 4,4'-sulfonyldiphenol, 4,4'-dihydroxydiphenyl sulfoxide, 4,4'-dihydroxydiphenyl sulfide, 2,2'-dimethyl-4,4'-sulfonyldiphenol, 4,4'-dihydroxy-3,3'-dimethyldiphenyl sulfoxide, 4,4'-dihydroxy-3,3'-dimethyldiphenyl sulfide, 2,2'-diphenyl-4,4'-sulfonyldiphenol, 4,4'-dihydroxy-3,3'-diphenyldiphenyl sulfoxide, 4,4'-dihydroxy-3,3'-diphenyldiphenyl sulfide, 1,3-bis{2-(4-hydroxyphenyl)propyl}benzene, 1,4-bis{2-(4-hydroxyphenyl)propyl}benzene, 1,4-bis(4-hydroxyphenyl)cyclohexane, 1,3-bis(4-hydroxyphenyl)cyclohexane, 4,8-bis(4-hydroxyphenyl)tricyclo[5.2.1.02,6]decane, 4,4'-(1,3-adamantanediyl)diphenol, 1,3-bis(4-hydroxyphenyl)-5,7-dimethyladamantane.

Among these, 1,1-bis(4-hydroxyphenyl)-1-phenylethane, 2,2-bis(4-hydroxyphenyl)propane, 2,2-bis(4-hydroxy-3-methylphenyl)propane, 1,1-bis(4-hydroxyphenyl)cyclohexane, 1,1-bis(4-hydroxyphenyl)-3,3,5-trimethylcyclohexane, 4,4'-sulfonyldiphenol, 2,2'-dimethyl-4,4'-sulfonyldiphenol, 9,9-bis(4-hydroxy-3-methylphenyl)fluorene, 1,3-bis{2-(4-hydroxyphenyl)propyl}benzene, 1,4-bis{2-(4-hydroxyphenyl)propyl}benzene are preferable, and particularly 2,2-bis(4-hydroxyphenyl)propane, 1,1-bis(4-hydroxyphenyl)cyclohexane (BPZ), 4,4'-sulfonyldiphenol, and 9,9-bis(4-hydroxy-3-methylphenyl)fluorene are preferable. Among these, 2,2-bis(4-hydroxyphenyl)propane which has excellent strength and good durability is most preferable. Further, these may be used alone or in combination of two or more.

As the hydroxyaryl-terminated polydiorganosiloxane represented by the above general formula (6), for example, the compounds shown below are preferably used.

[Chem. 7]

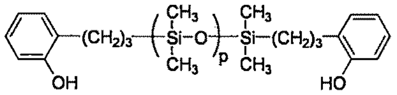
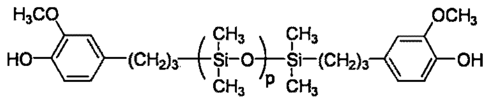
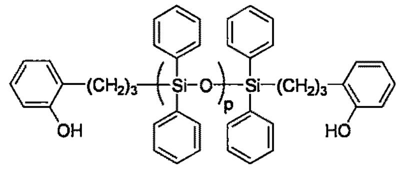
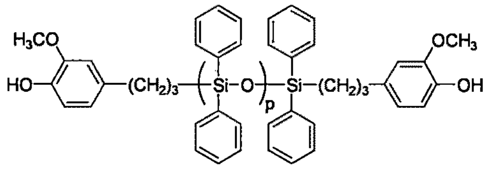
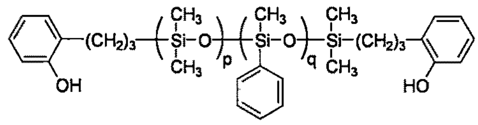
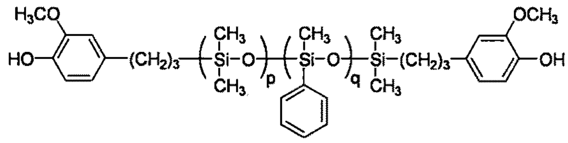
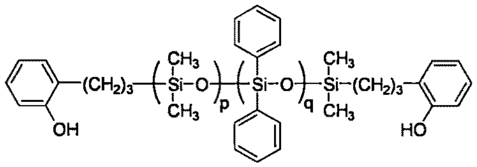
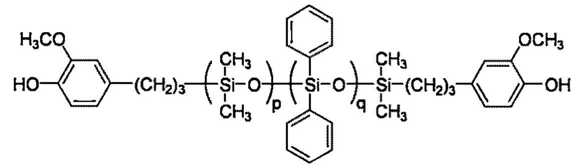

The hydroxyaryl-terminated polydiorganosiloxane (II) is easily produced by subjecting a phenol having an olefinic unsaturated carbon-carbon bond, preferably vinylphenol, 2-allylphenol, isopropenylphenol, or 2-methoxy-4-allylphenol to hydrosilylation at the end of a polysiloxane chain having a required polymerization degree. Among these, preferred are (2-allylphenol)-terminated polydiorganosiloxane and (2-methoxy-4-allylphenol)-terminated polydiorganosiloxane, particularly (2-allylphenol)-terminated polydimethylsiloxane and (2-methoxy-4-allylphenol)-terminated polydiorganosiloxane. The hydroxyaryl-terminated polydiorganosiloxane (II) preferably has a molecular weight distribution (Mw/Mn) of 3 or less. In order to exhibit further excellent low outgassing properties during high-temperature molding and low-temperature impact properties, the molecular weight distribution (Mw/Mn) is more preferably 2.5 or less, and further preferably 2 or less. Exceeding the upper limit of the above preferable range may cause a large amount of outgas generated during high-temperature molding and poor low-temperature impact properties.

Further, in order to achieve high impact resistance, the diorganosiloxane polymerization degree (p+q) of the hydroxyaryl-terminated polydiorganosiloxane (II) is suitably a natural number of 4 or more and 150 or less. The diorganosiloxane polymerization degree (p+q) is preferably 5 or more and 140 or less, more preferably 10 or more and 120 or less, and further preferably 14 or more and 100 or less. Falling short of the lower limit of the above preferable range will inhibit effective exhibition of the impact resistance, which is a characteristic of the polycarbonate-polydiorganosiloxane copolymer, and exceeding the upper limit of the preferable range will cause a poor appearance.

The polydiorganosiloxane content in the total weight of the polycarbonate-polydiorganosiloxane copolymer resin is preferably 0.05 to 20 wt%. The content of the polydiorganosiloxane component is more preferably 0.1 to 18 wt%, and further preferably 0.5 to 15 wt%. The content above the lower limit of the preferable range will impart excellent impact resistance and flame retardancy, and that below the upper limit of the preferable range allows the resin to easily obtain a stable appearance unlikely to be affected by molding conditions. The polymerization degree of polydiorganosiloxane and the content of polydiorganosiloxane can be calculated by 1H-NMR measurement.

In the present invention, there may be used only one type, or two or more types of hydroxyaryl-terminated polydiorganosiloxane (II).

In addition, comonomers other than the above dihydric phenol (I) and hydroxyaryl-terminated polydiorganosiloxane (II) may also be used together, to the extent not disturbing the present invention, in an amount of 10 wt% or less with respect to the total weight of the copolymer.

In the present invention, a mixed solution containing an oligomer having a terminal chloroformate group is prepared in advance by reacting dihydric phenol (I) with a carbonate-forming compound in a mixed solution of a water-insoluble organic solvent and an alkaline aqueous solution.

An oligomer of dihydric phenol (I) may be produced by making the entire amount of dihydric phenol (I) used in the method of the present invention into an oligomer at once, or by keeping a part thereof as a post-added monomer, which is added as a reaction raw material to the subsequent interfacial polycondensation reaction. The post-added monomer is added to speed up the subsequent polycondensation reaction, and is not necessarily added if not needed.

The method of the oligomer production reaction is, though not particularly limited, usually performed preferably in

a solvent in the presence of an acid binder.

The proportion of the carbonate ester-forming compound to be used may be appropriately adjusted in consideration of the stoichiometric ratio (equivalent) of the reaction. Further, when using a gaseous carbonate ester-forming compound such as phosgene, there can be preferably employed a method of blowing the gaseous compound into the reaction system.

Used examples of the acid binder include alkali metal hydroxides such as sodium hydroxide and potassium hydroxide, alkali metal carbonates such as sodium carbonate and potassium carbonate, organic bases such as pyridine, and mixtures thereof. The proportion of the acid binder to be used may be appropriately determined similarly to the above in consideration of the stoichiometric ratio (equivalent) of the reaction. Specifically, the acid binder is preferably used in an amount of 2 equivalents or slightly more of the number of moles of dihydric phenol (I) used to form the oligomer (usually 1 mole corresponds to 2 equivalents).

As the solvent, solvents inert to various reactions, such as those used in the production of known polycarbonates, may be used alone or as a mixed solvent. Typical examples thereof include hydrocarbon solvents such as xylene, and halogenated hydrocarbon solvents such as methylene chloride and chlorobenzene. In particular, halogenated hydrocarbon solvents such as methylene chloride are preferably used.

Although the reaction pressure for oligomer production is not particularly limited and may be normal pressure, increased pressure, or reduced pressure, the reaction is usually performed advantageously under normal pressure. The reaction temperature is selected from the range of -20 to 50°C, and the polymerization generates heat in many cases, which is desirably cooled with water or ice. Although the reaction time depends on other conditions and cannot be necessarily determined, it is usually 0.2 to 10 hours. The pH range of the oligomer production reaction is similar to those used under known interfacial reaction conditions, and the pH is always adjusted to 10 or higher.

As described above, in the present invention, a polycarbonate-polydiorganosiloxane copolymer is obtained as follows: after obtaining a mixed solution containing an oligomer of dihydric phenol (I) having a terminal chloroformate group, while stirring the mixed solution, added to dihydric phenol (I) is a hydroxyaryl-terminated polydiorganosiloxane (II) represented by general formula (7) which is highly purified to 3 or less of molecular weight distribution (Mw/Mn), and the hydroxyaryl-terminated polydiorganosiloxane (II) and the oligomer are subjected to interfacial polycondensation.

[Chem. 8]

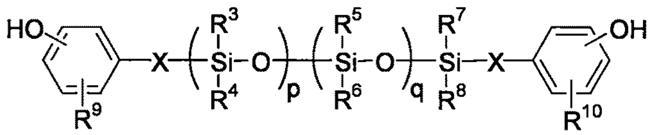

··· (7)

(Wherein, $R^3$, $R^4$, $R^5$, $R^6$, $R^7$ and $R^8$ are each independently a hydrogen atom, an alkyl group having 1 to 12 carbon atoms, or an optionally substituted aryl group having 6 to 12 carbon atoms, $R^9$ and $R^{10}$ are each independently a hydrogen atom, a halogen atom, an alkyl group having 1 to 10 carbon atoms, or an alkoxy group having 1 to 10 carbon atoms, and p is a natural number, q is 0 or a natural number, and p+q is a natural number of 4 or more and 150 or less. X is a divalent aliphatic group having 2 to 8 carbon atoms.)

When performing the interfacial polycondensation reaction, an acid binder may be added as appropriate in consideration of the stoichiometric ratio (equivalent) of the reaction. Examples of the acid binder used include alkali metal hydroxides such as sodium hydroxide and potassium hydroxide, alkali metal carbonates such as sodium carbonate and potassium carbonate, organic bases such as pyridine, and mixtures thereof. Specifically, when the hydroxyaryl-terminated polydiorganosiloxane (II) to be used or a part of the dihydric phenol (I) as a post-added monomer as described above is added to this reaction step, the alkali is used preferably in an amount of 2 equivalents or more of the total number of moles of the post-added hydric phenol (I) and the hydroxyaryl-terminated polydiorganosiloxane (II) (usually 1 mole corresponds to 2 equivalents).

Polycondensation by interfacial polycondensation reaction between the oligomer of dihydric phenol (I) and the hydroxyaryl-terminated polydiorganosiloxane (II) is performed by vigorously stirring the mixture.

In the polymerization reactions, terminal terminators or molecular weight modifiers are usually used. Examples of the terminal terminator include compounds having a monovalent phenolic hydroxyl group, including ordinary phenol, p-tertbutylphenol, p-cumylphenol, tribromophenol, etc., and long-chain alkylphenol, aliphatic carboxylic acid chloride, aliphatic carboxylic acid, hydroxybenzoic acid alkyl ester, hydroxyphenylalkyl ester, and alkyl ether phenol as well. The terminal terminator is used in an amount of 100 to 0.5 mol, preferably 50 to 2 mol, with respect to 100 mol of all the dihydric phenol compounds used, and two or more types of compounds can be naturally used together.

A catalyst such as a tertiary amine such as triethylamine or a quaternary ammonium salt may be added to accelerate the polycondensation reaction.

The reaction time of the polymerization reaction is preferably 30 minutes or more, more preferably 50 minutes or more. If desired, a small amount of an antioxidant such as sodium sulfite or hydrosulfide may be added.

A branching agent can be used in combination with the dihydric phenol compound described above to form a branched polycarbonate-polydiorganosiloxane. Examples of trifunctional or higher polyfunctional aromatic compounds used in the branched polycarbonate-polydiorganosiloxane copolymer resins include phloroglucin, phloroglucide; trisphenol such as 4,6-dimethyl-2,4,6-tris(4-hydroxydiphenyl)heptene-2, 2,4,6-trimethyl-2,4,6-tris(4-hydroxyphenyl)heptane, 1,3,5-tris(4-hydroxyphenyl)benzene, 1,1,1-tris(4-hydroxyphenyl)ethane, 1,1,1-tris(3,5-dimethyl-4-hydroxyphenyl) ethane, 2,6-bis(2-hydroxy-5-methylbenzyl)-4-methylphenol, 4-{4-[1,1-bis(4-hydroxyphenyl)ethyl]benzene}-α,α-dimethylbenzylphenol; tetra(4-hydroxyphenyl)methane, bis(2,4-dihydroxyphenyl)ketone, 1,4-bis(4,4-dihydroxytriphenylmethyl)benzene; trimellitic acid, pyromellitic acid, benzophenonetetracarboxylic acid, and acid chlorides thereof, among which 1,1,1-tris(4-hydroxyphenyl)ethane, 1,1,1-tris(3,5-dimethyl-4-hydroxyphenyl)ethane are preferred, and 1,1,1-tris(4-hydroxyphenyl)ethane is particularly preferred. The proportion of the polyfunctional compound in the branched polycarbonate-polydiorganosiloxane copolymer resin, with respect to the total amount of the polycarbonate-polydiorganosiloxane copolymer resin, is preferably 0.001 to 1 mol%, more preferably 0.005 to 0.9 mol%, further preferably 0.01 to 0.8 mol%, and particularly preferably 0.05 to 0.4 mol%. Note that the amount of branched structure can be calculated by $^1$H-NMR measurement.

Although the reaction pressure may be reduced pressure, normal pressure, or increased pressure, usually normal pressure or about the self-pressure of the reaction system can be preferably used. The reaction temperature is selected from the range of - 20 to 50°C, and the polymerization generates heat in many cases, which is desirably cooled with water or ice. Although the reaction time varies depending on other conditions such as reaction temperature and cannot be necessarily determined, it is usually 0.5 to 10 hours.

In some cases, the polycarbonate-polydiorganosiloxane copolymer resin obtained can also be subjected to appropriate physical treatment (mixing, fractionation, etc.) and/or chemical treatment (polymer reaction, crosslinking processing, partial decomposition processing, etc.) to obtain a polycarbonate-polydiorganosiloxane copolymer resin having a desired reduced viscosity [$\eta_{SP}$ /c].

The reaction product (crude product) obtained can be subjected to various posttreatments such as known separation and purification methods to recover a polycarbonate-polydiorganosiloxane copolymer resin with a desired purity (purification degree).

The average size of the polydiorganosiloxane domains in the polycarbonate-polydiorganosiloxane copolymer resin molded product is preferably 1 to 60 nm. The average size is more preferably 3 to 55 nm, and further preferably 5 to 50 nm. Falling short of the lower limit of the above preferable range will inhibit sufficient exhibition of the impact resistance and flame retardancy, and exceeding the upper limit of the preferable range will inhibit stable exhibition of the impact resistance.

The aromatic polycarbonate resin preferably contains 1 to 100 wt% of a polycarbonate-polydiorganosiloxane copolymer resin (component A-1) consisting of a polycarbonate block represented by the above formula (1) and a polydiorganosiloxane block represented by the above formula (3), and 0.05 to 20.0 wt% of the polydiorganosiloxane is contained in 100 wt% of component A-1.

Further, as the polycarbonate resin, preferably used is a polycarbonate resin containing a recycled polycarbonate resin obtained by pulverizing a recovered molded product of a polycarbonate resin composition. The recovered material is preferably recovered from used products, and preferred examples of used products include various glazing materials such as soundproof walls, automobile windows, translucent roofing materials, and automobile sunroofs; transparent members such as windshields and automobile head lamp lenses; containers such as water bottles; light guide plates; eyeglass lenses; and optical recording media. In addition, also usable here are pulverized products obtained from nonconforming products, sprues, runners, etc., or pellets obtained by melting them.

(Component B)

In the present invention, as component B, used is (B-1) ABS resin (component B-1-1) and methyl methacrylate-butadiene-styrene copolymer (component B-1-2), (B-2) aromatic polyester resin (component B-2), or (B-3) an inorganic filler (component B-3).

(Component B-1)

As component B-1, ABS resin (component B-1-1) and methyl methacrylate-butadiene-styrene copolymer (component B-1-2) are used.

(Component B-1-1: ABS resin)

The flame-retardant polycarbonate resin composition of the present invention contains ABS resin as component B-1-1. The ABS resin used in the flame-retardant polycarbonate resin composition of the present invention refers to a resin made of a thermoplastic graft copolymer obtained by graft copolymerizing a vinyl cyanide compound and an aromatic vinyl compound to a diene rubber component.

Examples of the diene rubber component used in the ABS resin include rubber components such as polybutadiene, polyisoprene, styrene-butadiene copolymer, etc., and the proportion of the diene rubber component in the ABS resin, with respect to 100 wt% of the ABS resin, is preferably 5 to 80 wt%, more preferably 7 to 50 wt%, further preferably 8 to 25 wt%, particularly preferably 9 to 18 wt%.

Examples of aromatic vinyl compounds in ABS resin include styrene, α-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, and tribromostyrene, and particularly preferably styrene.

Examples of vinyl cyanide compounds in ABS resins include acrylonitrile and methacrylonitrile, and particularly preferably acrylonitrile.

Regarding to the amount of vinyl cyanide compound and aromatic vinyl compound, with respect to 100 wt% of the total amount of both, vinyl cyanide compound is preferably 5 to 50 wt%, and more preferably 15 to 35 wt%, and aromatic vinyl compound is preferably 50 to 95 wt%, and more preferably 65 to 85 wt%.

Further, other vinyl monomers copolymerizable with them may be copolymerized, and examples of other copolymerizable vinyl monomers in this case include maleimide monomers such as maleimide, N-methylmaleimide, N-cyclohexylmaleimide, N-phenylmaleimide, acrylamide monomers such as acrylamide and N-methylacrylamide, unsaturated acid anhydrides such as maleic anhydride and itaconic anhydride, unsaturated acids such as acrylic acid and methacrylic acid, glycidyl acrylate, glycidyl methacrylate, 2-hydroxyethyl acrylate, 2-hydroxyethyl methacrylate, and methoxypolyethylene glycol methacrylate.

Preferred examples of the ABS resin include acrylonitrile-butadiene-styrene copolymer, acrylonitrile-butadiene-styrene-α-methylstyrene copolymer, and acrylonitrile-butadiene-styrene-N-phenylmaleimide copolymer.

There can be used the above ABS resins which are produced by any method such as bulk polymerization, solution polymerization, suspension polymerization, or emulsion polymerization, and preferable are those having a low content of sodium ions and potassium ions. The ABS resins are more preferably produced by bulk polymerization. The ABS resins produced by bulk polymerization method have particularly low contents of sodium ion and potassium ion, and by using them as component B, advantages such as particularly good thermal stability and hydrolysis resistance can be obtained, and the decrease is suppressed in impact strength and flame retardancy after a water exposure test in UL746C f1 rating certification. In addition, the method of copolymerization may be performed with one-stage or multiple-stage copolymerization.

The content of component B-1-1 is preferably 1 to 30 parts by weight, more preferably 3 to 25 parts by weight, and further preferably 5 to 20 parts by weight, with respect to 100 parts by weight of component A. The content of component B-1-1 less than 1 part by weight does not suppress decrease in impact strength after a water exposure test in UL746C f1 rating certification, and that exceeding 30 parts by weight decreases flame retardancy.

(Component B-1-2: Methyl methacrylate-butadiene-styrene copolymer)

The flame-retardant polycarbonate resin composition of the present invention contains a methyl methacrylate-butadiene-styrene copolymer as component B-1-2. The above copolymer is a graft polymer obtained by graft polymerizing methyl methacrylate and styrene to butadiene rubber, and is more preferably a graft polymer having a core-shell structure. In the core-shell graft polymer, the core has weight average particle size of preferably 240 to 300 nm, more preferably 250 to 290 nm, and further preferably 260 to 280 nm. Better impact strength may be achieved in the range of 240 to 300 nm. Further, the particle size distribution is preferably a bi-dispersed type with two peaks, and particularly preferably a bi-dispersed type with two peaks near 100 nm and 300 nm, which may achieve better impact strength than a mono-dispersed type with a single peak.

Methyl methacrylate is contained, with respect to 100 wt% of the graft component (100 wt% of the shell in the case of a core-shell type polymer), preferably 10 wt% or more, and more preferably 15 wt% or more. The elastic polymer containing a rubber component with a glass transition temperature of 10°C or less may be produced by any polymerization method of bulk polymerization, solution polymerization, suspension polymerization, and emulsion polymerization, and the copolymerization method may be a single-stage graft or a multiple-stage graft. In addition, it may be a mixture with a copolymer of only a graft component by-produced during production. Further, examples of the polymerization method include, in addition to the general emulsion polymerization method, a soap-free polymerization method using an initiator such as potassium persulfate, a seed polymerization method, and a two-step swelling polymerization method. In addition, in the suspension polymerization method, the following control may be performed: the aqueous phase and the monomer

phase are held separately and both are accurately supplied to a continuous dispersion machine, and the particle size is controlled by the rotation speed of the dispersion machine; and in the continuous production method, the monomer phase is supplied by passing through a small orifice with a diameter of several to several tens of μm or porous filter into an aqueous liquid having dispersibility to control the particle size. In the case of a core-shell type graft polymer, the reaction may be performed in one-stage or in multiple-stage for both core and shell.

Although the above polymers are commercially available and can be easily obtained, the smaller the total amount of sodium ion and potassium ion contained in the polymer, advantageously the better the thermal stability and hydrolysis resistance, which suppresses decrease in impact strength and flame retardancy after a water exposure test in UL746C f1 rating certification.

The content of component B-1-2 is preferably 1 to 10 parts by weight, more preferably 1.5 to 7 parts by weight, and further preferably 2 to 6 parts by weight with respect to 100 parts by weight of component A. The content of component B-1-2 less than 1 part by weight does not suppress decrease in impact strength after a water exposure test in UL746C f1 rating certification, and that exceeding 10 parts by weight decreases flame retardancy.

(Component B-2: Aromatic polyester resin)

The flame-retardant polycarbonate resin composition of the present invention contains an aromatic polyester resin as component B-2. The aromatic polyester resin used in the flame-retardant polycarbonate resin composition of the present invention, though not particularly limited, is particularly preferably a polyarylate resins or liquid crystal polyester resin.

The polyarylate resin preferably used as component B-2 of the present invention is a polyester composed of dihydric phenol residues and aromatic dicarboxylic acid residues.

The compound for introducing dihydric phenol residues may be any organic compound containing two phenolic hydroxyl groups in one molecule. A phenolic hydroxyl group refers to a hydroxyl group directly attached to an aromatic ring. Specific examples of raw materials for introducing dihydric phenol residues include 2,2-bis(4-hydroxyphenyl)propane, bis(4-hydroxyphenyl)methane, 1,1-bis(4-hydroxyphenyl)ethane, 2,2-bis(4-hydroxyphenyl)butane, 2,2-bis(4-hydroxyphenyl)-4-methylpentane, 2,2-bis(4-hydroxy-3,5-dimethylphenyl)propane, 2,2-bis(4-hydroxy-3-methylphenyl)propane, 2,2-bis(4-hydroxy-3-isopropylphenyl)propane, 5,5'-(1-methylethylidene)-bis[1,1'-(bisphenyl)-2-ol]propane, butylidene bis(methyl-butylphenol), 2,2-bis(4-hydroxy-3,5-dibromophenyl)propane, 2,2-bis(4-hydroxy-3,5-dichlorophenyl)propane, 2,2-bis(4-hydroxyphenyl)hexafluoropropane, bis(4-hydroxyphenyl)phenylmethane, 1,1-bis(4-hydroxyphenyl)-1-phenylethane, 1,1-bis(4-hydroxyphenyl)-1-phenylpropane, 1,1-bis(4-hydroxyphenyl)-1-phenylbutane, 1,1-bis(4-hydroxy-3-methylphenyl)-1-phenylethane, 1,1-bis(4-hydroxy-3,5-dimethylphenyl)-1-phenylethane, 1,1-bis(4-hydroxyphenyl)-(4-t-butylphenyl)methane, 1,1-bis(4-hydroxy-3, 5-dibromophenyl)-1-phenylethane, 1,1-bis(4-hydroxy-3 -phenylphenyl)-1 - phenylethane, bis(4-hydroxyphenyl)diphenylmethane, 3,3-bis(4-hydroxyphenyl)phthalimidine, N-phenyl-3,3-bis(4-hydroxyphenyl)phthalimidine, N-methyl-3,3-bis(4-hydroxyphenyl)phthalimidine, N-ethyl-3,3-bis(4-hydroxyphenyl)phthalimidine, 9,9-bis(4-hydroxyphenyl)fluorene, 9,9-bis(4-hydroxy-3-methylphenyl)fluorene, 9,9-bis(4-hydroxy-3,5-dimethylphenyl)fluorene, 9,9-bis(4-hydroxy-3-phenylphenyl)fluorene, 1,1-bis(4-hydroxyphenyl)cyclopentane, 1,1-bis(3,5-dimethyl-4-hydroxyphenyl)cyclopentane, 1,1-bis(3-methyl-4-hydroxyphenyl)cyclopentane, 1,1-bis(4-hydroxyphenyl)cyclohexane, 1,1-bis(3,5-dimethyl-4-hydroxyphenyl)cyclohexane, 1,1-bis(3-methyl-4-hydroxyphenyl)cyclohexane, 1,1-bis(4-hydroxyphenyl)-3,3,5-trimethylcyclohexane, 1,1-bis-(4-hydroxyphenyl)-3,3,5,5-tetramethyl-cyclohexane, 1,1-bis-(4-hydroxyphenyl)-3,3,4-trimethyl-cyclohexane, 1,1-bis-(4-hydroxyphenyl)-3,3-dimethyl-5-ethyl-cyclohexane, 1,1-bis-(3,5-dimethyl-4-hydroxyphenyl)-3,3,5-trimethyl-cyclohexane, 1,1-bis-(3,5-diphenyl-4-hydroxyphenyl)-3,3,5-trimethyl-cyclohexane, 1,1-bis-(3-methyl-4-hydroxyphenyl)-3,3,5-trimethyl-cyclohexane, 1,1-bis-(3-phenyl-4-hydroxyphenyl)-3,3,5-trimethyl-cyclohexane, 1,1-bis-(3,5-dichloro-4-hydroxyphenyl)-3,3,5-trimethylcyclohexane, 1,1-bis-(3,5-dibromo-4-hydroxyphenyl)-3,3,5-trimethyl-cyclohexane , 1,1-bis(4-hydroxyphenyl)-cycloheptane, 1,1-bis(4-hydroxyphenyl)-cyclooctane, 1,1-bis(4-hydroxyphenyl)-cyclononane, 1,1-bis(4-hydroxyphenyl)-cyclodecane, 1,1-bis(4-hydroxyphenyl)-cycloundecane, 1,1-bis(4-hydroxyphenyl)-cyclododecane, 1,1-bis(4-hydroxyphenyl)-cyclotridecane, 1,4-dihydroxybenzene, 3-t-butyl-1,4-dihydroxybenzene, 1,3-dihydroxybenzene, 3,5-di-t-2,6-dihydroxybenzene, 1,2-dihydroxybenzene, 4-t-butylcatechol, 4,4'-dihydroxybiphenyl, 4,4'-dihydroxy-3,3',5,5'-tetramethylbiphenyl, 4,4'-dihydroxydiphenylmethane, 4,4-dihydroxy-biphenyl, bis(4-hydroxyphenyl)methane, 2,2-bis(4-hydroxy-3,5-dimethylphenyl)propane, 2,2-bis(4-hydroxy-3,5-dibromophenyl)propane, bis(4-hydroxyphenyl) sulfone, bis(4-hydroxyphenyl) sulfide, 4,4'-dihydroxydiphenyl sulfone, 4,4'-dihydroxydiphenyl ether, 4,4'-dihydroxydiphenyl sulfide, bis(4-hydroxyphenyl) ether, 1,3-bis(2-(4-hydroxyphenyl)-2-propyl)benzene, 1,4-bis(2-(4-hydroxyphenyl)-2-propyl)benzene. These compounds may be used alone or in combination.

Among these, 2,2-bis(4-hydroxyphenyl)propane is preferably contained from the viewpoint of economic efficiency and mechanical properties of the polyarylate resin obtained.

The compound for introducing aromatic dicarboxylic acid residue may be any organic compound containing two carboxyl groups directly bonded to an aromatic ring in one molecule. Specific examples of raw materials for introducing

aromatic dicarboxylic acid residues include terephthalic acid, isophthalic acid, orthophthalic acid, 4,4'-diphenyldicarboxylic acid, diphenyl ether-2,2'-dicarboxylic acid, diphenyl ether-2,3'-dicarboxylic acid, diphenyl ether-2,4'-dicarboxylic acid, diphenyl ether-3,3'-dicarboxylic acid, diphenyl ether-3,4'-dicarboxylic acid, diphenyl ether-4,4'-dicarboxylic acid, 2,6-naphthalene dicarboxylic acid. These compounds may be used alone or in combination.

The polyarylate resin is preferably produced using terephthalic acid and isophthalic acid together from the viewpoint of melt processing characteristics and mechanical properties. Although terephthalic acid and isophthalic acid can be blended at any ratio, the molar ratio is, from the viewpoint of polymerizability, melt processing characteristics, and mechanical properties, preferably 10/90 to 90/10, more preferably 20/80 to 80/20, and further preferably 30/70 to 70/30.

The polyarylate resin of the present invention may contain in a range that does not impair the effect of the present invention, in addition to dihydric phenol residue and aromatic dicarboxylic acid residue, residues of other components such as aliphatic diol, alicyclic diol, aliphatic dicarboxylic acid, alicyclic dicarboxylic acid. Examples of the aliphatic diol include ethylene glycol and propylene glycol. Examples of the alicyclic diol include 1,4-cyclohexanediol, 1,3-cyclohexanediol, and 1,2-cyclohexanediol. Examples of the aliphatic dicarboxylic acid include adipic acid and sebacic acid. Examples of the alicyclic dicarboxylic acid include 1,4-cyclohexanedicarboxylic acid, 1,3-cyclohexanedicarboxylic acid, and 1,2-cyclohexanedicarboxylic acid. The content of residues of other components is preferably less than 10 mol%, and more preferably substantially free, with respect to the total number of moles of raw material monomers.

The method for producing polyarylate resin is not particularly limited, and those obtained by known methods such as interfacial polymerization, melt polymerization, and solution polymerization can be used. Among these, polyarylate resins obtained by interfacial polymerization are preferred from the viewpoint of color tone and molecular weight control.

In the present invention, two or more types of polyarylate resins may be used in combination as the polyarylate resin.

The inherent viscosity of the polyarylate resin is preferably 0.4 to 0.8, and more preferably 0.4 to 0.7, from the viewpoint of heat resistance, mechanical properties, and fluidity. Inherent viscosity can be determined using 1,1,2,2-tetrachloroethane as a solvent, by a measurement using an Ubbelohde viscometer at a temperature of 25°C.

The polyarylate resin preferably used as component B-2 of the present invention is preferably a copolymer containing a polymerized unit represented by any of the following formulas (1) to (3). Use of polyarylate resin not containing this structure may reduce the impact resistance properties.

[Chem. 9]

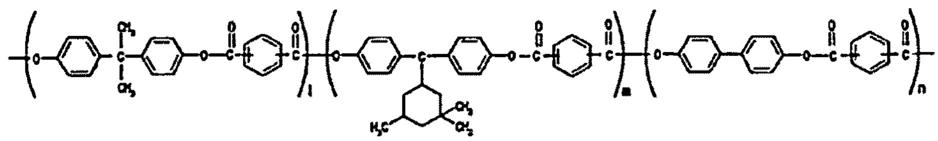

· · · (1)

[Wherein, l, m, and n are positive integers satisfying l+m+n=100, l:n=50:50 to 70:30, and (l+n):m=75:25 to 40:60.]

[Chem. 10]

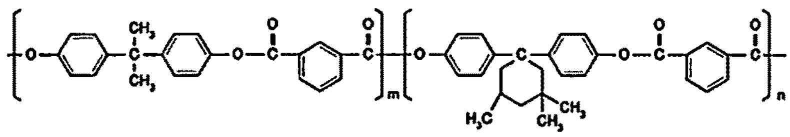

· · · (2)

[Wherein, m and n are positive integers, and m/n=8/2 to 2/8.]

[Chem. 11]

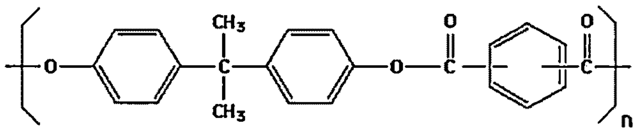

· · · (3)

[Wherein, n is a positive integer.]

Examples of commercially available polyarylate resin products include those manufactured by UNITIKA LTD. such as "U-100" (trade name), "M-2040" (trade name), "M-2040H" (trade name), "T-240AF" (trade name), "T-1000" (trade name), and "T-200" (trade name).

The liquid crystal polyester resin preferably used as component B in the present invention is preferably a thermotropic liquid crystal polyester resin and has properties that polymer molecular chains are aligned unidirectionally in a molten state. The phase of such an alignment state may be any of nematic phase, smectic phase, cholesteric phase, and discotic phase, and may exhibit two or more phases. Further, although the structure of the liquid crystal polyester resin may be any of the main chain type, side chain type, and stiff-main chain flexible-side chain type, the main chain type liquid crystal polyester resin is preferable.

The phase of the above alignment state, that is, the property of the anisotropic molten phase, can be confirmed by a conventional polarization inspection method using orthogonal polarizers. More specifically, the anisotropic molten phase can be confirmed by observing a molten sample placed on a Leitz hot stage using a Leitz polarization microscope at magnification of 40 times under a nitrogen atmosphere. When examined between orthogonal polarizers, the polymers of the present invention transmit polarized light even in the molten static state, and exhibit optical anisotropy.

Further, although the liquid crystal polyester resin may have heat resistance in any range, preferable are those which melt near a range close to the processing temperature of the polycarbonate resin and forms the liquid crystal phase. In this respect, the liquid crystal polyester resin has a deflection temperature under load of preferably 150 to 280°C and more preferably 180 to 250°C. The above liquid crystal polyester resin belongs to the so-called heat-resistant class II type. The above heat resistance allows the resin to exhibit higher moldability compared with Type I having higher heat resistance, and to achieve better flame retardancy compared with Type III having lower heat resistance.

The liquid crystal polyester resin preferably used as component B-2 of the present invention preferably contains a polyester unit and a polyester amide unit, which are preferably an aromatic polyester resin and an aromatic polyester amide resin, and another preferable example of a liquid crystal polyester resin contains partially an aromatic polyester unit and an aromatic polyester amide unit in the same molecular chain.

Particularly preferable are wholly aromatic polyester resins and wholly aromatic polyester amide resins having unit constituents derived from one or more compounds selected from the group consisting of aromatic hydroxycarboxylic acid, aromatic hydroxyamine, and aromatic diamine. More specifically, examples thereof include 1) a liquid crystal polyester resin synthesized mainly from one or more compounds selected from the group consisting of aromatic hydroxycarboxylic acids and derivatives thereof, 2) a liquid crystal polyester resin synthesized mainly from a) one or more compounds selected from the group consisting of aromatic hydroxycarboxylic acids and derivatives thereof; b) one or more compounds selected from the group consisting of aromatic dicarboxylic acids, alicyclic dicarboxylic acids and derivatives thereof; and c) one or more compounds selected from the group consisting of aromatic diols, alicyclic diols, aliphatic diols and their derivatives, 3) a liquid crystalline polyesteramide resin synthesized mainly from a) one or more compounds selected from the group consisting of aromatic hydroxycarboxylic acids and derivatives thereof; b) one or more compounds selected from the group consisting of aromatic hydroxyamines, aromatic diamines and derivatives thereof; and c) one or more compounds selected from the group consisting of aromatic dicarboxylic acids, alicyclic dicarboxylic acids and derivatives thereof, 4) a liquid crystal polyester amide resin synthesized mainly from the group consisting of a) one or more compounds selected from the group consisting of aromatic hydroxycarboxylic acids and derivatives thereof; b) one or more compounds selected from the group consisting of aromatic hydroxyamines, aromatic diamines and derivatives thereof; c) one or more compounds selected from aromatic dicarboxylic acids, alicyclic dicarboxylic acids and derivatives thereof; and d) one or more compounds selected from the group consisting of aromatic diols, alicyclic diols, aliphatic diols and derivatives thereof, and preferred is 1) a liquid crystal polyester resin synthesized mainly from one or more compounds selected from the group consisting of aromatic hydroxycarboxylic acids and derivatives thereof.

Further, a molecular weight regulator may be used in combination with the above-mentioned constituents, if necessary.

Preferred specific examples of the compound used in the synthesis of the liquid crystal polyester resin preferably used as component B-2 of the present invention are naphthalene compounds such as 2,6-naphthalene dicarboxylic acid, 2,6-dihydroxynaphthalene, 1,4-dihydroxynaphthalene, and 6-hydroxy-2-naphthoic acid, biphenyl compounds such as 4,4'-diphenyldicarboxylic acid and 4,4'-dihydroxybiphenyl, para-substituted benzene compounds such as p-hydroxybenzoic acid, terephthalic acid, hydroquinone, p-aminophenol, and p-phenylenediamine and nuclear substituted benzene compounds thereof (substituents are selected from chlorine, bromine, methyl, phenyl, and 1-phenylethyl), meta-substituted benzene compounds such as isophthalic acid, resorcinol, and compounds represented by the following formula (8), (9) or (10). Among these, p-hydroxybenzoic acid and 6-hydroxy-2-naphthoic acid are particularly preferred, and preferred is a liquid crystalline polyester resin obtained by mixing both. Regarding to the ratio of the two with respect to the total, the former is preferably 90 to 50 mol%, more preferably 80 to 65 mol%, and, that is, the latter is preferably 10 to 50 mol%, more preferably 20 to 35 mol%.

[Chem. 12]

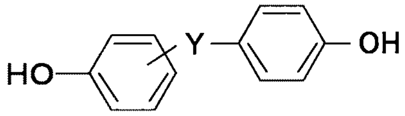
(8)

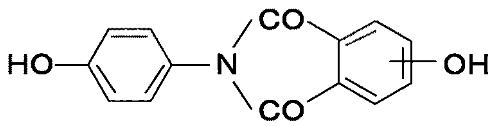
(9)

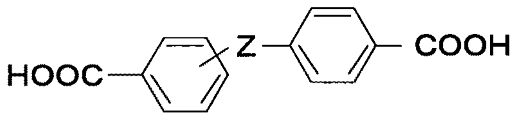
(10)

(Wherein, Y is a group selected from the group consisting of an alkylene group and an alkylidene group having 1 to 4 carbon atoms, -O-, -SO-, $-SO_2-$, -S-, and -CO-, and Z is a group selected from the group consisting of $-(CH_2)_n-$ (n = 1 to 4), and $-O(CH_2)_nO-$ (n = 1 to 4).)

Further, the liquid crystal polyester resin preferably used as component B-2 of the present invention may allow, in addition to the above-mentioned constituents, polyalkylene terephthalate-derived units that do not exhibit an anisotropic molten phase to partially exist in the same molecular chain. In this case, the alkylene group has 2 to 4 carbon atoms.

Although the production method of the aromatic polyester resin, component B-2 of the present invention, is not particularly limited, and those obtained by known methods such as interfacial polymerization, melt polymerization, and solution polymerization can also be used, and the aromatic polyester resins preferably have a low content of sodium ion and potassium ion. By using the above aromatic polyester resin as component B, advantages such as particularly good thermal stability and hydrolysis resistance can be obtained, and a decrease is suppressed in impact strength after a water exposure test in UL746C f1 rating certification and flame retardancy. In addition, the method of copolymerization may be performed with one-stage or multiple-stage copolymerization.

The content of component B-2 is preferably 1 to 100 parts by weight, more preferably 3 to 80 parts by weight, further preferably 5 to 60 parts by weight, with respect to 100 parts by weight of component A. The content of component B-2 less than the lower limit will cause insufficient heat resistance, and that exceeding the upper limit will decrease the impact resistance after a water exposure test in UL746C f1 rating certification and flame retardancy.

(Component B-3: Inorganic filler)

The flame-retardant polycarbonate resin composition of the present invention may contain various inorganic fillers within the range that enables exhibition of the effects of the present invention. Examples thereof include silicate minerals, calcium carbonate, glass fibers, glass beads, glass balloons, glass milled fibers, glass flakes, carbon fibers, carbon flakes, carbon beads, carbon milled fibers, graphite, CVD ultrafine carbon fibers (fiber diameter: less than 0.1 μm),

carbon nanotubes (fiber diameter: less than 0.1 μm, hollow), fullerene, metal flakes, metal fibers, metal coated glass fibers, metal coated carbon fibers, metal coated glass flakes, silica, metal oxide particles, metal oxide fibers, metal oxide balloons, and various whiskers (potassium titanate whiskers, aluminum borate whiskers, basic magnesium sulfate, etc.). These inorganic fillers may be contained alone or in combination of two or more.

Although conventionally known fillers can be used in the present invention, preferably used are at least one filler selected from carbon-based fillers, silicate minerals, glass-based fillers, an additive, containing at least two types of metals, for molding Laser Direct Structuring (LDS) resin, metal oxides, and boron-based fillers.

(B-3-1: Carbon-based filler)

Examples of the fibrous carbon-based filler preferably used in the present invention include carbon fibers, metal-coated carbon fibers, carbon milled fibers, CVD carbon fibers, and carbon nanotubes. Carbon nanotubes have a fiber diameter of 0.003 to 0.1 μm and may be single-walled, double-walled, or multi-walled, and are preferably multi-walled (so-called MWCNT). Among these, carbon fibers and metal-coated carbon fibers are preferred because they have excellent mechanical strength and good electrical conductivity can be imparted thereto. Note that good conductivity has become one of the important properties required of resin materials in recent digital precision devices (typical example: digital still camera).

Any type of carbon fiber can be used such as cellulose-based, polyacrylonitrile-based, and pitch-based. In addition, can be used are those obtained by a method of spinning without infusibilizing step, such as a method of subjecting the raw material composition consisting of a polymer by methylene-type bonds of aromatic sulfonic acids or salts thereof and a solvent to spinning or molding and then carbonizing. Further, any of a general-purpose type, a medium elastic modulus type, and a high elastic modulus type can be used. Among these, a polyacrylonitrile-based high elastic modulus type is particularly preferred.

Further, the average fiber diameter of the carbon fibers is, though not particularly limited, is usually 3 to 15 μm and preferably 5 to 13 μm. Carbon fibers having an average fiber diameter within the above range can exhibit good mechanical strength and fatigue properties without impairing the appearance of the molded product. Further, the preferable fiber length of the carbon fiber is a number average fiber length in the reinforced aromatic polycarbonate resin composition, and is 60 to 500 μm, preferably 80 to 400 μm, and particularly preferably 100 to 300 μm. Note that the number average fiber length is obtained from the carbon fiber residue collected in the treatments of molded products such as high-temperature ashing, dissolution with solvents, and decomposition with chemicals, by calculation using an image analysis device through observation using an optical microscope. In addition, calculation of the above value is performed by a method of omitting fibers with diameters shorter than a certain length. The aspect ratio of carbon fibers is preferably 10 to 200, more preferably 15 to 100, and further preferably 20 to 50. The aspect ratio of the fibrous carbon filler refers to the value obtained by dividing the average fiber length by the average fiber diameter.

Further, the surface of the carbon fiber is preferably oxidized for the purpose of increasing adhesion with the matrix resin and improving mechanical strength. Although the oxidation treatment method is not particularly limited, preferred examples thereof include (1) a method of treating a fibrous carbon filler with an acid or alkali or a salt thereof, or an oxidizing gas; (2) a method of burning fiber convertible to a fibrous carbon filler or a fibrous carbon filler at a temperature of 700°C or higher in the presence of an inert gas containing an oxygen-containing compound; and (3) a method of oxidizing a fibrous carbon filler and then heat-treating in the presence of an inert gas.

Metal-coated carbon fiber is carbon fiber coated with a metal layer on the surface. Examples of the metal include silver, copper, nickel, and aluminum, and nickel is preferred from the viewpoint of corrosion resistance of the metal layer. As the metal coating method, the plating method is preferably used. In addition, in the case of the above metal-coated carbon fibers, the carbon fibers listed above can be used as the base carbon fibers. The thickness of the metal coating layer is preferably 0.1 to 1 μm, and more preferably 0.15 to 0.5 μm. Further preferably, it is 0.2 to 0.35 μm.

The above carbon fibers and metal-coated carbon fibers are preferably those subjected to sizing treatment with olefin resin, styrene resin, acrylic resin, polyester resin, epoxy resin, urethane resin, etc. In particular, fibrous carbon fillers treated with urethane resins or epoxy resins have excellent mechanical strength and thus are preferable for the present invention.

Examples of the non-fibrous carbon filler preferably used in the present invention include carbon black, graphite, and fullerene. Among these, carbon black and graphite are preferred from the viewpoint of mechanical strength, moist heat resistance, and thermal stability. Carbon black preferably has a DBP oil absorption of 100 ml/100 g to 500 ml/100 g from the viewpoint of electrical conductivity. The above carbon black is generally acetylene black or Ketjen black. Specific examples thereof include Denka Black manufactured by Denka K.K., Vulcan XC-72 and BP-2000 manufactured by Cabot Corp., and Ketjen black EC and Ketjen Black EC-600JD manufactured by Lion Corp.

As the graphite, either natural graphite, whose mineral name is graphite, or various types of artificial graphite can be used. As the natural graphite, any of earthy graphite, vein graphite (also called lump graphite), and flake graphite can be used. Artificial graphite is made by heat-treating amorphous carbon to artificially orient micro-graphite crystals toward

irregular alignment, and includes, in addition to artificial graphite used in general carbon materials, kish graphite, decomposed graphite, and pyrolytic graphite. Artificial graphite used as a general carbon material is usually manufactured by graphitizing petroleum coke and coal-based pitch coke as a main raw material.

The graphite may include expanded graphite made thermally expandable by treatment such as acid treatment, or expanded graphite that is subjected to the expansion treatment. The particle size of the graphite of the present invention is preferably 2 to 300 μm. The above particle size is more preferably 5 to 200 μm, further preferably 7 to 100 μm, and particularly preferably 7 to 50 μm. Satisfying the above range allows achievement of good mechanical strength and molded product appearance. In contrast, the average particle size less than 2 μm will reduce the effect of improving rigidity, and the average particle size exceeding 300 μm will significantly lower the impact resistance, and so-called graphite floating will become noticeable on the surface of the molded product, which is not preferable.

The amount of fixed carbon in graphite is preferably 80 wt% or more, more preferably 90 wt% or more, and further preferably 98 wt% or more. Further, the volatile matter content of the graphite of the present invention is preferably 3 wt% or less, more preferably 1.5 wt% or less, and further preferably 1 wt% or less.

The average particle size of graphite refers to the particle size of the C component itself before becoming a resin composition, and the particle size is determined by a laser diffraction/scattering method.

In addition, the surface of graphite may have been subjected to surface treatments such as epoxy treatment, urethane treatment, silane coupling treatment, and oxidation treatment in order to increase its affinity with thermoplastic resins as long as the properties of the composition of the present invention are not impaired.

Although any of the above carbon-based fillers can be used, the sodium ion content of carbon-based filler is more preferably low. The content of sodium ions is preferably 0.01 to 500 ppm, more preferably 0.1 to 400 ppm, further preferably 0.2 to 350 ppm, still further preferably 0.3 to 300 ppm, and particularly preferably 0.3 to 280 ppm. By using a carbon-based filler with a particularly low content of sodium ions as component B-1, advantages such as particularly good thermal stability and hydrolysis resistance can be obtained, and decrease can be suppressed in impact strength after a water exposure test in UL746C f1 rating certification and flame retardancy.

The amount of sodium ion is determined by elemental analysis using ICP-AES analysis. Incidentally, elemental analysis by ICP-AES analysis is performed by the following method. That is, after thermally decomposing the sample with sulfuric acid and nitric acid, the test liquid is prepared by adding ultrapure water to a constant volume, and the elements in the test liquid are analyzed qualitatively and quantitatively using ICP-AES (Model SPS5100 manufactured by SII Nanotechnology).

(B-3-2: Silicate mineral)

The silicate mineral used as component B-3-2 of the present invention is a mineral consisting of at least a metal oxide component and $SiO_2$ component, and preferred are orthosilicates, disilicates, cyclic silicates, chain silicates, etc. The silicate mineral of component B-3-2 is in a crystalline state, and the crystals can take various shapes such as fibrous and sheet.

The silicate mineral of component B-3-2 may be any compound such as a complex oxide, an oxyate (consisting of an ionic lattice), or a solid solution; further, the complex oxide may be any of a combination of two or more of single oxides, and a combination of two or more of single oxides and an oxyates; and further solid solution may be any of a solid solution of two or more metal oxides and a solid solution of two or more oxyates.

The silicate mineral of component B-3-2 may be a hydrate. The forms of crystal water in hydrates can be any form of those contained as hydrogen silicate ions as Si-OH, those contained ionically as hydroxide ions (OH-) to metal cations, and those contained as $H_2O$ molecules in the gaps of the structure.

As the silicate mineral of component B-3-2, an artificially synthesized product corresponding to a natural product can also be used. The artificial compound of silicate minerals obtained by various conventionally known methods can be used, such as various synthetic methods using solid state reactions, hydrothermal reactions, ultra-high pressure reactions, etc.

Specific examples of silicate minerals in each metal oxide component (MO) include the following. Here, the description in parentheses is the name of a mineral having main component of the above silicate mineral.

Examples of those containing $K_2O$ as a component include $K_2O{\cdot}SiO_2$, $K_2O{\cdot}4SiO_2{\cdot}H_2O$, $K_2O{\cdot}Al_2O_3{\cdot}2SiO_2$ (kalcilite), $K_2O{\cdot}Al_2O_3{\cdot}4SiO_2$ (leucite), and $K_2O{\cdot}Al_2O_3{\cdot}6SiO_2$ (orthoclase).

Examples of those containing $Na_2O$ as a component include $Na_2O{\cdot}SiO_2$ and hydrate thereof, $Na_2O{\cdot}2SiO_2$, $2Na_2O{\cdot}SiO_2$, $Na_2O{\cdot}4SiO_2$, $Na_2O{\cdot}3SiO_2{\cdot}3H_2O$, $Na_2O{\cdot}Al_2O_3{\cdot}2SiO_2$, $Na_2O{\cdot}Al_2O_3{\cdot}4SiO_2$ (jadeite), $2Na_2O{\cdot}3CaO{\cdot}5SiO_2$, $3Na_2O{\cdot}2CaO{\cdot}5SiO_2$, and $Na_2O{\cdot}Al_2O_3{\cdot}6SiO_2$ (albite).

Examples of those containing $Li_2O$ as a component include $Li_2O{\cdot}SiO_2$, $2Li_2O{\cdot}SiO_2$, $Li_2O{\cdot}SiO_2{\cdot}H_2O$, $3Li_2O{\cdot}2SiO_2$, $Li_2O{\cdot}Al_2O_3{\cdot}4SiO_2$ (petalite), $Li_2O{\cdot}Al_2O_3{\cdot}2SiO_2$ (eucryptite), and $Li_2O{\cdot}Al_2O_3{\cdot}4SiO_2$ (spodumene).

Examples of those containing BaO as a component include $BaO{\cdot}SiO_2$, $2BaO{\cdot}SiO_2$, $BaO{\cdot}Al_2O_3{\cdot}2SiO_2$ (celsian), and $BaO{\cdot}TiO_2{\cdot}3SiO_2$ (bentonite).

Examples of those containing CaO as a component include $3CaO \cdot SiO_2$ (alite, a cement clinker mineral), $2CaO \cdot SiO_2$ (belite, a cement clinker mineral), $2CaO \cdot MgO \cdot 2SiO_2$ (akermanite), and $2CaO \cdot Al_2O_3 \cdot SiO_2$ (gehlenite), solid solution (merrillite) of akermanite and gehlenite, $CaO \cdot SiO_2$ (wollastonite (including both $\alpha$-type and $\beta$-type)), $CaO \cdot MgO \cdot 2SiO_2$ (diopside), $CaO \cdot MgO \cdot SiO_2$ (monticellite), $3CaO \cdot MgO \cdot 2SiO_2$ (merwinite), $CaO \cdot Al_2O_3 \cdot 2SiO_2$ (anorthite), tobermorite group hydrates such as $5CaO \cdot 6SiO_2 \cdot 5H_2O$ (tobermorite, and $5CaO \cdot 6SiO_2 \cdot 9H_2O$ etc.), wollastonite group hydrates such as $2CaO \cdot SiO_2 \cdot H_2O$ (hillebrandite), xonotlite group hydrates such as $6CaO \cdot 6SiO_2 \cdot H_2O$ (xonotlite), gyrolite group hydrates such as $2CaO \cdot SiO_2 \cdot 2H_2O$ (gyrolite), $CaO \cdot Al_2O_3 \cdot 2SiO_2 \cdot H_2O$ (lawsonite), $CaO \cdot FeO \cdot 2SiO_2$ (hedenbergite), $3CaO \cdot 2SiO_2$ (chilcorenite), $3CaO \cdot Al_2O_3 \cdot 3SiO_2$ (grossura), $3CaO \cdot Fe_2O_3 \cdot 3SiO_2$ (andradite), $6CaO \cdot 4Al_2O_3 \cdot FeO \cdot SiO_2$ (pleochroite), as well as clinozoisite, piemontite, allanite, vesuvianite, axinite, scawtite, and augite.

Further, Portland cement can be mentioned as a silicate mineral containing CaO as a component. The type of Portland cement is not particularly limited, and any type can be used such as normal, early strength, super early strength, medium heat, sulfate resistant, white, etc. Further, various mixed cements such as blast furnace cement, silica cement, and fly ash cement can also be used as component B.

Further, examples of other silicate minerals containing CaO include blast furnace slag and ferrite.

Examples of those containing ZnO as a component include $ZnO \cdot SiO_2$, $2ZnO \cdot SiO_2$ (troostite), and $4ZnO \cdot 2SiO_2 \cdot H_2O$ (hemimorphite). Examples of those containing MnO as a component include $MnO \cdot SiO_2$, $2MnO \cdot SiO_2$, and $CaO \cdot 4MnO \cdot 5SiO_2$ (rhodonite).

Examples of those containing FeO as a component include $FeO \cdot SiO_2$ (ferrosilite), $2FeO \cdot SiO_2$ (ferroolivine), $3FeO \cdot Al_2O_3 \cdot 3SiO_2$ (almandine), and $2CaO \cdot 5FeO \cdot 8SiO_2 \cdot H_2O$ (ferroactinolite).

Examples of those containing CoO as a component include $CoO \cdot SiO_2$ and $2CoO \cdot SiO_2$.

Examples of those containing MgO as a component include $MgO \cdot SiO_2$ (steatite, enstatite), $2MgO \cdot SiO_2$ (forsterite), $3MgO \cdot Al_2O_3 \cdot 3SiO_2$ (pyrope), $2MgO \cdot 2Al_2O_3 \cdot 5SiO_2$ (cordierite), $2MgO \cdot 3SiO_2 \cdot 5H_2O$, $3MgO \cdot 4SiO_2 \cdot H_2O$ (talc), $5MgO \cdot 8SiO_2 \cdot 9H_2O$ (attapulgite), $4MgO \cdot 6SiO_2 \cdot 7H_2O$ (sepiolite), $3MgO \cdot 2SiO_2 \cdot 2H_2O$ (chrysolite), $5MgO \cdot 2CaO \cdot 8SiO_2 \cdot H_2O$ (tremolite), $5MgO \cdot Al_2O_3 \cdot 3SiO_2 \cdot 4H_2O$ (chlorite), $K_2O \cdot 6MgO \cdot Al_2O_3 \cdot 6SiO_2 \cdot 2H_2O$ (phlogopite), $Na_2O \cdot 3MgO \cdot 3Al_2O_3 \cdot 8SiO_2 \cdot H_2O$ (glaucophane), and magnesium tourmaline, anthophyllite, cummingtonite, vermiculite, and smectite.

Examples of those containing $Fe_2O_3$ as a component include $Fe_2O_3 \cdot SiO_2$.

Examples of those containing $ZrO_2$ as a component include $ZrO_2 \cdot SiO_2$ (zircon) and AZS refractory.

Examples of those containing $Al_2O_3$ as a component include $Al_2O_3 \cdot SiO_2$ (sillimanite, andalusite, kyanite), $2Al_2O_3 \cdot SiO_2$, $Al_2O_3 \cdot 3SiO_2$, $3Al_2O_3 \cdot 2SiO_2$ (mullite), $Al_2O_3 \cdot 2SiO_2 \cdot 2H_2O$ (kaolinite), $Al_2O_3 \cdot 4SiO_2 \cdot H_2O$ (pyrophyllite), $Al_2O_3 \cdot 4SiO_2 \cdot H_2O$ (bentonite), $K_2O \cdot 3Na_2O \cdot 4Al_2O_3 \cdot 8SiO_2$ (nepheline), $K_2O \cdot 3Al_2O_3 \cdot 6SiO_2 \cdot 2H_2O$ (muscovite, sericite), $K_2O \cdot 6MgO \cdot Al_2O_3 \cdot 6SiO_2 \cdot 2H_2O$ (phlogopite), and various zeolites, fluorophlogopite, and biotite.

Among the above silicate minerals, mica, talc, wollastonite and kaolin are particularly preferred. (Talc)

Talc is a hydrous magnesium silicate in chemical composition, generally represented by the chemical formula $4SiO_2 \cdot 3MgO \cdot 2H_2O$, and usually a scale-like particle with a layered structure, and is composed of 56 to 65 wt% of $SiO_2$, 28 to 35 wt% of MgO, and about 5 wt% of $H_2O$. Other minor components are contained such as 0.03 to 1.2 wt% of $Fe_2O_3$, 0.05 to 1.5 wt% of $Al_2O_3$, 0.05 to 1.2 wt% of CaO, 0.2 wt% or less of $K_2O$, and 0.2 wt% or less of $Na_2O$. The talc preferably has a particle size, in an average particle size as measured by a sedimentation method, of 0.1 to 15 $\mu$m (more preferably 0.2 to 12 $\mu$m, further preferably 0.3 to 10 $\mu$m, and particularly preferably 0.5 to 5 $\mu$m). Further, talc used as a raw material particularly preferably has a bulk density of 0.5 (g/cm3) or more. The average particle size of talc refers to D50 (median diameter of particle size distribution) measured by X-ray transmission method, one of liquid phase sedimentation methods. A specific example of a device that performs the above measurement is Sedigraph 5100 manufactured by Micromeritics.

The production method for pulverizing talc from raw stone is not particularly limited, and examples of the usable method include axial flow milling, annular milling, roll milling, ball milling, jet milling, and container-rotating compression-shearing type milling. Further, the pulverized talc preferably has a uniform particle size distribution through classification process by various classifiers. The classifier is not particularly limited, and examples of the usable one include impactor type inertial force classifiers (variable impactor etc.), inertial force classifiers using the Coanda effect (elbow jet etc.), centrifugal field classifiers (multistage cyclone, microplex, dispersion separator, accucut, turbo classifier, turboplex, micron separator, super separator, etc.).

Further, talc is preferably in a state of aggregation from the viewpoint of ease of handling, and methods for producing such a state include a degassing compression method, a compression method using a sizing agent. A method using the degassing compression is particularly preferable because it is simple and does not mix unnecessary sizing agent resin components into the resin composition of the present invention. (Mica)

Mica can be preferably used that has an average particle diameter of 10 to 100 $\mu$m as measured by microtrack laser diffraction method. More preferably, the average particle size is 20 to 50 $\mu$m. Mica having the average particle size of less than 10 $\mu$m does not allow a sufficient improvement effect on rigidity, and having that exceeding 100 $\mu$m does not allow a sufficient improvement on rigidity and a significant decrease in mechanical strength such as impact properties, which is not preferable. Mica can be preferably used that has a thickness of 0.01 to 1 $\mu$m as measured by observation with an

electron microscope. More preferably, the thickness is 0.03 to 0.3 μm. The aspect ratio is preferably 5 to 200, and more preferably 10 to 100. The mica used is preferably muscovite mica, which has a Mohs hardness of about 3. Muscovite mica can achieve higher rigidity and strength than other mica such as phlogopite, and solves the problems of the present invention at a better level. Further, mica may be produced by either a dry pulverization method or a wet pulverization method. Dry pulverization is less costly and more common, while wet pulverization is effective in pulverizing mica more thinly and finely to allow the higher improving effect on the rigidity of the resin composition.

(Wollastonite)

The fiber diameter of wollastonite is preferably 0.1 to 10 μm, more preferably 0.1 to 5 μm, and further preferably 0.1 to 3 μm. Further, the aspect ratio (average fiber length/average fiber diameter) is preferably 3 or more. The upper limit of the aspect ratio is, for example, 30 or less. Here, the fiber diameter is determined by observing the reinforcing filler with an electron microscope, determining the diameter of each individual fiber, and calculating the number average fiber diameter from the measured values. An optical microscope has difficulty in accurate measurement of the target level size, and thus an electron microscope is used. The fiber diameter is determined by randomly extracting the filler for diameter measurement from the image obtained by electron microscopy, measuring the fiber diameter near the center, and calculating the number average fiber diameter from the measured values. The observation magnification is approximately 1000 times, and the number of fillers for measurement is 500 or more (600 or less is preferable for the work). In contrast, the average fiber length is measured by observing the filler with an optical microscope, determining the length of each filler, and calculating the number average fiber length from the measured values. Observation using an optical microscope begins with preparing a sample in which the fillers are dispersed so as not to overlap too much with each other. Observation is performed using an objective lens of 20 times, and the observed image is captured as image data into a CCD camera with approximately 250,000 pixels. From the obtained image data, using an image analysis device, the fiber length is calculated using a program for calculation of the maximum distance between two points of the image data. Under the above conditions, the size of 1 pixel corresponds to a length of 1.25 μm, and the number measurement is 500 or more (600 or less is preferable for the work).

In order to fully reflect the inherent whiteness of wollastonite in the resin composition, iron content, mixed in the raw material ore and mixed by the wear of the equipment for crushing the raw material ore, is preferably removed from the wollastonite as much as possible using a magnetic separator. The iron content in the wollastonite is preferably 0.5 wt% or less in terms of $Fe_2O_3$ as a result of the above magnetic separator treatment.

Silicate minerals (more preferably mica, talc, wollastonite) are, though preferably not surface-treated, may be surface-treated with various surface treatment agents such as silane coupling agents, higher fatty acid esters, and waxes. Further, they may be granular by being granulated with a sizing agent such as various resins, higher fatty acid esters, and waxes.

(Kaolin)

Kaolin is an aluminum silicate salt, and usually preferably used after dehydrating crystallization water by burning. The chemical components of kaolin include approximately 40 to 50 mass% of $Al_2O_3$ and 50 to 60 mass% of $SiO_2$, and often include minor components such as $Na_2O$, $TiO_2$, CaO, $Fe_2O_3$, MgO, and $K_2O$. Among kaolins, calcined kaolin is preferred from the viewpoint of the appearance of molded products obtained using the resin composition.

Although any of the above silicate minerals can be used, the sodium ion content of silicate minerals is more preferably low. The content of sodium ions is preferably 0.01 to 5000 ppm, more preferably 0.1 to 4000 ppm, further preferably 0.2 to 3500 ppm, still further preferably 0.3 to 3000 ppm, and particularly preferably 0.3 to 2800 ppm. By using a silicate mineral with a particularly low content of sodium ions as component B-2, advantages such as particularly good thermal stability and hydrolysis resistance can be obtained, and decrease can be suppressed in impact strength after a water exposure test in UL746C f1 rating certification and flame retardancy.

(B-3-3: Glass filler)

Examples of preferably used glass fillers in the present invention include glass fibers, metal-coated glass fibers, and glass milled fibers. Glass fibers, forming the base of such above fibrous glass fillers, are made by quenching molten glass while being drawn using various methods and formed into a predetermined fibrous shape. The quenching and drawing in the above case are no particular limited. In addition, the cross-sectional shape may be a perfect circle, and also a shape other than a perfect circle, such as an ellipse, a cocoon, a flattened shape, or a trefoil shape. Further, the shape may be a mixture of a perfect circular shape and shapes other than a perfect circle. The flattened shape has the average value of the major axis of the fiber cross section of 10 to 50 μm, preferably 15 to 40 μm, and more preferably 20 to 35 μm, and the average value of the ratio of major axis to minor axis (major axis/minor axis) of 1.5 to 8, preferably 2 to 6, and more

preferably 2.5 to 5.

Further, the fibrous glass filler has such a high aspect ratio as glass fiber, and thus preferably has the average fiber diameter of 1 to 25 μm and more preferably 3 to 17 μm. Use of a filler having an average fiber diameter within this range enables the molded product to exhibit good mechanical strength without impairing the appearance. Further, the fiber length of the high aspect ratio fibrous glass filler is a number average fiber length in the reinforced aromatic polycarbonate resin composition, and is preferably 60 to 500 μm, more preferably 100 to 400 μm, and particularly preferably 120 to 350 μm. Note that the number average fiber length is obtained from the filler residue collected in the treatments of molded products such as high-temperature ashing, dissolution with solvents, and decomposition with chemicals, by calculation using an image analysis device through the observed image of the residue using an optical microscope. In addition, calculation of the above value is performed by a method of setting a reference fiber diameter and omitting those shorter than the reference. The aspect ratio of the high aspect ratio fibrous glass filler is preferably 10 to 200, more preferably 15 to 100, and further preferably 20 to 50. The aspect ratio of a filler refers to the value obtained by dividing the average fiber length by the average fiber diameter.

Glass milled fibers are usually produced by pulverizing glass fibers into short fibers using a grinder such as a ball mill. The aspect ratio of fibrous glass fillers having a low aspect ratio, such as glass milled fibers, is preferably 2 to 10, and more preferably 3 to 8. The fiber length of the low aspect ratio fibrous glass filler is a number average fiber length in the reinforced aromatic polycarbonate resin composition, and is preferably 5 to 150 μm and more preferably 9 to 80 μm. The average fiber diameter is preferably 1 to 15 μm and more preferably 3 to 13 μm.

Examples of a sheet glass filler preferably used in the present invention include glass flakes, metal coated glass flakes, and metal oxide coated glass flakes.

The sheet glass filler is composed of the base of glass flakes, which is a sheet glass filler produced by a method such as a cylindrical blow method and a sol-gel method. The size of the raw material for the above glass flakes can be selected from various sizes depending on the degree of crushing and classification. The average particle diameter of the glass flakes used as the raw material is preferably 10 to 1000 μm, more preferably 20 to 500 μm, and further preferably 30 to 300 μm. This is because those in the above range are excellent in both handleability and moldability. Usually, sheet glass fillers crack during the process of melting and kneading with resin to make the average particle size thereof smaller. The number average particle diameter of the sheet glass filler in the resin composition is preferably 10 to 200 μm, more preferably 15 to 100 μm, and further preferably 20 to 80 μm. Note that the number average particle diameter is obtained from the sheet glass filler residue collected in the treatments of molded products such as high-temperature ashing, dissolution with solvents, and decomposition with chemicals, by calculation using an image analysis device through the observed image of the residue using an optical microscope. In addition, calculation of the above value is performed by a method of setting a reference flake thickness and omitting those shorter than the reference. The thickness is preferably 0.5 to 10 μm, more preferably 1 to 8 μm, and further preferably 1.5 to 6 μm. A sheet glass filler having the above number average particle size and thickness allows achievement of good mechanical strength, appearance, and moldability.

To the above-mentioned various fibrous glass fillers and sheet glass fillers, applied are the various glass compositions such as A glass, C glass, D glass, E glass, S glass, NE glass, etc., and the application is not limited. The above glass filler may contain components such as $TiO_2$, $SO_3$, and $P_2O_5$, if necessary. Among these, E glass (alkali-free glass) and NE glass are more preferred. Further, the glass filler is preferably surface-treated with a well-known surface treatment agent, such as a silane coupling agent, a titanate coupling agent, or an aluminate coupling agent, from the viewpoint of improving mechanical strength. In addition, preferably used are glass fibers (including those coated with metal or metal oxide) and glass flakes (including those coated with metal or metal oxide) sizing-treated with olefin resins, styrene resins, acrylic resins, a polyester resin, an epoxy resin, a urethane resin, etc. The amount of sizing agent deposited on the sizing-treated filler is preferably 0.5 to 8 wt%, and more preferably 1 to 4 wt% with respect to 100 wt% of the filler.

Further, fibrous glass fillers and sheet glass fillers include those coated with different materials on the surfaces. Preferred examples of the above different materials include metals and metal oxides. Examples of the metals include silver, copper, nickel, and aluminum. Examples of the metal oxides include titanium oxide, cerium oxide, zirconium oxide, iron oxide, aluminum oxide, and silicon oxide. Methods for surface coating of the different materials, though not particularly limited, include, for example, various known plating methods (e.g., electrolytic plating, electroless plating, hot-dip plating, etc.), vacuum evaporation method, ion plating method, CVD method, (for example, thermal CVD, MOCVD, plasma CVD, etc.), PVD method, and sputtering method.

Although any of the above glass fillers can be used, the sodium ion content of glass filler is more preferably low. The content of sodium ions is preferably 0.01 to 4000 ppm, more preferably 0.1 to 3500 ppm, further preferably 0.2 to 3300 ppm, still further preferably 0.3 to 3000 ppm, and particularly preferably 0.3 to 2800 ppm. By using a glass filler with a particularly low content of sodium ions as component B-3, advantages such as particularly good thermal stability and hydrolysis resistance can be obtained, and decrease can be suppressed in impact strength after a water exposure test in UL746C f1 rating certification and flame retardancy.

(B-3-4: Titanium-based oxide)

The titanium-based oxide used in the present invention is titanium dioxide. The above titanium dioxide can be those commonly used for various coloring purposes, and are widely known per se. There exists also titanium dioxide consisting of 100 wt% of $TiO_2$ (in the present invention, the titanium dioxide component of titanium dioxide is referred to as "$TiO_2$", and the whole including the surface treatment agent is referred to as "titanium dioxide"). However, surface treatment is usually performed with oxides of various metals such as aluminum, silicon, titanium, zirconium, antimony, tin, and zinc. Preferred titanium dioxide in the present invention is also the one surface-treated with a metal oxide. Note that a portion of these metal oxide components for surface treatment may be present inside the $TiO_2$ particles in an embodiment.

Further, the titanium dioxide is more preferably surface-treated with an organic compound. In the above surface treatment, various types of treatment agents such as polyol type, amine type, and silicone type can be used. Examples of polyol surface treatment agents include pentaerythritol, trimethylolethane, and trimethylolpropane; examples of amine surface treatment agents include triethanolamine acetate and trimethylolamine acetate; examples of silicone surface treatment agents include halogen-substituted organosilicon compounds and organosilicon compounds containing an alkoxy group and/or Si-H group, and the latter organosilicon compound is particularly preferable. Examples of halogen-substituted organosilicon compounds include alkylchlorosilane, and examples of organosilicon compounds containing an alkoxy group and/or Si-H group include alkylalkoxysilane, alkylalkoxysiloxane, and alkylhydrogensiloxane.

Although the above silane compounds and siloxane compounds may have a part of the alkyl groups substituted with phenyl groups, both more preferable have no phenyl group substitution. The alkyl group preferably has 1 to 30 carbon atoms, and more preferably 1 to 12 carbon atoms. The alkoxy group is preferably an alkoxy group having 1 to 4 carbon atoms, particularly preferably a methoxy group.

The alkylalkoxysilane compound may contain any of 1 to 3 alkoxy groups, or may be a mixture thereof, and preferably has 2 to 3 alkoxy groups, and particularly preferably has 3 alkoxy groups. Specific examples of alkylalkoxysilane compounds include methyltrimethoxysilane, ethyltrimethoxysilane, butyltrimethoxysilane, isobutyltrimethoxysilane, methyloctyldimethoxysilane, decyltrimethoxysilane, and octadecyltrimethoxysilane.

The content ratio of alkoxy groups and Si-H groups in the siloxane compound is preferably 0.1 to 1.2 mol/100g, more preferably 0.12 to 1 mol/100g, and further preferably 0.15 to 0.6 mol/100 g. This ratio can be determined by measuring the amount of hydrogen or alcohol generated per unit weight of the siloxane compound using an alkaline decomposition method.

Generally, the structure of a siloxane compound is constructed by arbitrarily combining four types of siloxane units shown below. That is, M unit: monofunctional siloxane units such as $(CH_3)_3SiO_{1/2}$, $H(CH_3)_2SiO_{1/2}$, $H_2(CH_3)SiO_{1/2}$, $(CH_3)_2(CH_2{=}CH)SiO_{1/2}$, $(CH_3)_2(C_6H_5)SiO_{1/2}$, $(CH_3)(C_6H_5)(CH_2{=}CH)SiO_{1/2}$,

D unit: bifunctional siloxane units such as $(CH_3)2SiO$, $H(CH_3)SiO$, $H_2SiO$, $H(C_6H_5)SiO$, $(CH_3)(CH_2{=}CH)SiO$, $(C_6H_5)_2SiO$,
T unit: trifunctional siloxane unit such as $(CH_3)SiO_{3/2}$, $(C_3H_7)SiO_{3/2}$, $HSiO_{3/2}$, $(CH_2{=}CH)SiO_{3/2}$, $(C_6H_5)SiO_{3/2}$,
Q unit: tetrafunctional siloxane unit represented by $SiO_2$.

Specific examples of the structure as rational formulas of the siloxane compound include Dn, Tp, MmDn, MmTp, MmQq, MmDnTp, MmDnQq, MmTpQq, MmDnTpQq, DnTp, DnQq, and DnTpQq. Among these, preferred structures of the silicone compound are MmDn, MmTp, MmDnTp, and MmDnQq, and a more preferred structure is MmDn or MmDnTp. Here, the coefficients m, n, p, and q in the above rational formula are integers of 1 or more representing the degree of polymerization of each siloxane unit, and the sum of the coefficients in each formula is the average degree of polymerization of the siloxane compound. This average degree of polymerization is preferably 2 to 150, and more preferably 3 to 80. Further, when any one of m, n, p, and q is a numerical value of 2 or more, hydrogen atoms or organic residues can be bonded with different two or more types of siloxane units.

The amount of the surface-treating organic compound is preferably 1 wt% or less, and more preferably 0.6 wt% or less, with respect to 100 wt% of component B-4. In contrast, the lower limit is 0.05 wt% or more. Titanium dioxide pigments surface-treated with organosilicon compounds containing alkoxy groups and/or Si-H groups provide better light reflectivity to the resin compositions of the present invention.

A preferred embodiment of the titanium dioxide of the present invention is shown by the following conditions: (i) $0.05 \leq (b)-(a) \leq 0.6$ is satisfied, wherein (a) wt%: weight loss from 23°C to 100°C and (b) wt%: weight loss from 23°C to 300°C by thermogravimetric analysis (TGA), and (ii) $0.001 \leq (d)/(c) \leq 0.01$ and $0.001 \leq (e)/(c) \leq 0.02$ are satisfied, wherein the weight proportions derived from Ti element, Al element, and Si element in the fluorescent X-ray measurement are respectively (c), (d) and (e). The lower limit of the above value (b)-(a) is more preferably 0.15, and the upper limit is more preferably 0.3. The lower limit of the above value (d)/(c) is more preferably 0.003, and the upper limit is more preferably 0.01. The lower limit of the above value (e)/(c) is more preferably 0.005, and the upper limit is more preferably 0.015. The conditions of $(b)-(a) \leq 0.6$, $(d)/(c) \leq 0.01$, and $(e)/(c) \leq 0.02$ allow the thermal stability effect to be significantly exhibited, and the conditions of

(b)-(a) ≥ 0.05, and (d)/(c) and (e)/(c) ≥ 0.001 allow the good hue to be obtained, and especially on the high filling allow the excellent light reflection characteristics to be obtained.

Note that, the thermogravimetric analysis (TGA) measurement for the above condition (i) is performed under the measurement conditions of raising the temperature in a nitrogen gas atmosphere in a TGA measuring device from 23°C to 900°C at a temperature rising rate of 20°C/min. The operation of calculating the weight proportion of an element from the fluorescent X-ray measurement for the above condition (ii) can usually be performed through calculation based on a calibration line obtained from the element weight and peak intensity determined from the sample of each element. In recent years, fluorescent X-ray measurement devices have built-in programs that allow quantification, and the weight percentages of elements can be determined directly from the device. Examples of the device include MESA-500 model manufactured by Horiba, Ltd., which can be preferably used for calculating the weight ratio of elements. The above calculation is performed using the basic parameter method in the MESA-500 model.

The crystal form of $TiO_2$ in component B-3-4 may be either anatase type or rutile type, and these may be used in combination, as necessary. The rutile type is more preferable in terms of initial mechanical properties and long-term weather resistance. Note that the rutile type crystal may contain anatase type crystal inside. Further, although $TiO_2$ can be produced by a sulfuric acid method, a chlorine method, or various other methods, the chlorine method is more preferable. Further, the shape of the titanium dioxide pigment of the present invention, though not particularly limited, is more preferably in the form of particle. The average particle size of the titanium dioxide pigment is preferably 0.01 to 0.4 μm, more preferably 0.1 to 0.3 μm, and further preferably 0.15 to 0.25 μm. The average particle size is calculated by measuring individual particle sizes through electron microscopy observation for the number average.

The $TiO_2$ surface can be coated with various metal oxides by various commonly used methods. For example, it is produced through the following steps 1) to 8). That is, 1) dry-milled untreated $TiO_2$ is made into an aqueous slurry, 2) the slurry is wet ground for atomization, 3) a granule slurry is collected, 4) the water-soluble compound of metal salt is added to the granule slurry, 5) the slurry is neutralized and $TiO_2$ surface is coated with hydrous oxide of metal, 6) by-products are removed, slurry pH is adjusted, the slurry is filtrated, and washed with pure water, 7) the cleaned cake is dried and 8) the dried product is pulverized using a jet mill etc. In addition to the above method, for example, can be mentioned a method of reacting $TiO_2$ particles with an active metal compound in a gas phase. Further, coating of the $TiO_2$ surface with a metal oxide surface treatment agent can include burning after surface treatment, surface-treating again after surface treatment, and burning after surface treatment and then surface-treating again. Further, for the surface treatment with metal oxide, either high-density treatment or low-density (porous) treatment can be selected. Adjustment for the above conditions (i) and (ii) can be performed by adjusting the metal oxide for surface treatment and the conditions of the burning treatment. The titanium dioxide pigment of the present invention is surface-treated with aluminum oxide and silicon oxide as is clear from the above conditions. Although surface treatment by these may be performed in any order or by a mixture, preferably aluminum oxide treatment is performed and then silicon oxide treatment. More preferably, titanium dioxide is surface-treated with the metal oxide as described above, and then surface-treated with an organosilicon compound containing an alkoxy group and/or a Si-H group.

Although any of the above titanium-based oxides can be used, the sodium ion content of titanium-based oxides is more preferably low. The content of sodium ions is preferably 0.01 to 500 ppm, more preferably 0.1 to 400 ppm, further preferably 0.2 to 3500 ppm, still further preferably 0.3 to 300 ppm, and particularly preferably 0.3 to 280 ppm. By using a titanium-based oxide with a particularly low content of sodium ions as component B-4, advantages such as particularly good thermal stability and hydrolysis resistance can be obtained, and decrease can be suppressed in impact strength after a water exposure test in UL746C f1 rating certification and flame retardancy.

(B-3-5: Boron-based filler)

The boron-based filler used in the present invention is boron nitride. Examples of boron nitride include cubic boron nitride and hexagonal boron nitride, and hexagonal boron nitride is preferred. Further, boron nitride has a spherical shape, a scale shape, and an aggregate thereof, and any of them can be used in the present invention. Among these, use of scale shape or scale shape aggregates allows a composition with better thermal conductivity to be obtained and mechanical properties etc. to be improved, which is preferable. The average particle diameter (D50) of boron nitride is preferably 1 to 100 μm, and more preferably 5 to 50 μm, as measured by laser diffraction/scattering method. The average particle diameter of less than 1 μm will cause poor extrusion stability during production of the resin composition and may cause decrease in productivity, which is not preferable. The average particle diameter exceeding 100 μm may cause poor surface appearance of the molded product, which is not preferable.

Although any of the above boron-based filler can be used, the sodium ion content of boron-based filler is more preferably low. The content of sodium ions is preferably 0.01 to 500 ppm, more preferably 0.1 to 400 ppm, further preferably 0.2 to 3500 ppm, still further preferably 0.3 to 300 ppm, and particularly preferably 0.3 to 280 ppm. By using a boron-based filler with a particularly low content of sodium ions as component B-5, advantages such as particularly good thermal stability and hydrolysis resistance can be obtained, and decrease can be suppressed in impact strength after a water

exposure test in UL746C f1 rating certification and flame retardancy.

(B-3-6: Additive for molding Laser Direct Structuring resin)

The additive for molding Laser Direct Structuring resin used in the present invention is a compound that enables three-dimensional circuit molding by laser irradiation, and by adding 5 parts by weight of an additive for molding Laser Direct Structuring resin with respect to 100 parts by weight of polycarbonate (Teijin Panlite (R) L-1250WP) resin, and performing irradiation using a YVO4 laser with a wavelength of 1064 nm, an output of 1.45 W, a frequency of 80 kHz, and a speed of 2 m/s, the compound is preferably capable of forming plating on the laser irradiated surface in a standard electroless copper plating process. The additive for molding Laser Direct Structuring resin may be a synthetic product or a commercially available product. In addition to commercially available additive for molding Laser Direct Structuring resin, the commercially available products may be substances sold for other purposes. The additive for molding Laser Direct Structuring resin is preferably a compound containing at least two types of metals. Examples of the metal include copper, chromium, tin and antimony. Only one type of additive for molding Laser Direct Structuring resin may be used, or two or more types may be used in combination.

The additive for molding Laser Direct Structuring resin used in the present invention is preferably a compound containing tin oxide as a main component, and more preferably a compound containing an oxide containing antimony and tin as a main component. Use of the additive for molding Laser Direct Structuring resin enables the resin molded product to further improve the plating characteristics, and thus the resin molded product to appropriately form plating on the surface. Among these, preferably the tin content is higher than the antimony content, and more preferably the tin content is 80 wt% or more, and further preferably 85 wt% or more with respect to the total amount of tin and antimony. Examples of the above compounds include antimony-doped tin oxide and antimony oxide-doped tin oxide, and antimony oxide-doped tin oxide is preferred. In addition, the additive for molding Laser Direct Structuring resin containing antimony and tin oxide preferably has the content of antimony, with respect to the total amount of tin oxide and antimony, of 1 to 20 wt%, and more preferably 3 to 15 wt%.

The average particle size of the additive for molding Laser Direct Structuring resin used in the present invention is preferably 0.01 to 50 μm and more preferably 0.05 to 30 μm. The above configuration tends to allow the plating surface condition, when plating is applied, to exhibit good uniformity.

Although any of the above additive for molding Laser Direct Structuring resin can be used, the sodium ion content of additive for molding Laser Direct Structuring resin is more preferably low. The content of sodium ions is preferably 0.01 to 50 ppm, more preferably 0.1 to 40 ppm, further preferably 0.2 to 35 ppm, still further preferably 0.3 to 30 ppm, and particularly preferably 0.3 to 25 ppm. By using an additive for molding Laser Direct Structuring resin with a particularly low content of sodium ions as component B-6, advantages such as particularly good thermal stability and hydrolysis resistance can be obtained, and decrease can be suppressed in impact strength after a water exposure test in UL746C f1 rating certification and flame retardancy.

The content of component B-3 is preferably 0.1 to 160 parts by weight, more preferably 1 to 155 parts by weight, and further preferably 5 to 150 parts by weight, with respect to 100 parts by weight of component A. The content of component B-3 less than 0.1 part by weight will cause insufficient flame retardancy and decrease in the impact strength after a water exposure test in UL746C f1 rating certification, and that exceeding 160 parts by weight will cause significant deterioration of appearance due to decomposition of the resin and flow marks.

(Component C: Phosphazene)

The flame-retardant polycarbonate resin composition of the present invention contains component C of phosphazene containing 98.5 mol% or more of a phosphazene cyclic trimer. Use of a compound other than phosphazene, such as a phosphoric acid ester or a condensed phosphoric ester, for a phosphorus-based flame retardant will cause no suppression on the decrease in impact strength after a water exposure test in UL746C f1 rating certification and flame retardancy. Phosphazene is not particularly limited as long as it is a compound that does not contain a halogen atom and has a phosphazene structure in its molecule. The phosphazene structure herein refers to a structure represented by the formula: -P(R2)=N- [wherein R2 is an organic group]. Phosphazene is represented by the following formulas (11) and (12).

[Chem. 13]

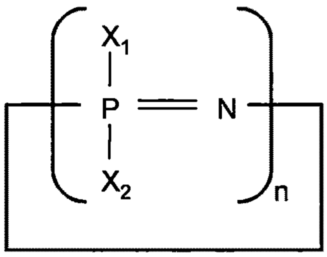

$\cdots$ (1 1)

[Chem. 14]

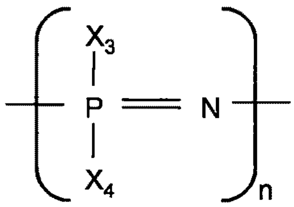

$\cdots$ (1 2)

(Wherein, $X_1$, $X_2$, $X_3$, and $X_4$ represent hydrogen, a hydroxyl group, an amino group, or an organic group that does not contain a halogen atom. Further, n represents an integer of 3 to 10).

In the above formulas (11) and (12), examples of the organic group not containing a halogen atom represented by $X_1$, $X_2$, $X_3$, and $X_4$ include an alkoxy group, a phenyl group, an amino group, and an allyl group.

Component C of phosphazene is required to contain 98.5 mol% or more of a phosphazene cyclic trimer. The content is preferably 99 mol% to 100 mol% and more preferably 99.5 mol% to 100 mol%. The content of the phosphazene cyclic trimer less than 98.5 mol% will cause no suppression on the decrease in impact strength after a water exposure test in UL746C f1 rating certification and flame retardancy.

General methods for producing phosphazene are described in European Patent Application Publication No. 728811 and WO 97/40092.

Although phosphazene byproducts other than cyclic trimers, such as cyclic tetramers and higher oligomers are produced during the production process, the content of phosphazene cyclic trimers can be increased by purifying with column chromatography etc.

The content of phosphazene cyclic trimer in phosphazene can be quantified using $^{31}$PNMR (chemical shift, $\delta$ trimer 6.5 to 10.0 ppm, $\delta$ tetramer -10 to -13.5 ppm, $\delta$ higher oligomer -16.5 to -25.0 ppm).

The content of component C is 1 to 45 parts by weight, preferably 1.3 to 40 parts by weight, and more preferably 1.5 to 35 parts by weight, with respect to 100 parts by weight of component A. Further, when using component B-1 or component B-2 as component B, the content of component C is preferably 1 to 30 parts by weight, more preferably 3 to 25 parts by weight, and more preferably 5 to 20 parts by weight, with respect to 100 parts by weight of component A. The content of component C less than the lower limit will cause no flame-retardant effect, and that exceeding the upper limit will cause no suppression on the decrease in impact strength after a water exposure test in UL746C f1 rating certification.

(Component D: Anti-drip agent)

The flame-retardant polycarbonate resin composition of the present invention contains an anti-drip agent as component D. Containing this anti-drip agent will allow the molded product to exhibit good flame retardancy without impairing the physical properties.

Examples of anti-drip agent of component D include fluorine-containing polymers having fibril-forming ability, and such polymers include polytetrafluoroethylene, tetrafluoroethylene copolymers (for example, tetrafluoroethylene/hexafluoropropylene copolymers etc.), partially fluorinated polymers as shown in U.S. Patent No. 4,379,910, polycarbonate resins produced from fluorinated diphenol. Among these, polytetrafluoroethylene (hereinafter may be referred to as PTFE) is preferred.

PTFE having fibril-forming ability has an extremely high molecular weight, and exhibits a tendency of bonding PTFE together to be fibrous against external action such as shearing force. The molecular weight is 1 million to 10 million,

preferably 2 million to 9 million, in terms of number average molecular weight determined from standard specific gravity. The above PTFE can be used not only in solid form but also in aqueous dispersion form. In addition, the PTFE having fibril-forming ability can also be used as a PTFE mixture in a mixed form with other resins to improve the dispersibility in resin and thereby to obtain better flame retardancy and mechanical properties.

Examples of commercial products of the PTFE having fibril-forming ability include Teflon (registered trademark) 6J from DuPont Mitsui Fluorochemical Co., Ltd. and Polyflon MPA FA500 and F-201L from Daikin Industries, Ltd. Examples of commercially available aqueous PTFE dispersions include Fluon AD-1 and AD-936 manufactured by Asahi ICI Fluoropolymers Co., Ltd., Fluon D-1 and D-2 manufactured by Daikin Industries, Ltd., and Teflon (registered trademark) 30J manufactured by DuPont Mitsui Fluorochemicals Co., Ltd.

Those obtained using the following methods can be used as a mixed form of PTFE : (1) a method of mixing an aqueous dispersion of PTFE and an aqueous dispersion or solution of an organic polymer and performing co-precipitation to obtain a coaggregation mixture (method described in JP-A-60-258263, JP-A-63-154744, etc.); (2) method of mixing an aqueous PTFE dispersion and dried organic polymer particles (method described in JP-A-4-272957); (3) a method of uniformly mixing an aqueous PTFE dispersion and an organic polymer particle solution and simultaneously removing each medium from the mixture (method described in JP-A-06-220210, JP-A-08-188653, etc.); (4) a method of polymerizing monomers capable of forming an organic polymer in an aqueous dispersion of PTFE (method described in JP-A-9-95583); and (5) a method of uniformly mixing an aqueous dispersion of PTFE and an organic polymer dispersion, and then polymerizing a vinyl monomer in the mixed dispersion to obtain a mixture (method described in JP-A-11-29679 etc.). Examples of commercially available products of these mixed forms of PTFE include "Metablen A3 800" (trade name) manufactured by Mitsubishi Chemical Corporation and "BLENDEX B449" (trade name) manufactured by GE Specialty Chemicals.

The proportion of PTFE in the mixed form is preferably 1 to 60 wt% and more preferably 5 to 55 wt% with respect to 100 wt% of the PTFE mixture. The proportion of PTFE within this range may allow PTFE to achieve good dispersibility. Note that the ratio of the above-mentioned component D indicates the net amount of anti-drip agent, and in the case of mixed PTFE, indicates the net amount of PTFE.

Examples of styrene monomers used in the organic polymer used in the polytetrafluoroethylene mixture of the present invention include styrene optionally substituted with one or more groups selected from the group consisting of alkyl groups having 1 to 6 carbon atoms, alkoxy groups having 1 to 6 carbon atoms, and halogen, such as ortho-methylstyrene, meta-methylstyrene, para-methylstyrene, dimethylstyrene, ethylstyrene, para-tert-butylstyrene, methoxystyrene, fluorostyrene, monobromostyrene, dibromostyrene, and tribromostyrene; vinylxylene, and vinylnaphthalene, though not limited thereto. The styrenic monomers can be used alone or in combination of two or more.

The acrylic monomer used in the organic polymer used in the polytetrafluoroethylene mixture of the present invention contains an optionally substituted (meth)acrylate derivative. Specific examples of the acrylic monomer includes (meth)acrylate derivatives optionally substituted with one or more groups selected from the group consisting of an alkyl group having 1 to 20 carbon atoms, a cycloalkyl group having 3 to 8 carbon atoms, an aryl group, and a glycidyl group, such as (meth)acrylonitrile, methyl (meth)acrylate, ethyl (meth)acrylate, propyl (meth)acrylate, butyl (meth)acrylate, amyl (meth)acrylate, hexyl (meth)acrylate, 2-ethylhexyl (meth)acrylate, cyclohexyl (meth)acrylate, octyl (meth)acrylate, dodecyl (meth)acrylate, phenyl (meth)acrylate, benzyl (meth)acrylate and glycidyl (meth)acrylate; maleimide optionally substituted with an alkyl group having 1 to 6 carbon atoms or an aryl group, such as maleimide, N-methyl-maleimide and N-phenyl-maleimide; maleic acid, phthalic acid and itaconic acid, though not limited thereto. The acrylic monomers may be used alone or in combination of two or more. Among these, (meth)acrylonitrile is preferred.

The amount of acrylic monomer-derived units contained in the organic polymer used in the coating layer is preferably 8 to 11 parts by weight, more preferably 8 to 10 parts by weight, and further preferably 8 to 9 parts by weight, with respect to 100 parts by weight of styrene monomer-derived units. The amount of acrylic monomer-derived units less than 8 parts by weight may cause decrease in the coating strength, and that more than 11 parts by weight may cause deterioration of surface appearance of the molded product.

The polytetrafluoroethylene mixture of the present invention preferably has a residual moisture content of 0.5 wt% or less, more preferably 0.2 to 0.4 wt%, and further preferably 0.1 to 0.3 wt%. The residual water content more than 0.5 wt% may cause adverse effect on flame retardancy.

The process for producing the polytetrafluoroethylene mixture of the present invention includes a step of forming coating layer, containing one or more monomers selected from the group consisting of a styrenic monomer and an acrylic monomer, outside the branched polytetrafluoroethylene in the presence of an initiator. Further, after the step of forming coating layer, preferably included is a step of drying to make the residual moisture content to 0.5 wt% or less, preferably 0.2 to 0.4 wt%, and more preferably 0.1 to 0.3 wt%. The drying step can be performed using methods known in the art, such as hot air drying or vacuum drying methods.

In the polytetrafluoroethylene mixture of the present invention, any initiator used in the polymerization reaction of styrenic and/or acrylic monomers can be used without any limitations. Examples of the initiator include, though not limited thereto, cumyl hydroperoxide, di-tert-butyl peroxide, benzoyl peroxide, hydrogen peroxide, and potassium peroxide. In the

polytetrafluoroethylene mixture of the present invention, one or more of the above initiators can be used depending on the reaction conditions. The amount of the initiator is freely selected within the use range, taking into account the amount of polytetrafluoroethylene and the type/amount of monomers, and is preferably 0.15 to 0.25 parts by weight with respect to the amount of the total composition.

The polytetrafluoroethylene mixture of the present invention was produced by suspension polymerization in accordance with the following procedure.

First, water and branched polytetrafluoroethylene dispersion (solid concentration: 60%, polytetrafluoroethylene particle size: 0.15 to 0.3 μm) were placed in a reactor, and then the acrylic monomer, styrene monomer, and cumene hydroperoxide as a water-soluble initiator were added while stirring, and the reaction was performed at 80 to 90°C for 9 hours. After the reaction was completed, water was removed by centrifuging for 30 minutes using a centrifuge to obtain a paste-like product. Thereafter, the product paste was dried in a hot air dryer at 80 to 100°C for 8 hours. Thereafter, the dried product was pulverized to obtain the polytetrafluoroethylene mixture of the present invention.

The above suspension polymerization method does not require the polymerization step by emulsion dispersion in the emulsion polymerization method exemplified in Japanese Patent No. 3469391, and therefore does not require an emulsifier and electrolyte salts for coagulating and precipitating the latex after polymerization. In addition, in polytetrafluoroethylene mixtures produced by emulsion polymerization, the emulsifier and electrolyte salts are likely to mix into the mixture and thus hard to be removed, which makes it difficult to reduce the sodium and potassium ions derived from the emulsifier and electrolyte salts. Since the polytetrafluoroethylene mixture used in the present invention is produced by a suspension polymerization method, the above emulsifiers and electrolyte salts are not used, which allows the content of sodium ions and potassium ions in the mixture to be reduced, and enables the thermal stability and hydrolysis resistance to be improved.

In addition, coated branched PTFE can be used as an anti-drip agent in the present invention. The coated branched PTFE is a polytetrafluoroethylene mixture consisting of branched polytetrafluoroethylene particles and an organic polymer, and outside of the branched polytetrafluoroethylene, has a coating layer composed of an organic polymer, preferably a polymer containing units derived from a styrene monomer and/or units derived from an acrylic monomer. The coating layer is formed on the surface of branched polytetrafluoroethylene. Further, the coating layer preferably contains a copolymer of a styrene monomer and an acrylic monomer.

The polytetrafluoroethylene contained in the coated branched PTFE is branched polytetrafluoroethylene. When the polytetrafluoroethylene contained is not branched polytetrafluoroethylene, the dripping prevention effect in the case of small addition of polytetrafluoroethylene will be insufficient. The branched polytetrafluoroethylene is in the form of particles, preferably having a particle size of 0.1 to 0.6 μm, more preferably 0.3 to 0.5 μm, and further preferably 0.3 to 0.4 μm. The particle size smaller than 0.1 μm allows the molded product to have excellent surface appearance, but it is difficult to commercially obtain polytetrafluoroethylene having a particle size smaller than 0.1 μm. Further, the particle size larger than 0.6 μm may cause the surface appearance of the molded product to deteriorate. The number average molecular weight of the polytetrafluoroethylene used in the present invention is preferably $1\times10^4$ to $1\times10^7$, more preferably $2\times10^6$ to $9\times10^6$, and generally polytetrafluoroethylene having a high molecular weight is more preferred in terms of stability. Either powder or dispersion form can be used. The content of branched polytetrafluoroethylene in the coated branched PTFE, with respect to 100 parts by weight of the total weight of the coated branched PTFE, is preferably 20 to 60 parts by weight, more preferably 40 to 55 parts by weight, further preferably 47 to 53 parts by weight, particularly preferably 48 to 52 parts by weight, and most preferably 49 to 51 parts by weight. The proportion of branched polytetrafluoroethylene within this range may allow the branched polytetrafluoroethylene to achieve good dispersibility.

The content of component D, with respect to 100 parts by weight of component A, is 0.05 to 4 parts by weight, preferably 0.1 to 3.5 parts by weight, and more preferably 0.2 to 3 parts by weight. Further, when using component B-1 or component B-2 as component B, the content of component D, with respect to 100 parts by weight of component A, is preferably 0.05 to 2 parts by weight, more preferably 0.1 to 1.5 parts by weight, further preferably 0.2 to 1.2 parts by weight, and particularly preferably 0.2 to 1 part by weight. The content of component D less than the lower limit will cause insufficient flame retardancy, and that exceeding the upper limit will cause no suppression on the decrease in impact strength after a water exposure test in f1 rating certification.

(Other components)

(Component E: Impact modifier)

In the present invention, when component B-2 and component B-3 is used as component B, an impact modifier as component E is preferably used. As the impact modifier used as component E, a rubbery polymer (component E-1) or an aromatic vinyl-(hydrogenated) conjugated diene block copolymer (component E-2) is preferably used.

(Component E-1: Rubbery polymer)

The rubbery polymer used in the present invention refers to a rubber component copolymerized in one-stage or multiple-stage with a vinyl monomer or a mixture with the monomer.

Examples of the rubber component include polybutadiene, diene copolymers (e.g., styrene/butadiene random copolymers and block copolymers, acrylonitrile/butadiene copolymers, and copolymers of (meth)acrylic acid alkyl ester and butadiene, etc.), polyisoprene, copolymers of ethylene and α-olefins (e.g., ethylene/propylene random copolymers and block copolymers, ethylene/butene random copolymers and block copolymers, etc.), copolymers of ethylene and unsaturated carboxylic acid esters (e.g., ethylene/methacrylate copolymers, ethylene/butyl acrylate copolymers, etc.), copolymers of ethylene and aliphatic vinyl (e.g., ethylene/vinyl acetate copolymers, etc.), terpolymers of ethylene and propylene and nonconjugated diene (e.g., ethylene/propylene/hexadiene copolymers, etc.), acrylic rubbers (e.g., polybutyl acrylate, poly(2-ethylhexyl acrylate), copolymers of butyl acrylate and 2-ethylhexyl acrylate, etc.), and silicone rubbers (e.g., polyorganosiloxane rubbers, IPN-type rubbers consisting of a polyorganosiloxane rubber component and a polyalkyl (meth)acrylate rubber component; that is, rubbers having a structure in which the two rubber components are inseparably intertwined with each other, IPN type rubbers consisting of a polyorganosiloxane rubber component and a polyisobutylene rubber component, etc.). Among these, more preferred are those more likely to exhibit the effect, such as polybutadiene, diene copolymers, polyisoprene, acrylic rubbers, terpolymers of ethylene and propylene and non-conjugated diene, and silicone rubbers, and among these, diene copolymers are particularly preferred.

The weight average particle size of the rubber particles of the above rubber component is preferably 0.10 to 1.0 μm, more preferably 0.15 to 0.8 μm, and further preferably 0.20 to 0.5 μm. The weight average particle size of the rubber particles smaller than 0.1 μm may cause decrease in the impact improving effect by addition of the graft polymer, which is not preferable. Further, that exceeding 1.0 μm may cause poor dispersion state with the thermoplastic resin, which may result in decrease in impact strength etc., and thus is not preferable.

The weight average particle size of the rubber particles is a value measured using a transmission electron microscope. Specifically, a drop of rubbery polymer in an emulsion state is placed on a mesh for transmission electron microscopy measurement, dyed with osmium tetroxide or ruthenium tetroxide vapor, and then images of a sample of the dyed rubbery polymer were taken with a transmission electron microscope (TECNAI G2 manufactured by FEI, acceleration voltage 120 kv), and the weight average particle size was calculated from 200 rubber particles in the image using image processing software (Nexus NewQube).

Here, the diene polymer is a copolymer obtained by polymerizing so as to contain 1,3-butadiene of a main structural unit in an amount of preferably 50 to 100 wt%, more preferably 65 to 100 wt%, and further preferably 75 to 100 wt%, and a vinyl monomer copolymerizable therewith, typified by styrene, in an amount of preferably 50 to 0 wt%, more preferably 35 to 0 wt%, and further preferably 25 to 0 wt%. The amount of main structural unit, 1,3-butadiene, less than 50 wt% may cause insufficient impact properties, which is not preferable.

Examples of vinyl monomers used for component E-1 include aromatic vinyl monomers such as styrene, α-methylstyrene, p-methylstyrene, chlorostyrene, dibromostyrene, and tribromostyrene; alkyl methacrylates such as methyl methacrylate ethyl methacrylate, propyl methacrylate, and butyl methacrylate; and alkyl acrylates such as methyl acrylate, ethyl acrylate, propyl acrylate, butyl acrylate, and 2-ethylhexyl acrylate. In addition to the above monomers, vinyl ether monomer, vinylidene halide monomer, vinyl monomers having a glycidyl group such as glycidyl acrylate, etc. can be mentioned.

Further, among the vinyl monomers above, those which can also become a crosslinking monomer are copolymerizable with butadiene and vinyl monomers, and have two or more independent C=C bonds in the molecule, and examples thereof include aromatic polyfunctional vinyl compounds such as divinylbenzene and divinyltoluene; α,β-unsaturated carboxylic acid esters of polyhydric alcohols such as ethylene glycol dimethacrylate and 1,3-butanediol diacrylate, allyl esters of α,β-unsaturated carboxylic acids such as trimethacrylic esters or triacrylic esters, allyl acrylate and allyl methacrylate; di- or triallyl compounds such as diallyl phthalate, diallyl sebacate, and triallyl triazine. These vinyl monomers and crosslinking monomers each can be used singly or in combination of two or more.

Further, when forming the diene rubber component, a chain transfer agent (initiator) such as t-dodecyl mercaptan may be used in the polymerization reaction, if necessary. When preparing the latex, an enlargement agent is added to the diene rubber component to control the weight average particle size of the diene rubber component. Examples of the enlargement agents include inorganic salts such as sodium chloride, potassium chloride, sodium sulfate, magnesium sulfate, and aluminum sulfate, organic salts such as calcium acetate and magnesium acetate, inorganic acids such as sulfuric acid and hydrochloric acid, organic acids such as acetic acid and succinic acid, and organic acid anhydrides thereof, and carboxylic acid-containing polymer latex.

Preferred examples of rubbery polymers used in the present invention include styrenic polymers. Styrenic polymers have good moldability, appropriate fluidity and heat resistance, and are therefore preferred rubbery polymers to maintain a balance among these properties.

The above styrenic polymer is a polymer or copolymer of aromatic vinyl compounds in which a vinyl group or an

alkylethenyl group (vinyl group modified with an alkyl group) is bonded to a benzene ring, and a polymer obtained by copolymerizing the above aromatic vinyl compound with other vinyl monomers copolymerizable with the above aromatic vinyl compound and a rubber component, if necessary.

Examples of the aromatic vinyl compounds include styrene, α-methylstyrene, o-methylstyrene, p-methylstyrene, vinylxylene, ethylstyrene, dimethylstyrene, p-tert-butylstyrene, vinylnaphthalene, methoxystyrene, monobromostyrene, dibromostyrene, fluorostyrene, tribromostyrene, and styrene is particularly preferred.

Preferred examples of other vinyl monomers copolymerizable with the aromatic vinyl compound include vinyl cyanide compounds and (meth)acrylic acid ester compounds. Examples of vinyl cyanide compounds include acrylonitrile and methacrylonitrile, and acrylonitrile is particularly preferred. Examples of (meth)acrylic acid ester compounds include methyl (meth)acrylate, ethyl (meth)acrylate, propyl (meth)acrylate, isopropyl (meth)acrylate, butyl (meth)acrylate, amyl (meth)acrylate, hexyl (meth)acrylate, octyl (meth)acrylate, 2-ethylhexyl (meth)acrylate, cyclohexyl (meth)acrylate, dodecyl (meth)acrylate, octadecyl (meth)acrylate, phenyl (meth)acrylate, benzyl (meth)acrylate. Note that the notation "(meth)acrylate" includes both methacrylate and acrylate, and the notation "(meth)acrylic ester" includes both methacrylic ester and acrylic ester. Examples of particularly preferred (meth)acrylic acid ester compound include methyl methacrylate.

Examples of other vinyl monomers copolymerizable with aromatic vinyl compounds, excluding vinyl cyanide compounds and (meth)acrylic acid ester compounds, include epoxy group-containing methacrylic esters such as glycidyl methacrylate; maleimide monomers such as maleimide, N-methylmaleimide, N-phenylmaleimide; α,β-unsaturated carboxylic acids such as acrylic acid, methacrylic acid, maleic acid, maleic anhydride, phthalic acid, itaconic acid, and anhydrides thereof.

Examples of the rubbery polymers copolymerizable with the aromatic vinyl compound include polybutadiene, polyisoprene, diene copolymers (e.g., styrene/butadiene random copolymers and block copolymers, acrylonitrile-butadiene copolymers, and copolymers of (meth)acrylic acid alkyl ester and butadiene, etc.), copolymers of ethylene and α-olefins (e.g., ethylene/propylene random copolymers and block copolymers, ethylene/butene random copolymers and block copolymers, etc.), copolymers of ethylene and unsaturated carboxylic acid esters (e.g., ethylene/methacrylate copolymers, ethylene/butyl acrylate copolymers, etc.), copolymers of ethylene and aliphatic vinyl (e.g., ethylene/vinyl acetate copolymers, etc.), terpolymers of ethylene and propylene and nonconjugated diene (e.g., ethylene/propylene/-hexadiene copolymers, etc.), acrylic rubbers (e.g., polybutyl acrylate, poly(2-ethylhexyl acrylate), copolymers of butyl acrylate and 2-ethylhexyl acrylate, etc.), and silicone rubbers (e.g., polyorganosiloxane rubbers, IPN-type rubbers consisting of a polyorganosiloxane rubber component and a polyalkyl (meth)acrylate rubber component; that is, rubbers having a structure in which the two rubber components are inseparably intertwined with each other, IPN type rubbers consisting of a polyorganosiloxane rubber component and a polyisobutylene rubber component, etc.). Among these, more preferred are those more likely to exhibit the effect, such as polybutadiene, polyisoprene, and diene copolymers, and polybutadiene is particularly preferred.

Specific examples of the above styrenic polymers include resins composed of styrene polymers such as HIPS resin, ABS resin, AES resin, ASA resin, MBS resin, MABS resin, MAS resin, and SMA resin; styrenic thermoplastic elastomers (e.g., (hydrogenated) styrene-butadiene-styrene copolymer, (hydrogenated) styrene-isoprene-styrene copolymer, etc.). Note that the notation "(hydrogenated)" includes both non-hydrogenated resins and hydrogenated resins.

Among these, more preferred are rubber-reinforced styrenic polymers such as HIPS resin, ABS resin, AES resin, ASA resin, MBS resin, MABS resin, MAS resin, and styrenic thermoplastic elastomer.

As mentioned above, among these, those having a rubber component of a diene copolymer are preferred, and ABS resin and MBS resin are particularly preferred. ABS resin and MBS resin preferably exhibit the effects of the present invention in that they have good impact resistance. Here, AES resin is a copolymer resin mainly consisting of acrylonitrile, ethylene-propylene rubber, and styrene, ASA resin is a copolymer resin mainly consisting of acrylonitrile, styrene, and acrylic rubber, and MABS resin is a copolymer resin mainly consisting of methyl methacrylate, acrylonitrile, butadiene, and styrene, MAS resin is a copolymer resin mainly consisting of methyl methacrylate, acrylic rubber, and styrene, and SMA resin is a copolymer resin mainly consisting of styrene and maleic anhydride (MA).

Note that the above styrenic resin may be those having high stereoregularity, such as syndiotactic polystyrene, which is produced by using a catalyst such as a metallocene catalyst during production. Further, in some cases, there can be used polymers, copolymers, and block copolymers with narrow molecular weight distribution, and polymers and copolymers with high stereoregularity, obtained by methods such as anionic living polymerization and radical living polymerization.

Among these, acrylonitrile-butadiene-styrene copolymer resin (ABS resin) is preferred. In addition, styrenic polymers can also be used as a mixture of two or more.

ABS resin is a mixture of a thermoplastic graft copolymer obtained by graft polymerizing a vinyl cyanide compound and an aromatic vinyl compound to a diene rubber component, and a copolymer of a vinyl cyanide compound and an aromatic vinyl compound. The diene rubber component forming this ABS resin, using rubber having a glass transition temperature of -30°C or less, such as polybutadiene, polyisoprene, and styrene-butadiene copolymer, is contained at a proportion, with respect to 100 wt% of the ABS resin component, of preferably 5 to 80 wt%, more preferably 8

to 50 wt%, and particularly preferably 10 to 30 wt%. Acrylonitrile is particularly preferably used as the vinyl cyanide compound to be grafted onto the diene rubber component. Further, as the aromatic vinyl compound to be grafted onto the diene rubber component, styrene and α-methylstyrene are particularly preferably used. The proportion of the component grafted onto the diene rubber component is preferably 95 to 20 wt%, and particularly preferably 50 to 90 wt%, with respect to 100 wt% of the ABS resin component. Further, the amount of vinyl cyanide compound and the aromatic vinyl compound, with respect to 100 wt% of the total amount of the vinyl cyanide compound and the aromatic vinyl compound, is preferably 5 to 50 wt% and 95 to 50 wt%, respectively. Further, the components grafted onto the diene rubber component can be used by being mixed as a part with methyl (meth)acrylate, ethyl acrylate, maleic anhydride, N-substituted maleimide, etc., and the content ratio of these with respect to the ABS resin component is preferably 15 wt% or less. Further, conventionally known various types of goods used in the reaction, such as initiators, chain transfer agents, emulsifiers, etc. can be used as necessary.

The rubber particle size in ABS resin is preferably 0.1 to 5.0 μm, more preferably 0.15 to 1.5 μm, and particularly preferably 0.2 to 0.8 μm. The rubber particle size distribution can be either mono-dispersed or multi-dispersed with two or more peaks, and further, the morphology of the rubber particles may be a single phase and also a salami structure by having an occluded phase around the rubber particles.

Further, ABS resins are well known to contain vinyl cyanide compounds and aromatic vinyl compounds that are not grafted onto diene rubber components, and the ABS resin of the present invention also may contain free polymer component generated during polymerization. The copolymer consisting of the free vinyl cyanide compound and the aromatic vinyl compound has reduced viscosity, as determined by the method described above (at 30°C), of preferably 0.2 to 1.0 dl/g and more preferably 0.3 to 0.7 dl/g.

The ratio of the grafted vinyl cyanide compound and aromatic vinyl compound expressed as a grafting ratio (wt%) with respect to the diene rubber component is preferably 20 to 200% and more preferably 20 to 70%.

The above ABS resins may be produced by any method such as bulk polymerization, suspension polymerization, and emulsion polymerization, and those produced by bulk polymerization are particularly preferred. Further, typical examples of such bulk polymerization methods include the continuous bulk polymerization method (so-called Toray method) described in Journal of Chemical Engineering of Japan Vol. 48, No. 6, p. 415 (1984), and the continuous bulk polymerization method (so-called Mitsui Toatsu method) described in Journal of Chemical Engineering of Japan Vol. 53, No. 6, p.423 (1989). Any ABS resin can be preferably used as the ABS resin of the present invention. Further, the copolymerization method may be one-stage copolymerization or multi-stage copolymerization. Further, ABS resin obtained by blending a vinyl compound polymer obtained by separately copolymerizing an aromatic vinyl compound and a vinyl cyanide component with the ABS resin obtained by the above production method can also be preferably used.

The ABS resin more preferably has a reduced amount of alkali (earth) metal from the viewpoint of good thermal stability and hydrolysis resistance. The amount of alkali (earth) metal in the styrenic resin is preferably less than 100 ppm, more preferably less than 80 ppm, further preferably less than 50 ppm, and particularly preferably less than 10 ppm. ABS resin produced by bulk polymerization is preferably used also from the above point of view. Further, in connection with the above good thermal stability and hydrolysis resistance, when an emulsifier is used in the ABS resin, the emulsifier is preferably a sulfonate, and more preferably an alkylsulfonate. Further, when a coagulant is used, the coagulant is preferably sulfuric acid or an alkaline earth metal salt of sulfuric acid.

In addition, other examples of rubbery polymer preferable for the present invention include that not containing a styrene component. A polymer not containing a styrene component has good moldability, moderate fluidity and heat resistance, and excellent chemical resistance, and is a rubbery polymer preferable to maintain a balance among these properties. Examples of the polymer not containing a styrene component include a polymer obtained by copolymerizing a non-styrene vinyl monomer and a rubber component not containing a styrene component.

Preferred examples of vinyl monomers of non-styrene include vinyl cyanide compounds and (meth)acrylic acid ester compounds. Examples of vinyl cyanide compounds include acrylonitrile and methacrylonitrile, and acrylonitrile is particularly preferred. Examples of (meth)acrylic acid ester compounds include methyl (meth)acrylate, ethyl (meth) acrylate, propyl (meth)acrylate, isopropyl (meth)acrylate, butyl (meth)acrylate, amyl (meth)acrylate, hexyl (meth)acrylate, octyl (meth)acrylate, 2-ethylhexyl (meth)acrylate, cyclohexyl (meth)acrylate, dodecyl (meth)acrylate, octadecyl (meth) acrylate, phenyl (meth)acrylate, and benzyl (meth)acrylate. Note that the notation "(meth)acrylate" includes both methacrylate and acrylate, and the notation "(meth)acrylic ester" includes both methacrylic ester and acrylic ester. Examples of particularly preferred (meth)acrylic acid ester compound include methyl methacrylate.

Examples of other vinyl monomers excluding vinyl cyanide compounds and (meth)acrylic ester compounds include epoxy group-containing methacrylic esters such as glycidyl methacrylate; maleimide monomers such as maleimide, N-methylmaleimide, N-phenylmaleimide; α,β-unsaturated carboxylic acids such as acrylic acid, methacrylic acid, maleic acid, maleic anhydride, phthalic acid, itaconic acid, and anhydrides thereof.

Examples of the rubber component not containing styrene include polybutadiene, polyisoprene, and diene copolymers not containing styrene (e.g., acrylonitrile/butadiene copolymers, copolymers of (meth)acrylic acid alkyl ester and butadiene, etc.), copolymers of ethylene and α-olefins (e.g., ethylene/propylene random copolymers and block

copolymers, ethylene/butene random copolymers and block copolymers, etc.), copolymers of ethylene and unsaturated carboxylic acid esters (e.g., ethylene/methacrylate copolymers, ethylene/butyl acrylate copolymers, etc.), copolymers of ethylene and aliphatic vinyl (e.g., ethylene/vinyl acetate copolymers, etc.), terpolymers of ethylene and propylene and nonconjugated diene (e.g., ethylene/propylene/hexadiene copolymers, etc.), acrylic rubbers (e.g., polybutyl acrylate, poly(2-ethylhexyl acrylate), and copolymers of butyl acrylate and 2-ethylhexyl acrylate, etc.), and silicone rubbers (e.g., polyorganosiloxane rubbers, IPN-type rubbers consisting of a polyorganosiloxane rubber component and a polyalkyl (meth)acrylate rubber component; that is, rubbers having a structure in which the two rubber components are inseparably intertwined with each other, IPN type rubbers consisting of a polyorganosiloxane rubber component and a polyisobutylene rubber component, etc.). Among these, more preferred are those more likely to exhibit the effect, such as polybutadiene, polyisoprene, diene copolymers, acrylic rubbers, and silicone rubbers, and polybutadiene is particularly preferred.

The weight average particle size of the rubber particles of the rubbery polymer not containing a styrene component is preferably 0.10 to 1.0 μm, more preferably 0.15 to 0.8 μm, and further preferably 0.20 to 0.5 μm. The weight average particle size of the rubber particles smaller than 0.1 μm will cause decrease in the impact improving effect by addition of the graft polymer, which is not preferable. Further, that exceeding 1.0 μm will cause poor dispersion state with the thermoplastic resin, which may result in decrease in impact etc., and thus is not preferable.

The weight average particle size of the rubber particles is a value measured using a transmission electron microscope. Specifically, a drop of rubbery polymer in an emulsion state is placed on a mesh for transmission electron microscopy measurement, dyed with osmium tetroxide or ruthenium tetroxide vapor, and then images of a sample of the dyed rubbery polymer were taken with a transmission electron microscope (FEI TECNAI G2, acceleration voltage 120 kv), and the weight average particle size was calculated from 200 rubber particles in the image using image processing software (Nexus NewQube).

Here, the diene rubber component is a copolymer obtained by polymerizing so as to contain 1,3-butadiene of a main structural unit in an amount of preferably 50 to 100 wt%, more preferably 65 to 100 wt%, and further preferably 75 to 100 wt%, and a vinyl monomer copolymerizable therewith, typified by methyl methacrylate, in an amount of preferably 50 to 1 wt%, more preferably 35 to 1 wt%, and further preferably 25 to 1 wt%. The amount of main structural unit, 1,3-butadiene, less than 50 wt% may cause insufficient impact properties, which is not preferable.

Examples of vinyl monomers typified by methyl methacrylate used to form this diene rubber component include alkyl methacrylates such as methyl methacrylate, ethyl methacrylate, propyl methacrylate, and butyl methacrylate; and alkyl acrylates such as methyl acrylate, ethyl acrylate, propyl acrylate, butyl acrylate, and 2-ethylhexyl acrylate. In addition to the above monomers, vinyl ether monomer, vinylidene halide monomer, vinyl monomer having a glycidyl group such as glycidyl acrylate, etc. can be mentioned.

Further, among the vinyl monomers above, those which can also become a crosslinking monomer are copolymerizable with butadiene and vinyl monomers, and have two or more independent C=C bonds in the molecule, and examples thereof include aromatic polyfunctional vinyl compounds such as divinylbenzene and divinyltoluene; α,β-unsaturated carboxylic acid esters of polyhydric alcohols such as ethylene glycol dimethacrylate and 1,3-butanediol diacrylate, allyl esters of α,β-unsaturated carboxylic acids such as trimethacrylic esters or triacrylic esters, allyl acrylate and allyl methacrylate; di- or triallyl compounds such as diallyl phthalate, diallyl sebacate, and triallyl triazine.

The vinyl monomers and crosslinking monomers each can be used singly or in combination of two or more.

Further, when forming the diene rubber component, a chain transfer agent (initiator) such as t-dodecyl mercaptan may be used in the polymerization reaction, if necessary. When preparing the latex, an enlargement agent is added to the diene rubber component to control the weight average particle size of the diene rubber component. Examples of the enlargement agents include inorganic salts such as sodium chloride, potassium chloride, sodium sulfate, magnesium sulfate, and aluminum sulfate, organic salts such as calcium acetate and magnesium acetate, inorganic acids such as sulfuric acid and hydrochloric acid, organic acids such as acetic acid and succinic acid, and organic acid anhydrides thereof, and carboxylic acid-containing polymer latex.

The rubbery polymer not containing a styrene component used in the present invention can be prepared by graft polymerizing in one- or multiple-stages an alkyl (meth)acrylate monomer, or a mixture of an alkyl (meth)acrylate and other monomers for copolymerization to a rubbery component latex having the above-mentioned composition.

That is, examples of the monomers used in the graft polymerization include alkyl (meth)acrylates such as methyl methacrylate and ethyl methacrylate, and alkyl acrylates such as methyl acrylate, ethyl acrylate, and butyl acrylate, as well as styrene, α-methylstyrene, various styrenes such as halogen-substituted and/or alkyl-substituted styrenes, and vinyl monomers having a glycidyl group such as glycidyl acrylate, glycidyl methacrylate, and allyl glycidyl ether. Further, the vinyl monomer that becomes the crosslinking monomer described above can also be used in combination with the vinyl monomer. When used in combination with alkyl (meth)acrylate, the vinyl monomers and crosslinking monomers each can be used alone or in combination of two or more.

In graft polymerization, the amount of the monomer or monomer mixture used, with respect to the amount of the diene rubber component latex, is preferably 60 to 10 parts by weight against 40 to 90 parts by weight, more preferably 58 to 15 parts by weight against 42 to 85 parts by weight, and further preferably 55 to 20 parts by weight against 45 to 80 parts by

weight. Further, when using a monomer mixture, the amount of the alkyl (meth)acrylate monomer is preferably at least 25 wt% or more and more preferably 40 wt% or more with respect to the total amount of the monomer mixture.

In addition, the graft polymerization itself can be performed in one-stage by adding all the monomer or monomer mixture at once, or also in multiple stage by adding the monomer or monomer mixture dividedly in two or more times.

The graft polymerization is performed using emulsion polymerization method. When performing this graft copolymerization, the following polymerization initiators can be used: persulfates such as potassium persulfate, ammonium persulfate, and sodium persulfate; organic peroxides such as t-butyl hydroperoxide, cumene hydroperoxide, benzoyl peroxide, lauroyl peroxide, diisopropylbenzene hydroperoxide, azo compounds such as azobisisobutyronitrile and azobisisovaleronitrile. In addition, above-mentioned oxidizing agent compound and sulfite, hydrogen sulfite, thiosulfate, first metal salt, sodium formaldehyde sulfoxylate, dextrose, etc. can be combined and be used also as a redox initiator.

The reaction temperature in graft copolymerization can be appropriately selected, for example, in the range of 40 to 80°C, depending on the type of polymerization initiator used. Further, in the emulsion polymerization, a known emulsifier can be appropriately used as an emulsifier for the rubbery polymer latex.

To a reaction liquid of the obtained rubbery polymer not containing a styrene component, an appropriate antioxidant is added, additives are added, if necessary, or not added, and the reaction liquid is spray-dried (directly pulverized), or, a coagulant, including an acid such as sulfuric acid, hydrochloric acid, and phosphoric acid and a salt such as calcium chloride and sodium chloride, is appropriately added to the reaction liquid for coagulation and the reaction liquid is further heat-treated for solidification. Thereafter, the reaction liquid is dehydrated, washed, and finally dried and pulverized for use. (Component E-2: Aromatic vinyl-(hydrogenated) conjugated diene type block copolymer)

The aromatic vinyl-(hydrogenated) conjugated diene type block copolymer used as component E-2 is generally used for improving the impact resistance of the resin composition, and examples thereof include an A-B-A type triblock copolymer and an A-B type diblock copolymer.

Examples of the A-B type and A-B-A type block copolymer rubber additives include thermoplastic rubbers containing one or two aromatic vinyl blocks (usually styrene blocks) and a rubber block (e.g., a partially hydrogenated butadiene block). Mixtures of these triblock and diblock copolymers are particularly useful in the present invention.

Examples of the above-mentioned aromatic vinyl monomers include aromatic vinyls such as styrene and $\alpha$-methylstyrene. In addition to aromatic vinyl monomers, those usable here include methacrylic acid alkyl esters such as methyl methacrylate and ethyl methacrylate; acrylic acid alkyl esters such as ethyl acrylate and n-butyl acrylate; unsaturated nitriles such as acrylonitrile and methacrylonitrile; vinyl ethers such as methyl vinyl ether and butyl vinyl ether; vinyl halides such as vinyl chloride and vinyl bromide; vinylidene halides such as vinylidene chloride and vinylidene bromide; vinyl monomers having a glycidyl group such as glycidyl acrylate, glycidyl methacrylate, allyl glycidyl ether, and ethylene glycol glycidyl ether.

Further, those also usable in combination include aromatic polyfunctional vinyl compounds such as divinylbenzene and divinyltoluene; polyhydric alcohols such as ethylene glycol dimethacrylate and 1,3-butanediol diacrylate; allyl carboxylic acid esters such as trimethacrylic ester, triacrylic ester, allyl acrylate, and allyl methacrylate; and crosslinking monomers of diallyl and triallyl compounds such as diallyl phthalate, diallyl sebacate, and triallyl triazine.

Note that these vinyl monomers and crosslinking monomers can be used alone or in combination of two or more.

A preferable method for producing an aromatic vinyl-(hydrogenated) conjugated diene type block copolymer is disclosed, for example, in JP-A-8-301929. Typical examples of aromatic vinyl-(hydrogenated) conjugated diene block copolymers are, though not particularly limited to, obtained by hydrogenating the butadiene polymer block and isoprene polymer block in each SBR (styrene-butadiene block copolymer), SBS (styrene-butadiene-styrene block copolymer), SIS (styrene-isoprene-styrene block copolymer); and generally include SEBS (polystyrene-poly(ethylene/butylene) block-polystyrene copolymer), SEPS (polystyrene-poly(ethylene/propylene) block-polystyrene copolymer), SEP (polystyrene-poly(ethylene/propylene) block copolymer), and SEEPS (polystyrene-poly(ethylene-ethylene/propylene) block-polystyrene copolymers).

Further, also can be used the above-mentioned block copolymer modified with a modification compound having one or more functional groups selected from a hydroxyl group, an amide group, an amino group, a carboxylic acid group, an acid anhydride group, a glycidyl group, a mercapto group, and derivatives thereof.

A preferable aromatic vinyl-(hydrogenated) conjugated diene type block copolymer has a weight ratio of aromatic vinyl compound to (hydrogenated) conjugated diene of 5/95 to 95/5 and preferably 10/90 to 90/10, and further, is composed of a hydrogenated block copolymer in which hydrogenated are 50% or more of the unsaturated bonds based on the conjugated diene of the block copolymer. Here, the weight ratio outside the above range of 5/95 to 95/5 (vinyl aromatic compound/conjugated diene, both constituting the block copolymer) will cause loss of the effect on improving impact resistance of the present invention. In contrast, the hydrogenation ratio below the above range will cause significant decrease in the heat resistance and rigidity of the resin composition.

The above A-B type and A-B-A type block copolymers are commercially available from a number of sources, including those available from Kraton Polymers under the trade name KRATON and from Kuraray Co., Ltd. under the trade name SEPTON.

The content of component E, with respect to 100 parts by weight of component A, is preferably 0.1 to 50.0 parts by weight, more preferably 1.0 to 48.0 parts by weight, and further preferably 2.5 to 45.0 parts by weight. The content of component E less than the lower limit may cause insufficient impact resistance, and that exceeding the upper limit may cause significant decrease in the flame retardancy.

(Component F; Acid-modified polyolefin resin)

In the present invention, particularly when component B-3 is used as component B, acid-modified polyolefin resin of component F is preferably used. As the acid-modified polyolefin resin used as component F in the present invention, an olefin wax having a carboxyl group and/or a derivative group thereof is preferably used. Examples of carboxyl group derivatives include carboxylic anhydride groups, metal salts of carboxylic acids, alkyl esters or aryl esters of carboxylic acids. The carboxyl group and/or derivative group thereof may be bonded to any part of the olefin wax, and has a concentration of, though not particularly limited, preferably 0.1 to 6 meq per 1 g of olefin wax. The concentration less than 0.1 meq/g will cause insufficient improvement on rigidity and impact resistance, and that more than 6 meq/g will cause deterioration of thermal stability to the olefin wax itself, which is not preferable.

Commercial products of the olefin waxes include, for example, Diacama-DC30M (manufactured by Mitsubishi Chemical Corporation), Licolub CE 2 TP (manufactured by Clariant Corporation), and high wax acid-treated types 2203A and 1105A (manufactured by Mitsui Petrochemical Industries, Ltd.), EXL3808 (manufactured by Dow Chemical Co., Ltd.), and oxidized paraffin (manufactured by Nippon Seiro Co., Ltd.). In the present invention, olefin waxes can be used alone or as a mixture of two or more.

The content of component F, with respect to 100 parts by weight of component A, is preferably 0.01 to 20.0 parts by weight, more preferably 0.1 to 18.0 parts by weight, further preferably 0.5 to 15.0 parts by weight. The component F less than the lower limit may cause decrease in impact resistance and significant deterioration of appearance due to silver streak, and that exceeding the upper limit may cause significant decrease in flame retardancy.

(Component G; Phosphorus stabilizer)

The flame-retardant polycarbonate resin composition of the present invention preferably contains a phosphorus stabilizer as component G. Containing the phosphorus stabilizer will allow suppression of thermal decomposition during processing and thus achievement of good impact strength and flame retardancy.

Examples of the phosphorus stabilizer include phosphorous acid, phosphoric acid, phosphonous acid, phosphonic acid, esters thereof, and tertiary phosphine.

Specific examples of the phosphite compounds include triphenyl phosphite, tris(nonylphenyl) phosphite, tridecyl phosphite, trioctyl phosphite, trioctadecyl phosphite, didecylmonophenyl phosphite, dioctylmonophenyl phosphite, diisopropyl monophenyl phosphite, monobutyl diphenyl phosphite, monodecyl diphenyl phosphite, monooctyldiphenyl phosphite, tris(diethylphenyl) phosphite, tris(di-iso-propylphenyl) phosphite, tris(di-n-butylphenyl) phosphite, tris(2,4-di-tert-butylphenyl) phosphite, tris(2,6-di-tert-butylphenyl) phosphite, distearylpentaerythritol diphosphite, bis(2,4-di-tert-butylphenyl)pentaerythritol diphosphite, bis(2,6-di-tert-butyl-4-methylphenyl)pentaerythritol diphosphite, bis(2,6-di-tert-butyl-4-ethylphenyl) pentaerythritol diphosphite, bis{2,4-bis(1-methyl-1-phenylethyl)phenyl}pentaerythritol diphosphite, phenylbisphenol A pentaerythritol diphosphite, bis(nonylphenyl) pentaerythritol diphosphite, and dicyclohexylpentaerythritol diphosphite.

Further, other phosphite compounds having a cyclic structure by reacting with dihydric phenols can also be used. Examples thereof include 2,2'-methylenebis(4,6-di-tert-butylphenyl)(2,4-di-tert-butylphenyl)phosphite, 2,2'-methylenebis(4,6-di-tert-butylphenyl)(2-tert-butyl-4-methylphenyl)phosphite, and 2,2-methylenebis(4,6-di-tert-butylphenyl)octyl phosphite.

Examples of phosphate compounds include tributyl phosphate, trimethyl phosphate, tricresyl phosphate, triphenyl phosphate, trichlorophenyl phosphate, triethyl phosphate, diphenyl cresyl phosphate, diphenyl monoorthoxenyl phosphate, tributoxyethyl phosphate, dibutyl phosphate, dioctyl phosphate, and diisopropyl phosphate, and preferred are triphenyl phosphate and trimethyl phosphate.

Examples of phosphonite compounds include tetrakis(2,4-di-tert-butylphenyl)-4,4'-biphenylene diphosphonite, tetrakis(2,4-di-tert-butylphenyl)-4,3'-biphenylene diphosphonite, tetrakis(2,4-di-tert-butylphenyl)-3,3'-biphenylene diphosphonite, tetrakis(2,6-di-tert-butylphenyl)-4,4'-biphenylene diphosphonite, tetrakis(2,6-di-tert-butylphenyl)-4,3'-biphenylene diphosphonite, tetrakis(2,6-di-tert-butylphenyl)-3,3'-biphenylene diphosphonite, bis(2,4-di-tert-butylphenyl)-4-phenyl-phenylphosphonite, bis(2,4-di-tert-butylphenyl)-3-phenyl-phenylphosphonite, bis(2,6-di-n-butylphenyl)-3-phenyl-phenylphosphonite, bis(2,6-di-tert-butylphenyl)-4-phenyl-phenylphosphonite, and bis(2,6-di-tert-butylphenyl)-3-phenyl-phenylphosphonite; preferred are tetrakis(di-tert-butylphenyl)-biphenylene diphosphonite, bis(di-tert-butylphenyl)-phenyl-phenylphosphonite, and more preferred are tetrakis(2, 4-di-tert-butylphenyl)-biphenylene diphosphonite and bis(2,4-di-tert-butylphenyl)-phenyl-phenylphosphonite. The above phosphonite compounds can be used in

combination with a phosphite compound having an aryl group in which two or more alkyl groups are substituted, and are preferable.

Examples of the phosphonate compound include dimethyl benzenephosphonate, diethyl benzenephosphonate, and dipropyl benzenephosphonate.

Examples of tertiary phosphine include triethylphosphine, tripropylphosphine, tributylphosphine, trioctylphosphine, triamylphosphine, dimethylphenylphosphine, dibutylphenylphosphine, diphenylmethylphosphine, diphenyloctylphosphine, triphenylphosphine, tri-p-tolylphosphine, trinaphthylphosphine, and diphenylbenzylphosphine. A particularly preferred tertiary phosphine is triphenylphosphine.

The above-mentioned phosphorus stabilizers can be used alone, and also as a mixture of two or more. Among the above phosphorus stabilizers, phosphonite compounds or phosphite compounds represented by the following general formula (13) are preferred.

[Chem. 15]

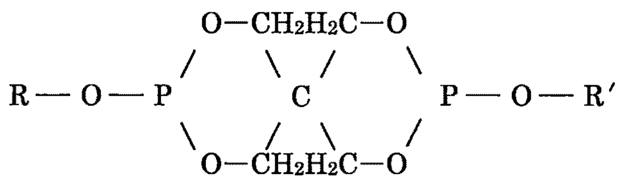

...(13)

(Wherein, R and R' may be the same or different from each other, and represent an alkyl group having 6 to 30 carbon atoms or an aryl group having 6 to 30 carbon atoms.)

As mentioned above, the phosphonite compound is preferably tetrakis(2,4-di-tert-butylphenyl)-biphenylene diphosphonite, and the stabilizer containing the phosphonite as a main component is commercially available as Sandostab P-EPQ (trademark, manufactured by Clariant) and Irgafos P-EPQ (trademark, manufactured by CIBA SPECIALTY CHEMICALS), both of which can be used.

Further, among the above formula (7), more preferable phosphite compounds include distearyl pentaerythritol diphosphite, bis(2,4-di-tert-butylphenyl)pentaerythritol diphosphite, bis(2,6-di-tert-butyl-4-methylphenyl)pentaerythritol diphosphite, and bis{2,4-bis(1-methyl-1-phenylethyl)phenyl}pentaerythritol diphosphite.

Distearyl pentaerythritol diphosphite is commercially available as ADEKASTAB PEP-8 (trademark, manufactured by ADEKA CORPORATION) and JPP681S (trademark, manufactured by Johoku Chemical Co., Ltd.), and both can be used. Bis(2,4-di-tert-butylphenyl)pentaerythritol diphosphite is commercially available as Songnox 6260W (trademark, manufactured by Song Wong), Alkanox P-24 (trademark, manufactured by Great Lakes), Ultranox P626 (trademark, manufactured by GE Specialty Chemicals), Doverphos S-9432 (trademark, manufactured by Dover Chemical), and Irgaofos 126 and 126FF (trademark, manufactured by CIBA SPECIALTY CHEMICALS), etc., and all of them can be used. Bis(2,6-di-tert-butyl-4-methylphenyl)pentaerythritol diphosphite is commercially available as ADEKASTAB PEP-36 (trademark, manufactured by ADEKA Corporation) and is easily used. Bis{2,4-bis(1-methyl-1-phenylethyl)phenyl } pentaerythritol diphosphite is available as ADEKASTAB PEP-45 (trademark, manufactured by ADEKA Corporation) and Doverphos S-9228 (trademark, Dover Chemical Corporation), and both can be used.

The above phosphorus stabilizers can be used alone or in combination of two or more. The content of the phosphorus stabilizer of component G, with respect to 100 parts by weight of component A, is preferably 0.001 to 1 part by weight, more preferably 0.01 to 0.9 part by weight, and further preferably 0.05 to 0.8 part by weight. The content less than the lower limit will exhibit no effect of suppressing thermal decomposition during processing and thus may cause decrease in impact strength, and that exceeding the upper limit may cause no suppression on the decrease in impact strength after a water exposure test in UL746C f1 rating certification.

(Component H; Ultraviolet absorber)

The flame-retardant polycarbonate resin composition of the present invention can contain an ultraviolet absorber as component H. Examples of benzophenone-based ultraviolet absorbers include 2,4-dihydroxybenzophenone, 2-hydroxy-4-methoxybenzophenone, 2-hydroxy-4-octoxybenzophenone, 2-hydroxy-4-benzyloxybenzophenone, 2-hydroxy-4-methoxy-5-sulfoxybenzophenone, 2-hydroxy-4-methoxy-5-sulfoxytrihydride benzophenone, 2,2'-dihydroxy-4-methoxybenzophenone, 2,2',4,4'-tetrahydroxybenzophenone, 2,2'-dihydroxy-4,4'-dimethoxybenzophenone, 2,2'-dihydroxy-4,4'-dimethoxy-5-sodium sulfoxybenzophenone, bis(5-benzoyl-4-hydroxy-2-methoxyphenyl)methane, 2-hydroxy-4-n-dodecyloxybenzophenone, and 2-hydroxy-4-methoxy-2'-carboxybenzophenone.

Examples of benzotriazole-based compounds include 2-(2-hydroxy-5-methylphenyl)benzotriazole, 2-(2-hydroxy-5-tert-octylphenyl)benzotriazole, 2-(2-hydroxy-3,5-dicumylphenyl)phenylbenzotriazole, 2-(2-hydroxy-3-tert-butyl-5-methylphenyl)-5-chlorobenzotriazole, 2,2'-methylenebis[4-(1,1,3,3-tetramethylbutyl)-6-(2H-benzotriazol-2-yl)phenol], 2-(2-hydroxy-3,5-di-tert-butylphenyl)benzotriazole, 2-(2-hydroxy-3,5-di-tert-butylphenyl)-5-chlorobenzotriazole, 2-(2-hydroxy-3,5-di-tert-amylphenyl)benzotriazole, 2-(2-hydroxy-5-tert-octylphenyl)benzotriazole, 2-(2-hydroxy-5-tert-butylphenyl)benzotriazole, 2-(2-hydroxy-4-octoxyphenyl)benzotriazole, 2,2'-methylenebis(4-cumyl-6-benzotriazolphenyl), 2,2'-p-phenylenebis(1,3-benzoxazin-4-one), and 2-[2-hydroxy-3-(3,4,5,6-tetrahydrophthalimidomethyl)-5-methylphenyl]benzotriazole; and polymers having a 2-hydroxyphenyl-2H-benzotriazole skeleton such as a copolymer of 2-(2'-hydroxy-5-methacryloxyethylphenyl)-2H-benzotriazole and a vinyl monomer copolymerizable with the monomer and a copolymer of 2-(2'-hydroxy-5-acryloxyethylphenyl)-2H-benzotriazole and a vinyl monomer copolymerizable with the monomer.

Examples of hydroxyphenyltriazine-based compounds include 2-(4,6-diphenyl-1,3,5-triazin-2-yl)-5-hexyloxyphenol, 2-(4,6-diphenyl-1,3,5-triazin-2-yl)-5-methyloxyphenol, 2-(4,6-diphenyl-1,3,5-triazin-2-yl)-5-ethyloxyphenol, 2-(4,6-diphenyl)-1,3,5-triazin-2-yl)-5-propyloxyphenol, and 2-(4,6-diphenyl-1,3,5-triazin-2-yl)-5-butyloxyphenol. Further, examples of compounds, obtained by substituting the phenyl group in the above exemplified compounds with a 2,4-dimethylphenyl group, include compounds such as 2-(4,6-bis(2,4-dimethylphenyl)-1,3,5-triazin-2-yl)-5-hexyloxyphenol.

Examples of cyclic imino esters include 2,2'-p-phenylenebis(3,1-benzoxazin-4-one), 2,2'-m-phenylenebis(3,1-benzoxazin-4-one), and 2,2'-p,p'-diphenylenebis(3,1-benzoxazin-4-one).

Examples of cyanoacrylates include 1,3-bis-[(2'-cyano-3',3'-diphenylacryloyl)oxy]-2,2-bis[(2-cyano-3,3-diphenylacryloyl)oxy]methyl)propane, and 1,3-bis-[(2-cyano-3,3-diphenylacryloyl)oxy]benzene.

Further, the above-mentioned ultraviolet absorber may have a structure of a monomer compound capable of radical polymerization to copolymerize the ultraviolet absorbing monomer and/or light-stabilizing monomer with a monomer such as alkyl (meth)acrylate to form a polymer-type ultraviolet absorber. Preferred examples of the ultraviolet absorbing monomer include compounds that have a (meth)acrylic acid ester containing the following skeletons in the ester substituent such as a benzotriazole skeleton, a benzophenone skeleton, a triazine skeleton, a cyclic imino ester skeleton, and a cyanoacrylate skeleton.

Among the above compounds, compounds represented by any of the following formulas (14), (15) and (16) are more preferably used in the present invention.

[Chem. 16]

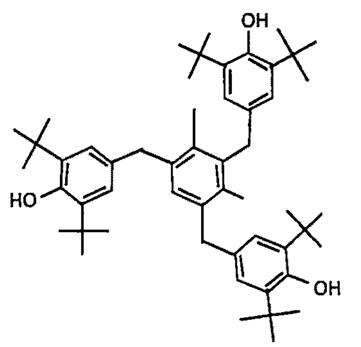

··· (1 4)

[Chem. 17]

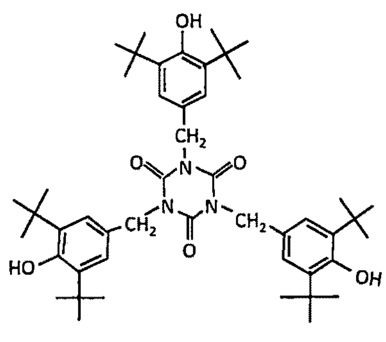

··· (1 5)

[Chem. 18]

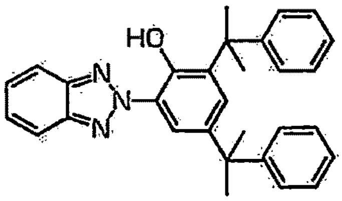

··· (1 6)

The above ultraviolet absorbers can be used alone or in combination of two or more.

The content of the ultraviolet absorber, with respect to 100 parts by weight of component A, is preferably 0.01 to 15 parts by weight, more preferably 0.05 to 12 parts by weight, and further preferably 0.1 to 10 parts by weight. The content of the ultraviolet absorber less than the lower limit may cause no suppression on the decrease in impact strength after a water exposure test in UL746C f1 rating certification, and that more than the upper limit may cause poor appearance and deterioration of physical properties due to gas generation.

(Other additives)

(i) Phenolic stabilizer

The resin composition of the present invention can contain a phenolic stabilizer. Phenolic stabilizers generally include hindered phenol, semi-hindered phenol, and less-hindered phenol compounds, and hindered phenol compounds are particularly preferably used from the viewpoint of applying heat-stabilizing prescription to polypropylene resins. Examples of the hindered phenol compounds include α-tocopherol, butylated hydroxytoluene, sinapyl alcohol, vitamin E, octadecyl-3-(3,5-di-tert-butyl-4-hydroxyphenyl)propionate, 2-tert-butyl-6-(3'-tert-butyl-5'-methyl-2'-hydroxybenzyl)-4-methylphenylacrylate, 2,6-di-tert-butyl-4-(N,N-dimethylamino methyl)phenol, 3,5-di-tert-butyl-4-hydroxybenzylphosphonate diethyl ester, 2,2'-methylenebis(4-methyl-6-tertbutylphenol), 2,2'-methylenebis(4-ethyl-6-tert-butylphenol), 4,4'-methylenebis(2,6-di-tert-butylphenol), 2,2'-methylenebis(4-methyl-6-cyclohexylphenol), 2,2'-dimethylene-bis(6-α-methyl-benzyl-p-cresol), 2,2'-ethylidene-bis(4,6-di-tert-butylphenol), 2,2'-butylidene-bis(4-methyl-6-tert-butylphenol), 4,4'-butylidenebis(3-methyl-6-tertbutylphenol), triethylene glycol-N-bis-3-(3-tert-butyl-4-hydroxy-5-methylphenyl)propionate, 1,6-hexanediol bis[3-(3,5-di-tert-butyl-4-hydroxyphenyl)propionate], bis[2-tert-butyl-4-methyl 6-(3-tert-butyl-5-methyl-2-hydroxybenzyl)phenyl]terephthalate, 3,9-bis{2-[3-(3-tert-butyl-4-hydroxy-5-methylphenyl)propionyloxy]-1,1,-dimethylethyl}-2,4,8,10-tetraoxaspiro[5,5]undecane, 4,4'-thiobis(6-tert-butyl-m-cresol), 4,4'-thiobis(3-methyl-6-tert-butylphenol), 2,2'-thiobis(4-methyl-6-tert-butylphenol), bis(3,5-di-tert-butyl-4-hydroxybenzyl) sulfide, 4,4'-di-thiobis(2,6-di-tert-butylphenol), 4,4'-tri-thiobis(2,6-di-tert-butylphenol), 2,2-thiodiethylenebis-[3-(3,5-di-tert-butyl-4-hydroxyphenyl)propionate], 2,4-bis(n-octylthio)-6-(4-hydroxy-3,5-di-tert-butylanilino)-1,3,5-triazine, N,N'-hexamethylene-bis-(3,5-di-tert-butyl-4-hydroxyhydrocinnamide), N,N'-bis[3-(3,5-di-tert-butyl-4-hydroxyphenyl)propionyl]hydrazine, 1,1,3-tris(2-methyl-4-hydroxy-5-tert-butylphenyl)butane, 1,3,5-trimethyl-2,4,6-tris(3,5-di-tert-butyl-4-hydroxybenzyl) benzene, tris(3,5-di-tert-butyl-4-hydroxyphenyl)isocyanurate, tris(3,5-di-tert-butyl-4-hydroxybenzyl)isocyanurate, 1,3,5-tris(4-tert-butyl-3-hydroxy-2,6-dimethylbenzyl)isocyanurate, 1,3,5-tris 2[3(3,5-di-tert-butyl-4-hydroxyphenyl)propionyloxy]ethyl isocyanurate, tetrakis[methylene-3-(3,5-di-tert-butyl-4-hydroxyphenyl)propionate]methane, triethylene glycol-N-bis-3-(3-tert-butyl-4-hydroxy-5-methylphenyl) propionate, triethylene glycol-N-bis-3-(3-tert-butyl-4-hydroxy-5-methylphenyl) acetate, 3,9-bis[2-{3-(3-tert-butyl-4-hydroxy-5-methylphenyl)acetyloxy}-1,1-dimethylethyl]-2,4,8,10-tetraoxaspiro[5,5]undecane, tetrakis[methylene-3-(3-tert-butyl-4-hydroxy-5-methylphenyl)propionate]methane, 1,3,5-trimethyl-2,4,6-tris(3-tert-butyl-4-hydroxy-5-methylbenzyl)benzene and tris(3-tert-butyl-4-hydroxy-5-methylbenzyl)isocyanurate. Among the above compounds, tetrakis[methylene-3-(3-tert-butyl-4-hydroxy-5-methylphenyl)propionate] methane and octadecyl-3-(3,5-di-tert-butyl-4-hydroxyphenyl)propionate are preferably used, and further, as those excellent in suppressing deterioration of mechanical properties due to thermal decomposition during processing, more preferably used are (3,3',3",5,5',5"-hexa-tert-butyl-a,a',a"-(mesitylene-2,4,6-triyl)tri-p-cresol represented by the following formula (17) and 1,3,5-tris-(3,5-di-tert-butyl-4-hydroxybenzyl)-1,3,5-triazine-2,4,6(1H,3H,SH)-trione represented by the following formula (18).

[Chem. 19]

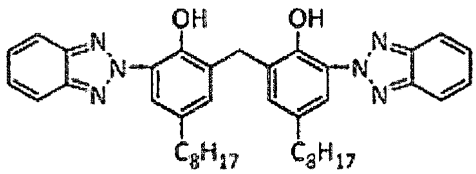

··· (17)

[Chem. 20]

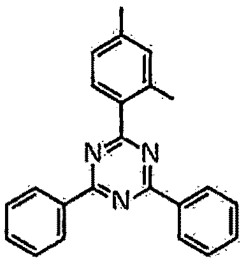

··· (18)

The above phenolic stabilizers can be used alone or in combination of two or more. The content of the phenolic stabilizer, with respect to 100 parts by weight of component A, is preferably 0.05 to 1.0 part by weight, more preferably 0.07 to 0.8 part by weight, and further preferably 0.1 to 0.5 part by weight. The content less than the lower limit will exhibit no effect of suppressing thermal decomposition during processing and thus may cause decrease in the mechanical properties, and that exceeding the upper limit may also cause decrease in the mechanical properties.

(ii) Hindered amine light stabilizer

The flame-retardant polycarbonate resin composition of the present invention may contain a hindered amine light stabilizer. Hindered amine light stabilizers are generally called HALS (Hindered Amine Light Stabilizer) and are compounds having a 2,2,6,6-tetramethylpiperidine skeleton in their structure, such as 4-acetoxy-2,2,6,6-tetramethylpiperidine, 4-stearoyloxy-2,2,6,6-tetramethylpiperidine, 4-acryloyloxy-2,2,6,6-tetramethylpiperidine, 4-(phenylacetoxy)-2,2,6,6-tetramethylpiperidine, 4-benzoyloxy-2,2,6,6-tetramethylpiperidine, 4-methoxy-2,2,6,6-tetramethylpiperidine, 4-stearyloxy-2,2,6,6-tetramethylpiperidine, 4-cyclohexyloxy-2,2,6,6-tetramethylpiperidine, 4-benzyloxy-2,2,6,6-tetramethylpiperidine, 4-phenoxy-2,2,6,6-tetramethylpiperidine, 4-(ethylcarbamoyloxy)-2,2,6,6-tetramethylpiperidine, 4-(cyclohexylcarbamoyloxy)-2,2,6,6-tetramethylpiperidine, 4-(phenylcarbamoyloxy)-2,2,6,6-tetramethylpiperidine, bis(2,2,6,6-tetramethyl-4-piperidyl)carbonate, bis(2,2,6,6-tetramethyl-4-piperidyl)oxalate, bis(2,2,6,6-tetramethyl-4-piperidyl)malonate, bis(2,2,6,6-tetramethyl-4-piperidyl)sebacate, bis(2,2,6,6-tetramethyl-4-piperidyl)adipate, bis(2,2,6,6-tetramethyl-4-piperidyl)terephthalate, bis(1,2,2,6,6-pentamethyl-4-piperidyl)carbonate, bis(1,2,2,6,6-pentamethyl-4-piperidyl)oxalate, bis(1,2,2,6,6-pentamethyl-4-piperidyl)malonate, bis(1,2,2,6,6-pentamethyl-4-piperidyl)sebacate, bis(1,2,2,6,6-pentamethyl-4-piperidyl)adipate, bis(1,2,2,6,6-pentamethyl-4-piperidyl)terephthalate, N,N'-bis-2,2,6,6-tetramethyl-4-piperidinyl-1,3-benzenedicarboxamide, 1,2-bis(2,2,6,6-tetramethyl-4-piperidyloxy)ethane, α,α'-bis(2,2,6,6-tetramethyl-4-piperidyloxy)-p-xylene, bis(2,2,6,6-tetramethyl-4-piperidyltolylene-2,4-dicarbamate, bis(2,2,6,6-tetramethyl-4-piperidyl)-hexamethylene-1,6-dicarbamate, tris(2,2,6,6-tetramethyl-4-piperidyl)-benzene-1,3,5-tricarboxylate, N,N',N",N'''-tetrakis-(4,6-bis-(butyl-(N-methyl-2,2,6,6-tetramethylpiperidin-4-yl)amino)-triazin-2-yl)-4,7-diazadecane-1,10-diamine, a polycondensate of dibutylamine/1,3,5-triazine/N,N'-bis(2,2,6,6-tetramethyl-4-piperidyl)-1,6-hexamethylenediamine and N-(2,2,6,6-tetramethyl-4-piperidyl)butylamine, poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}], tetrakis(2,2,6,6-tetramethyl-4-piperidyl)-1,2,3,4-butanetetracarboxylate, tetrakis(1,2,2,6,6-pentamethyl-4-piperidyl)-1,2,3,4-butanetetracarboxylate, tris(2,2,6,6-tetramethyl-4-piperidyl)-benzene-1,3,4-tricarboxylate, 1-[2-{3-(3,5-di-t-butyl-4-hydroxyphenyl)propionyloxy}butyl]-4-[3-(3,5-di-t-butyl-4-hydroxyphenyl)propionyloxy]2,2,6,6-tetramethylpiperidine, and a condensate of 1,2,3,4-butanetetracarboxylic acid and 1,2,2,6,6-pentamethyl-4-piperidinol and β,β,β',β'-tetramethyl-3,9-[2,4,8,10-tetraoxaspiro(5,5)undecane]diethanol.

Hindered amine light stabilizers are roughly divided by the bonding partner of the nitrogen atom in the piperidine skeleton into three types: N-H type (hydrogen is bonded to the nitrogen atom), N-R type (an alkyl group (R) is bonded to the

nitrogen atom), and N-OR type (an alkoxy group (OR) is bonded to the nitrogen atom), and from the viewpoint of basicity of hindered amine light stabilizers in applying to polycarbonate resin, more preferably used are N-R type and N-OR type, which have low basicity.

Among the above compounds, compounds represented by the following formulas (19) and (20) are more preferably used in the present invention.

[Chem. 21]

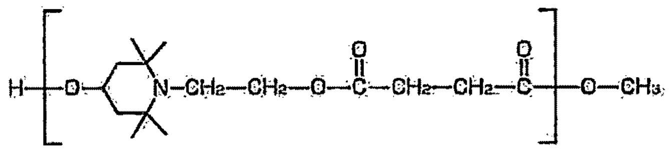

··· (1 9)

[Chem. 22]

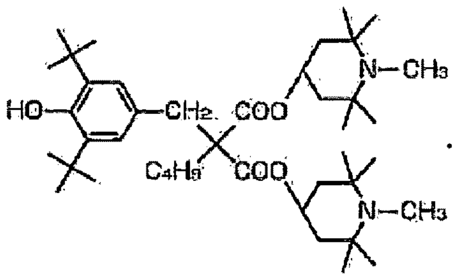

··· (2 0)

The hindered amine light stabilizers can be used alone or in combination of two or more. The content of the hindered amine light stabilizer, with respect to 100 parts by weight of component A, is preferably 0.01 to 2 parts by weight, more preferably 0.05 to 1 part by weight, further preferably 0.08 to 0.7 part by weight, and particularly preferably 0.1 to 0.5 part by weight. The content of the hindered amine light stabilizer more than the upper limit may cause poor appearance due to gas generation and deterioration of physical properties due to decomposition of the polycarbonate resin. In addition, that of less than the lower limit may cause insufficient light resistance.

(iii) Mold release agent

The flame-retardant polycarbonate resin composition of the present invention preferably further contains a mold release agent to improve productivity during molding and to reduce distortion of molded products. For the above mold release agent, known ones can be used. Examples thereof include saturated fatty acid esters, unsaturated fatty acid esters, polyolefin waxes (polyethylene wax, 1-alkene polymers, those modified with functional group-containing compounds such as acid-modified compounds), silicone compounds, fluorine compounds (such as fluorine oils typified by polyfluoroalkyl ethers), paraffin wax, and beeswax. Among these, examples of preferred mold release agents include fatty acid esters. The fatty acid esters are esters of aliphatic alcohols and aliphatic carboxylic acids. The aliphatic alcohol may be a monohydric alcohol or a polyhydric alcohol of dihydric or higher. Further, the carbon number of the alcohol is 3 to 32 and more preferably 5 to 30. Examples of the monohydric alcohols include dodecanol, tetradecanol, hexadecanol, octadecanol, eicosanol, tetracosanol, ceryl alcohol, and triacontanol. Examples of the polyhydric alcohols include pentaerythritol, dipentaerythritol, tripentaerythritol, polyglycerol (triglycerol to hexaglycerol), ditrimethylolpropane, xylitol, sorbitol, and mannitol. Among fatty acid esters, polyhydric alcohols are more preferred.

In contrast, the aliphatic carboxylic acid preferably has 3 to 32 carbon atoms, and particularly preferably 10 to 22 carbon atoms. Examples of the aliphatic carboxylic acids include saturated aliphatic carboxylic acids such as decanoic acid, undecanoic acid, dodecanoic acid, tridecanoic acid, tetradecanoic acid, pentadecanoic acid, hexadecanoic acid (palmitic acid), heptadecanoic acid, octadecanoic acid (stearic acid), nonadecanoic acid, behenic acid, icosanoic acid, and docosanoic acid; and unsaturated aliphatic carboxylic acids such as palmitoleic acid, oleic acid, linoleic acid, linolenic acid, eicosenoic acid, eicosapentaenoic acid, and cetoleic acid. Among the above aliphatic carboxylic acids, those having 14 to 20 carbon atoms are preferred. Among these, saturated aliphatic carboxylic acids are preferred. Particularly preferred are stearic acid and palmitic acid.

The above-mentioned aliphatic carboxylic acids such as stearic acid and palmitic acid are usually produced from

natural fats and oils such as animal fats and oils such as beef tallow and lard, and vegetable fats and oils such as palm oil and sunflower oil, and thus these aliphatic carboxylic acids are usually mixtures containing different carboxylic acid components having different numbers of carbon atoms. Therefore, in the production of the fatty acid ester of the present invention, preferably used are aliphatic carboxylic acids produced from the natural fats and oils and having a form of mixture containing different carboxylic acid components, particularly stearic acid and palmitic acid.

The fatty acid ester of the present invention may be either a partial ester or a whole ester (full ester). However, since partial esters usually have a high hydroxyl value and tend to cause decomposition of the resin at high temperatures, full esters are more preferred. The acid value of the fatty acid ester of the present invention is, from the viewpoint of thermal stability, preferably 20 or less, more preferably 4 to 20, and further preferably 4 to 12. Note that the acid value can be substantially zero. Further, the hydroxyl value of the fatty acid ester is more preferably 0.1 to 30. Further, the iodine value is preferably 10 or less. Note that the iodine value can be substantially zero. These characteristics can be determined by the method specified in JIS K 0070.

The content of the mold release agent, with respect to 100 parts by weight of component A, is preferably 0.005 to 5 parts by weight, more preferably 0.01 to 3 parts by weight, and further preferably 0.05 to 1 part by weight. The content within this range may allow the flame-retardant polycarbonate resin composition to have good mold release and roll release properties. In particular, the above amount of fatty acid ester may allow a flame-retardant polycarbonate resin composition to have good mold release and roll release properties without impairing good hue.

(iv) Dyes and pigments

The flame-retardant polycarbonate resin composition of the present invention can further provide molded products exhibiting various designability by containing various dyes and pigments. Blending a fluorescent whitening agent or other light-emitting fluorescent dyes can impart even better design effects to the product by using emission color. Further, blending a very small amount of dye and pigment can impart coloration and vivid coloring properties to a flame-retardant polycarbonate resin composition.

Examples of the fluorescent dyes (including fluorescent whitening agents) used in the present invention include coumarin-based fluorescent dyes, benzopyran-based fluorescent dyes, perylene-based fluorescent dyes, anthraquinone-based fluorescent dyes, thioindigo-based fluorescent dyes, xanthene-based fluorescent dyes, xanthone-based fluorescent dyes, thioxanthene-based fluorescent dyes, thioxanthone-based fluorescent dyes, thiazine-based fluorescent dyes, and diaminostilbene-based fluorescent dyes. Among these, preferred are coumarin-based fluorescent dyes, benzopyran-based fluorescent dyes, and perylene-based fluorescent dyes, which have good heat resistance and are less likely to deteriorate during molding of polycarbonate resin.

Examples of dyes, other than the above fluorescent dyes, include perylene-based dyes, coumarin-based dyes, thioindigo-based dyes, anthraquinone-based dyes, thioxanthone-based dyes, ferrocyanides such as deep blue, perinone-based dyes, quinoline-based dyes, quinacridone-based dyes, dioxazine-based dyes, isoindolinone-based dyes, and phthalocyanine-based dyes. Further, the resin composition of the present invention can also be blended with a metallic pigment to obtain a better metallic color. As the metallic pigment, those having a metal coating or a metal oxide coating on various sheet fillers are preferred.

The content of the above dye and pigment, with respect to 100 parts by weight of component A, is preferably 0.00001 to 1 part by weight, and more preferably 0.00005 to 0.5 part by weight.

(v) Other stabilizers

The flame-retardant polycarbonate resin composition of the present invention may also contain heat stabilizers other than the above-mentioned phosphorus stabilizers and phenolic stabilizers. The above other heat stabilizers are preferably used in combination with either of these stabilizers and antioxidants, and particularly preferably with both. Examples of the above other thermal stabilizers preferably include lactone-based stabilizers such as the reaction product of 3-hydroxy-5,7-di-tert-butyl-furan-2-one and o-xylene (The details of such stabilizers are described in JP-A-7-233160). The above compound is commercially available as Irganox HP-136 (trademark, manufactured by CIBA SPECIALTY CHEMICALS), and this compound can be used. Further, stabilizers prepared by mixing this compound with various phosphite compounds and hindered phenol compounds are commercially available. As an example of the above commercial product, Irganox HP-2921 manufactured by the above-mentioned company is preferably exemplified. The above premixed stabilizers can also be utilized in the present invention. The amount of the lactone-based stabilizer to be blended, with respect to 100 parts by weight of component A, is preferably 0.0005 to 0.5 part by weight, and more preferably 0.001 to 0.3 part by weight.

Examples of the above other stabilizers include sulfur-containing stabilizers such as pentaerythritol tetrakis(3-mercaptopropionate), pentaerythritol tetrakis(3-laurylthiopropionate), and glycerol-3-stearylthiopropionate. The above stabilizers are particularly effective when rotational molding is applied to the resin composition. The amount of the sulfur-containing stabilizer to be blended, with respect to 100 parts by weight of component A, is preferably 0.001 to 0.3 part by weight, and more preferably 0.01 to 0.1 part by weight.

(vi) Other resins and elastomers

Other resins and elastomers can also be used in the resin composition of the present invention as far as the effects of the present invention are exhibited.
Examples of the above other resins include polyester resins such as polyethylene terephthalate and polybutylene terephthalate, polyolefin resins such as polyethylene and polypropylene, polyamide resins, polyimide resins, polyetherimide resins, polyurethane resins, silicone resins, polyphenylene ether resins, polyphenylene sulfide resins, polysulfone resins, polymethacrylate resins, phenol resins, epoxy resins, cyclic polyolefin resins, polylactic acid resins, polycaprolactone resins, and thermoplastic fluororesins (such as polyvinylidene fluoride resins).
Examples of the elastomer include isobutylene/isoprene rubber, ethylene/propylene rubber, acrylic elastomer, polyester elastomer, and polyamide elastomer.
The content of other thermoplastic resins, with respect to 100 parts by weight of component A, is preferably 100 parts by weight or less, and more preferably 50 parts by weight or less.

(vii) Compounds with heat ray absorptivity

The polycarbonate resin composition of the present invention can contain a compound with heat ray absorptivity. Preferred examples of the above compounds include various metal compounds having excellent near-infrared absorptivity such as phthalocyanine-based near-infrared absorbers, metal oxide near-infrared absorbers such as ATO, ITO, iridium oxide, ruthenium oxide, and immonium oxide, and metal boride-based such as lanthanum boride, cerium boride, and tungsten boride, and tungsten oxide-based near-infrared absorbers. The above a phthalocyanine-based near-infrared absorber is commercially available, for example, as MIR-362 manufactured by Mitsui Chemicals, Inc. and easily available. These can be used alone or in combination of two or more. The content of the phthalocyanine-based near-infrared absorber, with respect to 100 parts by weight of component A, is preferably 0.0005 to 0.2 part by weight, more preferably 0.0008 to 0.1 part by weight, and further preferably 0.001 to 0.07 part by weight. The content of the metal oxide near-infrared absorber and the metal boride near-infrared absorber in the resin composition of the present invention is preferably 0.1 to 200 ppm (weight ratio), and more preferably 0.5 to 100 ppm.

(viii) Filler

When component B-1 and component B-2 are used as component B in the present invention, various fillers can be blended as reinforcing fillers within the range in which the effects of the present invention are exhibited. Examples thereof include silicate minerals, calcium carbonate, glass fibers, glass beads, glass balloons, glass milled fibers, glass flakes, carbon fibers, carbon flakes, carbon beads, carbon milled fibers, graphite, expanded graphite, CVD ultrafine carbon fibers (fiber diameter: less than 0.1 μm), carbon nanotubes (fiber diameter: less than 0.1 μm, hollow), fullerene, metal flakes, metal fibers, metal coated glass fibers, metal coated carbon fibers, metal coated glass flakes, silica, metal oxide particles, metal oxide fibers, metal oxide balloons, various whiskers (potassium titanate whiskers, aluminum borate whiskers, basic magnesium sulfate, etc.), boron compounds (such as boron nitride), and laser direct structuring agents. These reinforcing fillers may be contained alone or in combination of two or more.
The content of these fillers, with respect to 100 parts by weight of component A, is preferably 1 to 300 parts by weight and more preferably 5 to 280 parts by weight.

(viii) Other additives

In addition, the flame-retardant polycarbonate resin composition of the present invention may contain a small proportion of additives known by itself in order to impart various functions to the molded product and improve its properties. These additives may be added in usual amounts as far as the purpose of the present invention is not impaired.
Examples of the additives include sliding agents (e.g. PTFE particles), colorants (e.g. pigments such as carbon black and titanium oxide, and dyes), light diffusing agents (e.g. acrylic crosslinked particles, silicone crosslinked particles, ultrathin glass flakes, calcium carbonate particles), fluorescent dyes, inorganic phosphors (e.g. phosphors with aluminate as a host crystal), antistatic agents, crystal nucleating agents, inorganic and organic antibacterial agents, photocatalytic antifoulants (e.g. particulate titanium oxide) , particulate zinc oxide), radical generants, and photochromic agents.
(Content of sodium ions and potassium ions in flame-retardant polycarbonate resin composition)
In the present invention, when component B-1 is used as component B, the total amount of sodium ion and potassium ion contained in the flame-retardant polycarbonate resin composition is preferably 1 to 40 ppm. The amount is

more preferably 1.5 to 30 ppm, further preferably 2 to 25 ppm, still further preferably 2.5 to 20 ppm, particularly preferably 3 to 15 ppm, and most preferably 3.5 to 10 ppm. The total amount of sodium ion and potassium ion contained in the resin composition of 40 ppm or less will allow decrease to be easily suppressed in impact strength after a water exposure test in UL746C f1 rating certification and flame retardancy, which is preferable. Note that the sodium ions and potassium ions contained in the resin composition are mostly derived from polymerization reaction residues of component A, component B-1-1, component B-1-2, component C, and component D, and a condition of the amount of these ions less than 1 ppm may greatly restrict the polymerization itself of component A, component B-1-1, component B-1-2, component C, and component D, and thus a condition of the lower limit of 1 ppm or more is sufficient.

Further, in the present invention, when component B-2 is used as component B, the total amount of sodium ion and potassium ion contained in the flame-retardant polycarbonate resin composition is preferably 1 to 40 ppm. The amount is more preferably 1.5 to 38 ppm, further preferably 2 to 36 ppm, still further preferably 2.5 to 35 ppm, particularly preferably 3 to 35 ppm, and most preferably 3.5 to 34 ppm. The total amount of sodium ion and potassium ion contained in the resin composition of 40 ppm or less will allow decrease to be suppressed in impact strength after a water exposure test in UL746C f1 rating certification and flame retardancy. However, the sodium ions and potassium ions contained in the resin composition are mostly derived from polymerization reaction residues of component A, component B-2, component C, and component D, and a condition of the amount of these ions less than 1 ppm may greatly restrict the polymerization itself of component A, component B-2, component C, and component D, and thus a condition of the lower limit of 1 ppm or more is sufficient.

The amounts of sodium ion and potassium ion contained in the flame-retardant polycarbonate resin composition are determined by elemental analysis using ICP-AES analysis. Incidentally, elemental analysis by ICP-AES analysis is performed by the following method. That is, after thermally decomposing the sample with sulfuric acid and nitric acid, the test liquid is prepared by adding ultrapure water to a constant volume, and the elements in the test liquid are analyzed qualitatively and quantitatively using ICP-AES (Model SPS5100 manufactured by SII Nanotechnology).

(Total amount of sodium ion and potassium ion contained in component B-1-1 and component B-1-2 in the flame-retardant polycarbonate resin composition)

The total amount of sodium ion and potassium ion contained in component B-1-1 and component B-1-2 in the flame-retardant polycarbonate resin composition of the present invention is preferably 0.1 to 30 ppm. The amount is more preferably 0.2 to 25 ppm, further preferably 0.2 to 20 ppm, still further preferably 0.3 to 15 ppm, particularly preferably 0.3 to 10 ppm, and most preferably 0.4 to 5 ppm. The total amount of sodium ion and potassium ion contained in component B-1-1 and component B-1-2 of 30 ppm or less will allow decrease to be easily suppressed in impact strength after a water exposure test in UL746C f1 rating certification and flame retardancy, which is preferable. Note that the sodium ions and potassium ions contained in component B-1-1 and component B-1-2 of the resin composition are mostly derived from polymerization reaction residues of component B-1-1, component B-1-2, and a condition of the amount of these ions less than 0.1 ppm may greatly restrict the polymerization itself of component B-1-1, component B-1-2, and thus a condition of the lower limit of 0.1 ppm or more is sufficient. (Total amount of sodium ion and potassium ion contained in component B-2 in the flame-retardant polycarbonate resin composition)

The total amount of sodium ion and potassium ion contained in component B-2 in the flame-retardant polycarbonate resin composition of the present invention is preferably 0.1 to 40 ppm. The amount is more preferably 0.2 to 38 ppm, further preferably 0.2 to 36 ppm, still further preferably 0.3 to 35 ppm, particularly preferably 0.3 to 33 ppm, and most preferably 0.4 to 30 ppm. The total amount of sodium ion and potassium ion contained in component B-2 of 40 ppm or less will allow decrease to be suppressed in impact strength after a water exposure test in UL746C f1 rating certification and flame retardancy. However, the sodium ions and potassium ions contained in component B-2 of the resin composition are mostly derived from polymerization reaction residues of component B-2, and a condition of the amount of these ions less than 0.1 ppm may greatly restrict the polymerization itself of component B-2, and thus a condition of the lower limit of 0.1 ppm or more is sufficient.

(Production of resin composition)

Any method can be used to produce the resin composition of the present invention. An example of the production method is performed as follows: components A to D and optional other additives are thoroughly mixed using a premixing means such as a V-type blender, Henschel mixer, mechanochemical device, and extrusion mixer, then the premix is granulated using an extrusion granulator or a briquetting machine, as necessary, then melt-kneaded using a melt-kneading machine typified by a vented twin-screw extruder, and then pelletized using a pelletizer.

Alternatively, examples thereof include a method of feeding each component independently to a melt-kneading machine, such as a vented twin-screw extruder, and a method of premixing a part of components and then feeding the premix to a melt-kneading machine independently from the remaining components. Examples of a method for premixing a part of components include a method in which components other than component A are premixed in advance and then mixed with the resin of component A or directly fed to an extruder.

Examples of premixing methods includes, when component A is in a powder form, a method of blending a part of the powder with the additives to be mixed, producing a masterbatch of the additives diluted with the powder, and using the masterbatch. Further, included is a method of supplying one component independently from the middle of the melt extruder. Note that liquid components to be blended can be fed to the melt extruder using a so-called liquid injection device or liquid addition device.

An extruder having a vent capable of degassing moisture in the raw materials and volatile gas generated from the melt-kneaded resin can be preferably used. A vacuum pump is preferably installed to efficiently discharge generated moisture and volatile gas to the outside of the extruder from the vent. Foreign matters can be removed from the resin composition by installing a screen in front of the die section of the extruder, and the screen is for removing foreign matters mixed into the extrusion raw material. Examples of the screens include wire mesh, screen changers, sintered metal plates (disk filters, etc.).

Examples of the melt kneading machine include, in addition to a twin-screw extruder, a Banbury mixer, a kneading roll, a single-screw extruder, and a multi-screw extruder having three or more screws.

The resin extruded as described above is either directly cut into pellets or formed into strands and then cut with a pelletizer to be pellets. When the influence of external dust is required to be reduced during pelletization, the atmosphere around the extruder is preferably cleaned. Further, in the production of the pellets, various methods that have already been proposed for polycarbonate resin for optical discs can be used appropriately to narrow the shape distribution of the pellets, reduce mis-cuts, and reduce particles generated during shipping or transportation, and reduce air bubbles (vacuum bubbles) generated inside the strands and pellets. These prescriptions can realize a high-cycle molding and reduce the incidence rate of defects such as silver streak. Further, the shape of the pellet can be a general shape such as a cylinder, a prism, or a sphere, and a cylinder is more preferable. The diameter of the cylinder is preferably 1 to 5 mm, more preferably 1.5 to 4 mm, and further preferably 2 to 3.3 mm. In contrast, the length of the cylinder is preferably 1 to 30 mm, more preferably 2 to 5 mm, and further preferably 2.5 to 3.5 mm.

(Molded product composed of the resin composition of the present invention)

The resin composition of the present invention is usually obtained by the above-mentioned method as pellets, which can be used to produce various products by injection molding. In the above injection molding, molded products can be obtained using, in addition to normal molding methods, the following injection molding methods such as injection stamping, injection press molding, gas-assisted injection molding, foam molding (including injection of supercritical fluid), insert molding, in-mold coating molding, insulated mold molding, rapid heating and cooling mold molding, two-color molding, sandwich molding, and ultrahigh-speed injection molding. The advantages of these various molding methods are already widely known. Further, either a cold runner method or a hot runner method can be selected for molding.

(Characteristics)

Preferred characteristics are shown below for each case of using component B-1, component B-2, and component B-3 as component B.

(I) Using component B-1 as component B

(Impact strength)

The flame-retardant polycarbonate resin composition of the present invention has a notched Charpy impact strength, measured in accordance with ISO 179, of preferably 15 $kJ/m^2$ or more, more preferably 20 $kJ/m^2$ or more, and further preferably 25 $kJ/m^2$ or more. Those having the measured value of the notched Charpy impact strength below the respective appropriate range have difficulty in applying for various applications. Note that, although the upper limit is not particularly limited, 100 $kJ/m^2$ or less is sufficient for exhibiting the performance.

(Flame retardancy)

The flame-retardant polycarbonate resin composition of the present invention has a UL94 flame retardancy rank for a test piece of preferably V-1 or V-0, and more preferably V-0 in a vertical flame test in accordance with UL94. Those having the flame retardancy rank below V-1 have difficulty in applying for members requiring a high degree of flame retardancy.

(Durability)

The polycarbonate resin composition of the present invention is measured for the notched Charpy impact strength of a test piece before and after conducting a water exposure test (immersion in hot water at 70°C for 7 days) in f1 rating certification in accordance with UL746C, and has a retention rate, represented by the following formula, of preferably 50% or more, more preferably 55% or more, further preferably 60% or more, particularly preferably 65% or more, and most preferably 70% or more. Those having the retention rate below the above lower limit have difficulty in applying for structural members for outdoor use, various housing members, and automobile-related parts. Retention rate (%) = (Charpy impact strength after water exposure test/Charpy impact strength before water exposure test) × 100

Further, the UL94 flame retardancy rank of the test piece is also desirable to be maintained after conducting a water exposure test (immersion in hot water at 70°C for 7 days) in f1 rating certification in accordance with UL746C. Those not maintaining the flame retardancy rank have difficulty in applying for structural members for outdoor use, various housing members, and automobile-related parts.

Further, the polycarbonate resin composition of the present invention has a total burning time, in the UL94 flame retardancy test for a test piece after conducting a water exposure test (immersed in hot water at 70°C for 7 days) in accordance with UL746C, of preferably 50 seconds or less, more preferably 40 seconds or less, further preferably 35 seconds or less, and particularly preferably 30 seconds or less. Those having the total burning time exceeding 50 seconds have difficulty in applying for members requiring a high degree of flame retardancy.

(II) Using component B-2 as component B

(Impact strength)

The flame-retardant polycarbonate resin composition of the present invention has a notched Charpy impact strength, measured in accordance with ISO 179, of preferably 15 $kJ/m^2$ or more, more preferably 20 $kJ/m^2$ or more, and further preferably 25 $kJ/m^2$ or more. Those having the measured value of the notched Charpy impact strength below the respective appropriate range have difficulty in applying for various applications. Note that, although the upper limit is not particularly limited, 100 $kJ/m^2$ or less is sufficient for exhibiting the performance.

(Flame retardancy)

The flame-retardant polycarbonate resin composition of the present invention has a UL94 flame retardancy rank for a test piece of preferably V-1 or V-0, and more preferably V-0 in a vertical flame test in accordance with UL94. Those having the flame retardancy rank below V-1 have difficulty in applying for members requiring a high degree of flame retardancy.

(Durability)

The polycarbonate resin composition of the present invention is measured for the notched Charpy impact strength of a test piece before and after conducting a water exposure test in accordance with UL746C, and has a retention rate, represented by the following formula, of preferably 50% or more, more preferably 55% or more, further preferably 60% or more, particularly preferably 65% or more, and most preferably 70% or more. Those having the retention rate below the above lower limit have difficulty in applying for structural members for outdoor use, various housing members, and automobile-related parts.

Retention rate (%) = (Charpy impact strength after water exposure test/Charpy impact strength before water exposure test) × 100

Further, the UL94 flame retardancy rank of the test piece is also desirable to be maintained after conducting a water exposure test in accordance with UL746C. Those not maintaining the flame retardancy rank have difficulty in applying for structural members for outdoor use, various housing members, and automobile-related parts.

Further, the polycarbonate resin composition of the present invention has a total burning time, in the UL94 flame retardancy test for a test piece before and after conducting a water exposure test in accordance with UL746C, of preferably 50 seconds or less, more preferably 40 seconds or less, further preferably 35 seconds or less, and particularly preferably 30 seconds or less. Those having the total burning time exceeding 50 seconds have difficulty in applying for members requiring a high degree of flame retardancy.

(Heat resistance)

The flame-retardant polycarbonate resin composition of the present invention has a deflection temperature, measured under a load of 1.80 MPa in accordance with ISO 75, of preferably 126°C or higher, more preferably 128°C or higher, and further preferably 130°C or higher. Those within the above range have excellent heat resistance. Note that, although the upper limit is not particularly limited, 200°C or lower is sufficient for exhibiting the performance.

(III) Using component B-3 as component B

(Impact strength)

The flame-retardant polycarbonate resin composition of the present invention has a notched Charpy impact strength, measured in accordance with ISO 179, of preferably 4 $kJ/m^2$ or more, more preferably 5 $kJ/m^2$ or more, and further preferably 6 $kJ/m^2$ or more. Those having the measured value of the notched Charpy impact strength below the respective appropriate range have difficulty in applying for various applications. Note that, although the upper limit is not particularly limited, 100 $kJ/m^2$ or less is sufficient for exhibiting the performance.

(Flame retardancy)

The flame-retardant polycarbonate resin composition of the present invention has a UL94 flame retardancy rank for a test piece of preferably V-1 or V-0, and more preferably V-0 in a vertical flame test in accordance with UL94. Those having the flame retardancy rank below V-1 have difficulty in applying for members requiring a high degree of flame retardancy.

(Durability)

The polycarbonate resin composition of the present invention is measured for the notched Charpy impact strength of a test piece before and after conducting a water exposure test in accordance with UL746C, and has a retention rate, represented by the following formula, of preferably 45% or more, more preferably 50% or more, further preferably 55% or more, and particularly preferably 60% or more. Those having the retention rate below the above lower limit have difficulty in applying for structural members for outdoor use, various housing members, and automobile-related parts.

Retention rate (%) = (Charpy impact strength after water exposure test/Charpy impact strength before water exposure test) $\times$ 100

Further, the UL94 flame retardancy rank of the test piece is also desirable to be maintained after conducting a water exposure test in accordance with UL746C. Those not maintaining the flame retardancy rank have difficulty in applying for structural members for outdoor use, various housing members, and automobile-related parts.

Further, the polycarbonate resin composition of the present invention has a total burning time, in the UL94 flame retardancy test for a test piece before and after conducting a water exposure test in accordance with UL746C, of preferably 50 seconds or less, more preferably 45 seconds or less, further preferably 40 seconds or less, and particularly preferably 35 seconds or less. Those having the total burning time exceeding the above-described burning time have difficulty in applying for members requiring a high degree of flame retardancy.

[Examples]

The embodiment for performing the present invention is a collection of preferable ranges of each of the above-mentioned requirements, and typical examples thereof are described in the following examples. Of course, the present invention is not limited to these embodiments. In addition, unless otherwise specified, parts in the examples are parts by weight, and % is wt%. Note that the evaluation was performed by the following method.

(1) Measurement of content of sodium ion and potassium ion in resin composition

After thermally decomposing the pellets obtained by the following method with sulfuric acid and nitric acid, the test liquid was prepared by adding ultrapure water to a constant volume, and the sodium ions and potassium ions in the test liquid were quantified using ICP-AES (Model SPS5100 manufactured by SII Nanotechnology).

ABS resin (component B-1-1) and methyl methacrylate-butadiene-styrene copolymer (component B-1-2) were

also measured using the above method.

Further, the aromatic polyester resin (component B-2) was also measured using the above method.

(2) Evaluation of resin composition

(i) Charpy impact strength

Notched Charpy impact strength was measured in an atmosphere at 23°C in accordance with ISO179 using an ISO bending test piece with a thickness of 4 mm obtained by the method described below.

(ii) Flame retardancy

A combustion test was performed in accordance with UL94 vertical flame test specified by Underwriter Laboratories (USA) Inc., using a 1.5-mm thick UL test piece obtained by the following method. The results were evaluated by classifying into V-0, V-1, V-2 and not V. Further, in the UL test after the water exposure test, flame retardancy was evaluated including the total burning time.

(iii) Durability

(a) Charpy impact strength retention rate after water exposure test in UL746C f1 rating certification

An ISO bending test piece with a thickness of 4 mm obtained by the following method was immersed in warm water at 70°C for 7 days in accordance with the UL746C water exposure test specified by Underwriter Laboratories (USA) Inc., and then in an atmosphere at 23°C in accordance with ISO179, notched Charpy impact strength measurements were performed. From this result, the retention rate of the notched Charpy impact strength was calculated using the following formula.

Charpy impact strength retention rate (%) = (Charpy impact strength after water exposure test/initial Charpy impact strength) $\times$ 100

(b) Flame retardancy after water exposure test in UL746C f1 rating certification

A UL test piece with a thickness of 1.5 mm obtained by the method below was immersed in warm water at 70°C for 7 days in accordance with the UL746C water exposure test specified by Underwriter Laboratories (USA) Inc., and then a burning test was performed in accordance with UL94 vertical flame test specified by Underwriter Laboratories (USA) Inc. The results were evaluated by classifying into V-0, V-1, V-2 and not V. In addition, the total burning time is also listed in each table.

(iv) Heat resistance

Deflection temperature was measured under a load condition of 1.80 MPa in accordance with ISO75 using an ISO bending test piece with a thickness of 4 mm obtained by the method described below.

(v) Surface nature

A flat plate with a thickness of 2 mm molded under the injection molding conditions below was observed for the surface appearance, and those without silver streak or flow marks due to resin decomposition or gas generation are rated as "OK", and with these is rated as "NG".

(vi) Thermal conductivity

A rectangular plate (50 mm $\times$ 100 mm $\times$ 4 mm thickness) was molded under the following injection molding conditions, and the thermal conductivity of the sample in the flow direction was measured by a laser flash method.

(vii) Volume resistivity

A flat plate with a thickness of 2 mm was molded under the following injection molding conditions, 500 V was applied between the electrodes in accordance with JIS K6911, and the resistivity after 1 minute was measured.

(viii) Electromagnetic shielding properties

A flat test piece (150 mm × 150 mm × 2 mm thickness) was prepared from the molding material obtained by the method described below using an injection molding machine at a cylinder temperature of 280°C and a mold temperature of 80°C. The magnetic field shielding performance (unit: dB) at 1 GHz of the obtained test piece was measured using an electromagnetic shielding performance measuring device in accordance with the KEC (Kansai Electronics Industry Promotion Center) method. Electromagnetic shielding properties is rated as "OK" for the magnetic field shielding performance of 40 dB or more,
and "NG" for the magnetic field shielding performance of less than 40 dB.

(ix) Light reflecting properties

A 2-mm thick molded plate (length 90 mm × width 50 mm) obtained under the injection molding conditions described below was measured for the light reflecting properties using a color computer (TC-1800MK-II manufactured by TokyoDenshoku.co., Ltd.). Evaluation was made using the lowest reflectance value in the wavelength range of 450 nm to 850 nm.
Light reflecting properties is rated as "OK" for the light reflectance of 95% or more, and "NG" for the light reflectance of less than 95%.

(x) Plating adhesion

A flat test piece (50 mm × 100 mm × 1 mm) obtained under the injection molding conditions described below was plated under the conditions described below, and then the adhesion between the metal thin film and the resin was evaluated. A grid peel test was performed in accordance with 4-6 of "JIS K5600 Paint General Test Methods." Plating adhesion is rated as "OK" when there is no unplated area at all, and no peeling occurs in a grid peel test using cellophane tape;

as "AVG" (Average) when there is no unplated area at all, but peeling occurs in a grid peel test using cellophane tape; and
as "NG" when unplated areas occur, and peeling occurs in a grid peel test using cellophane tape.

(Embodiment I)

(Specific example of using component B-1 as component B)

[Examples 1-1 to 1-18, Reference Example 1-1, Comparative Examples 1-1 to 1-11]

A mixture having the composition shown in Tables 1 and 2 was fed from the first feed port of the extruder. The above mixture was obtained by mixing the following premix (i) with other components using a V-type blender. That is, (i) is a mixture of an anti-drip agent (component D) and a polycarbonate resin (component A), and is uniformly mixed in a polyethylene bag by shaking the entire bag so that the component D is 2.5 wt% with respect to the amount of the mixture. The amount of the mixture supplied was precisely measured using a measuring instrument (CWF manufactured by Kubota Corporation). Extrusion was performed using a vent-type twin-screw extruder with a diameter of 30 mm (TEX30-$\alpha$-38.5BW-3V manufactured by The Japan Steel Works, Ltd.) for melt-kneading at a screw rotation speed of 230 rpm, a discharge rate of 25 kg/h, and a vent vacuum of 3 kPa to obtain pellets. Note that the extrusion temperature was 250°C from the first supply port to the die portion. A portion of the obtained pellets was dried in a hot air circulation dryer at 90 to 100°C for 6 hours, and then molded into ISO bending test pieces (ISO179) and UL test pieces using an injection molding machine at a cylinder temperature of 240°C and a mold temperature of 60°C.
The components indicated by alphanumericals in Tables 1 and 2 are explained as follows.

(Component A)

A-1: Aromatic polycarbonate resin (polycarbonate resin powder with a viscosity average molecular weight of 20,900 prepared from bisphenol A and phosgene by a conventional method, Panlite L-1225WS (product name) manufactured by Teijin Ltd.)
A-2: Recycled polycarbonate resin (recycled polycarbonate resin pellets with a viscosity average molecular weight of

20,000, recycled from a polycarbonate resin sheet)

A-3: Recycled polycarbonate resin (recycled polycarbonate resin pellets with a viscosity average molecular weight of 20,500, recycled from polycarbonate resin headlamp lenses)

A-4: Recycled polycarbonate resin (recycled polycarbonate resin pellets with a viscosity average molecular weight of 20,000, recycled from polycarbonate resin water bottles)

(Component B-1)

B-1-1-1: ABS resin (acrylonitrile-butadiene-styrene copolymer produced by bulk polymerization method, KRALASTIC UT-61 (product name) manufactured by NIPPON A&L INC.) The total amount of sodium ion and potassium ion contained in component B-1-1-1 was 2.7 ppm.

B-1-1-2: ABS resin (acrylonitrile-butadiene-styrene copolymer produced by emulsion polymerization method, KRALASTIC SXH-330 (product name) manufactured by NIPPON A&L INC.) The total amount of sodium ion and potassium ion contained in component B-1-1-2 was 40 ppm.

B-1-1-3: ABS resin (acrylonitrile-butadiene-styrene copolymer produced by emulsion polymerization method, TOYOLAC 700-314 (product name) manufactured by Toray Industries, Inc.) The total amount of sodium ion and potassium ion contained in component B-1-1-3 was 89 ppm.

B-1-1-4: ABS resin (acrylonitrile-butadiene-styrene copolymer produced by emulsion polymerization method, TAIRILAC AF-3510 (product name) manufactured by Formosa Chemical & Fibre Corp.) The total amount of sodium ion and potassium ion contained in component B-1-1-4 was 104 ppm.

B-1-1-5: ABS resin (acrylonitrile-butadiene-styrene copolymer produced by emulsion polymerization method, KRALASTIC S-3710 (product name) manufactured by NIPPON A&L INC.) The total amount of sodium ion and potassium ion contained in component B-1-1-5 was 440 ppm.

B-1-1-6: ABS resin (acrylonitrile-butadiene-styrene copolymer produced by emulsion polymerization method, Novodur MAG50 (product name) manufactured by INEOS ABS (Thailand) CO LTD) The total amount of sodium ion and potassium ion contained in component B-1-1-6 was 1150 ppm.

(Component B-1-2)

B-1-2-1: Methyl methacrylate-butadiene-styrene copolymer (Metablen E-870A (product name) manufactured by Mitsubishi Chemical Corporation) The total amount of sodium ion and potassium ion contained in component B-1-2-1 was 6.1 ppm.

B-1-2-2: Methyl methacrylate-butadiene-styrene copolymer (Kane Ace M-724 (product name) manufactured by Kaneka Corporation) The total amount of sodium ion and potassium ion contained in component B-1-2-2 was 57 ppm.

B-1-2-3: Methyl methacrylate-butadiene-styrene copolymer (Kane Ace M-701 (product name) manufactured by Kaneka Corporation)

The total amount of sodium ion and potassium ion contained in component B-1-2-3 was 360 ppm.

(Component C)

C-1: Cyclic phenoxyphosphazene having the trimer with k=1 at a content of 100 mol%, of the following formula (21)

C-2: Cyclic phenoxyphosphazene having the trimer with k = 1 at a content of 98.5 mol%, the tetramer with k = 2 at a content of 1 mol%, and the multimer with k = 3 or more at a content of 0.5 mol%, of the following formula (21)

C-3: Cyclic phenoxyphosphazene having the trimer with k = 1 at a content of 98 mol%, the tetramer with k = 2 at a content of 1.5 mol%, and the multimer with k = 3 or more at a content of 0.5 mol%, of the following formula (21)

C-4: Cyclic phenoxyphosphazene having the trimer with k = 1 at a content of 70 mol%, the tetramer with k = 2 at a content of 20 mol%, and the multimer with k = 3 or more at a content of 10 mol%, of the following formula (21)

[Chem. 23]

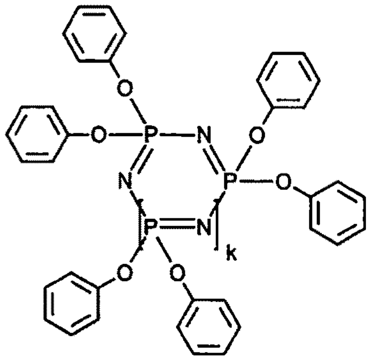

··· (2 1)

(Component D)

D-1: Anti-drip agent (polytetrafluoroethylene, Polyflon MPA FA500H (trade name) manufactured by Daikin Industries, Ltd.)

(Other components)

STB-1: Phosphorous thermal stabilizer (tris(2,4-di-tert-butylphenyl)phosphite, Irgafos 168 (product name) manufactured by BASF Japan Ltd.)
STB-2: Phenolic heat stabilizer (octadecyl-3-(3,5-di-tert-butyl-4-hydroxyphenyl)propionate, molecular weight 531, Irganox 1076 (product name) manufactured by BASF Japan Ltd.)
WAX: Fatty acid ester mold release agent (Rikemal SL900 (product name) manufactured by Riken Vitamin Co., Ltd.)

(Component X)

X-1: AS resin (styrene-acrylonitrile copolymer containing no butadiene component, LITAC-A BS207 (product name) manufactured by NIPPON A&L INC.)

(Y component)

Y-1: Phosphate ester flame retardant (bisphenol A condensed phosphate ester, CR-741 (product name) manufactured by DAIHACHI CHEMICAL INDUSTRY CO., LTD.)

[Table 1]

| Item | | | Unit | I-1 | I-2 | I-3 | I-4 | I-5 | I-6 | I-7 | I-8 | I-9 | I-10 | I-11 | I-12 | I-13 | I-14 | I-15 | I-16 | I-17 | I-18 |
|---|---|---|---|---|---|---|---|---|---|---|---|---|---|---|---|---|---|---|---|---|---|
| | | | | Examples | | | | | | | | | | | | | | | | | |
| Composition | Component A | A-1 | PBW | 100 | | | | 100 | 100 | 100 | 100 | 100 | 100 | 100 | 100 | 100 | 100 | 100 | 100 | 100 | 100 |
| | | A-2 | PBW | | 100 | | | | | | | | | | | | | | | | |
| | | A-3 | PBW | | | 100 | | | | | | | | | | | | | | | |
| | | A-4 | PBW | | | | 100 | | | | | | | | | | | | | | |
| | Component B-1-1 | B-1-1-1 | PBW | 10.0 | 10.0 | 10.0 | 10.0 | | | | | 10.0 | 6.0 | 20.0 | 10.0 | 10.0 | 10.0 | 10.0 | 10.0 | 10.0 | 10.0 |
| | | B-1-1-2 | PBW | | | | | 10.0 | 8.0 | | | | | | | | | | | | |
| | | B-1-1-3 | PBW | | | | | | | 4.0 | | | | | | | | | | | |
| | | B-1-1-4 | PBW | | | | | | | | 6.0 | | | | | | | | | | |
| | | B-1-1-5 | PBW | | | | | | | 6.0 | | | | | | | | | | | |
| | | B-1-1-6 | PBW | | | | | | 2.0 | | 4.0 | | | | | | | | | | |
| | Component B-1-2 | B-1-2-1 | PBW | 3.5 | 3.5 | 3.5 | 3.5 | 3.5 | 3.5 | | | 3.5 | 3.5 | 3.5 | 1.5 | 6.0 | 3.5 | 3.5 | 3.5 | 3.5 | 3.5 |
| | | B-1-2-2 | PBW | | | | | | | | 3.5 | | | | | | | | | | |
| | | B-1-2-3 | PBW | | | | | | | 3.5 | | | | | | | | | | | |
| | Component C | C-1 | PBW | 10.0 | 10.0 | 10.0 | 10.0 | 10.0 | 10.0 | 10.0 | 10.0 | | 10.0 | 10.0 | 10.0 | 10.0 | 6.0 | 20.0 | 10.0 | 10.0 | 10.0 |
| | | C-2 | PBW | | | | | | | | | 10.0 | | | | | | | | | |
| | Component D | D-1 | PBW | 0.4 | 0.4 | 0.4 | 0.4 | 0.4 | 0.4 | 0.4 | 0.4 | 0.4 | 0.4 | 0.4 | 0.4 | 0.4 | 0.4 | 0.4 | 0.2 | 0.8 | 0.4 |
| | Others | STB-1 | PBW | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | |
| | | STB-2 | PBW | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | 0.1 | |
| | | WAX | PBW | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | 0.3 | |
| Total amount of sodium and potassium ions contained in the composition | | | ppm | 3.7 | 6.2 | 5.2 | 3.9 | 6.7 | 24.6 | 37.7 | 47.1 | 3.9 | 3.7 | 3.6 | 3.7 | 3.8 | 3.1 | 5.0 | 3.7 | 3.7 | 3.7 |
| Total amount of sodium and potassium ions contained in component B-1-1 and component B-1-2 in the composition | | | ppm | 0.4 | 0.4 | 0.4 | 0.4 | 3.4 | 21.3 | 34.4 | 43.8 | 0.4 | 0.3 | 0.6 | 0.3 | 0.5 | 0.4 | 0.4 | 0.4 | 0.4 | 0.4 |
| Characteristics | Charpy impact strength | Before water exposure test | $kJ/m^2$ | 35 | 32 | 33 | 32 | 32 | 33 | 35 | 34 | 35 | 30 | 36 | 27 | 39 | 38 | 29 | 37 | 33 | 30 |
| | | After water exposure test | $kJ/m^2$ | 26 | 20 | 23 | 21 | 22 | 21 | 21 | 19 | 25 | 19 | 27 | 17 | 28 | 27 | 18 | 28 | 22 | 19 |
| | | Retention rate | % | 74 | 63 | 70 | 66 | 69 | 64 | 60 | 56 | 71 | 63 | 75 | 63 | 72 | 71 | 62 | 76 | 67 | 63 |
| | Flame retardancy | Before water exposure test | - | V-0 | V-0 | V-0 | V-0 | V-0 | V-0 | V-0 | V-0 | V-0 | V-0 | V-0 | V-0 | V-0 | V-0 | V-0 | V-0 | V-0 | V-0 |
| | | After water exposure test | - | V-0 | V-0 | V-0 | V-0 | V-0 | V-0 | V-0 | V-0 | V-0 | V-0 | V-0 | V-0 | V-0 | V-0 | V-0 | V-0 | V-0 | V-0 |
| | | Total burning time after water exposure | sec | 20 | 22 | 21 | 21 | 26 | 33 | 40 | 49 | 22 | 19 | 28 | 18 | 29 | 31 | 16 | 29 | 17 | 29 |

[Table 2]

(Rex: Reference example)

| Item | | | Unit | Rex I-1 | Comparative example I-1 | I-2 | I-3 | I-4 | I-5 | I-6 | I-7 | I-8 | I-9 | I-10 | I-11 |
|---|---|---|---|---|---|---|---|---|---|---|---|---|---|---|---|
| Composition | Component A | A-1 | PBW | 100 | 100 | 100 | 100 | 100 | 100 | 100 | 100 | 100 | 100 | 100 | 100 |
| | Component B-1-1 | B-1-1-1 | PBW | | 10.0 | 10.0 | 10.0 | 0.5 | 35.0 | 10.0 | 10.0 | 10.0 | 10.0 | 10.0 | 10.0 |
| | Component X | X-1 | PBW | 10.0 | | | | | | | | | | | |
| | Component B-1-2 | B-1-2-1 | PBW | | 3.5 | 3.5 | 3.5 | 3.5 | 3.5 | 0.5 | 13.0 | 3.5 | 3.5 | 3.5 | 3.5 |
| | | B-1-2-3 | PBW | 3.5 | | | | | | | | | | | |
| | Component C | C-1 | PBW | 10.0 | | | | 10.0 | 10.0 | 10.0 | 10.0 | 0.5 | 35.0 | 10.0 | 10.0 |
| | | C-3 | PBW | | 10.0 | | | | | | | | | | |
| | | C-4 | PBW | | | 10.0 | | | | | | | | | |
| | Component Y | Y-1 | PBW | | | | 10.0 | | | | | | | | |
| | Component D | D-1 | PBW | 0.4 | 0.4 | 0.4 | 0.4 | 0.4 | 0.4 | 0.4 | 0.4 | 0.4 | 0.4 | | 2.5 |
| | Others | STB-1 | PBW | 0.1 | 0.1 | 0.1 | 0.1 | 0.1 | 0.1 | 0.1 | 0.1 | 0.1 | 0.1 | 0.1 | 0.1 |
| | | STB-2 | PBW | 0.1 | 0.1 | 0.1 | 0.1 | 0.1 | 0.1 | 0.1 | 0.1 | 0.1 | 0.1 | 0.1 | 0.1 |
| | | WAX | PBW | 0.3 | 0.3 | 0.3 | 0.3 | 0.3 | 0.3 | 0.3 | 0.3 | 0.3 | 0.3 | 0.3 | 0.3 |
| Total amount of sodium and potassium ions contained in the composition | | | ppm | 13.7 | 3.8 | 2.2 | 2.2 | 3.9 | 3.6 | 3.7 | 3.9 | 2.3 | 6.8 | 3.8 | 3.7 |
| Total amount of sodium and potassium ions contained in component B-1-1 and component B-1-2 in the composition | | | ppm | 10.2 | 0.4 | 0.4 | 0.4 | 0.2 | 0.8 | 0.2 | 0.8 | 0.4 | 0.3 | 0.4 | 0.4 |
| Characteristics | Charpy impact strength | Before water exposure test | kJ/m$^2$ | 31 | 34 | 33 | 33 | 27 | 41 | 25 | 44 | 44 | 18 | 38 | 20 |
| | | After water exposure test | kJ/m$^2$ | 11 | 16 | 15 | 11 | 13 | 28 | 11 | 33 | 34 | 8 | 30 | 9 |
| | | Retention rate | % | 35 | 47 | 45 | 33 | 48 | 68 | 44 | 75 | 77 | 44 | 79 | 45 |
| | Flame retardancy | Before water exposure test | - | V-0 | V-0 | V-0 | V-0 | V-0 | not V | V-0 | not V | not V | V-0 | not V | V-0 |
| | | After water exposure test | - | V-1 | V-0 | V-1 | not V | V-0 | not V | V-0 | not V | not V | V-0 | not V | V-0 |
| | | Total burning time after water exposure | sec | 51 | 32 | 53 | 196 | 15 | 189 | 15 | 161 | 204 | 12 | 101 | 12 |

(Embodiment II) (Specific example using component B-2 as component B)

[Examples II-1 to II-12, Reference Examples II-1 to II-2, Comparative Examples II-1 to II-7]

A mixture having the composition shown in Tables 3 and 4 was fed from the first feed port of the extruder. The above mixture was obtained by mixing the following premix (i) with other components using a V-type blender. That is, (i) is a mixture of an anti-drip agent (component D) and a polycarbonate resin (component A), and is uniformly mixed in a polyethylene bag by shaking the entire bag so that the component D is 2.5 wt% with respect to the amount of the mixture.

The amount of the mixture supplied was precisely measured using a measuring instrument (CWF manufactured by Kubota Corporation). Extrusion was performed using a vent-type twin-screw extruder with a diameter of 30 mm (TEX30-α-38.5BW-3V manufactured by The Japan Steel Works, Ltd.) for melt-kneading at a screw rotation speed of 230 rpm, a discharge rate of 25 kg/h, and a vent vacuum of 3 kPa to obtain pellets. Note that the extrusion temperature was 300°C from the first supply port to the die portion. A portion of the obtained pellets was dried in a hot air circulation dryer at 120°C for 6 hours, and then molded into ISO bending test pieces (ISO179) and UL test pieces using an injection molding machine at a cylinder temperature of 300°C and a mold temperature of 100°C.

The components indicated by alphanumericals in Tables 3 and 4 are explained as follows.

(Component A)

A-1: Aromatic polycarbonate resin (polycarbonate resin powder with a viscosity average molecular weight of 20,900 prepared from bisphenol A and phosgene by a conventional method, Panlite L-1225WS (product name) manufactured by Teijin Ltd.)
A-2: Recycled polycarbonate resin (recycled polycarbonate resin pellets with a viscosity average molecular weight of 20,000, recycled from a polycarbonate resin sheet)
A-3: Recycled polycarbonate resin (recycled polycarbonate resin pellets with a viscosity average molecular weight of 20,500, recycled from polycarbonate resin headlamp lenses) A-4: Recycled polycarbonate resin (recycled polycarbonate resin pellets with a viscosity average molecular weight of 20,000, recycled from polycarbonate resin water bottles)

(Component B-2)

B-2-1: Polyarylate resin (U Polymer U-100 (trade name) manufactured by UNITIKA LTD.)
The total amount of sodium ion and potassium ion contained in component B-2-1 was 10 ppm.
B-2-2: Polyarylate resin (U Polymer T-240AF (trade name) manufactured by UNITIKA LTD.)
The total amount of sodium ion and potassium ion contained in component B-2-2 was 10 ppm.
B-2-3: Polyarylate resin (U Polymer T-1000 (trade name) manufactured by UNITIKA LTD.)
The total amount of sodium ion and potassium ion contained in component B-2-3 was 10 ppm.
B-2-4: Liquid crystal polyester resin (LAPEROS A-950RX (trade name) manufactured by Polyplastics Co., Ltd.)
The total amount of sodium ion and potassium ion contained in component B-2-4 was 30 ppm.

(Component C)

C-1: Cyclic phenoxyphosphazene having the trimer with k=1 at a content of 100 mol% of the following formula (21)
C-2: Cyclic phenoxyphosphazene having the trimer with k = 1 at a content of 98.5 mol%, the tetramer with k = 2 at a content of 1 mol%, and the multimer with k = 3 or more at a content of 0.5 mol%, of the following formula (21)
C-3: Cyclic phenoxyphosphazene having the trimer with k = 1 at a content of 98 mol%, the tetramer with k = 2 at a content of 1.5 mol%, and the multimer with k = 3 or more at a content of 0.5 mol%, of the following formula (21)
C-4: Cyclic phenoxyphosphazene having the trimer with k = 1 at a content of 70 mol%, the tetramer with k = 2 at a content of 20 mol%, and the multimer with k = 3 or more at a content of 10 mol%, of the following formula (21)

[Chem. 24]

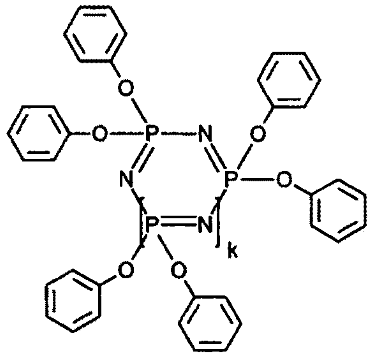

··· (2 1)

(Component D)

D-1: Anti-drip agent (polytetrafluoroethylene, Polyflon MPA FA500H (trade name) manufactured by Daikin Industries, Ltd.)

(Other components)

STB-1: Phosphorous thermal stabilizer (tris(2,4-di-tert-butylphenyl)phosphite, Irgafos 168 (product name) manufactured by BASF Japan Ltd.)
STB-2: Phenolic heat stabilizer (octadecyl-3-(3,5-di-tert-butyl-4-hydroxyphenyl)propionate, molecular weight 531, Irganox 1076 (product name) manufactured by BASF Japan Ltd.)
WAX: Fatty acid ester mold release agent (Rikemal SL900 (product name) manufactured by Riken Vitamin Co., Ltd.)

(Component X)

X-1: Polyethylene terephthalate resin (intrinsic viscosity 0.77 dL/g, TRN-8550FF (product name) manufactured by Teijin Ltd.)

(Y component)

Y-1: Phosphate ester flame retardant (bisphenol A condensed phosphate ester, CR-741 (product name) manufactured by DAIHACHI CHEMICAL INDUSTRY CO., LTD.)

[Table 3]

| Item | | | Unit | Examples | | | | | | | | | | | |
|---|---|---|---|---|---|---|---|---|---|---|---|---|---|---|---|
| | | | | II-1 | II-2 | II-3 | II-4 | II-5 | II-6 | II-7 | II-8 | II-9 | II-10 | II-11 | II-12 |
| Composition | Component A | A-1 | PBW | 100 | | | | 100 | 100 | 100 | 100 | 100 | 100 | 100 | 100 |
| | | A-2 | PBW | | 100 | | | | | | | | | | |
| | | A-3 | PBW | | | 100 | | | | | | | | | |
| | | A-4 | PBW | | | | 100 | | | | | | | | |
| | Component B-2 | B-2-1 | PBW | 46.0 | 46.0 | 46.0 | 46.0 | | | | | | | 46.0 | |
| | | B-2-2 | PBW | | | | | 46.0 | 11.0 | | | | 100.0 | | 3.0 |
| | | B-2-3 | PBW | | | | | | | 46.0 | | | | | |
| | | B-2-4 | PBW | | | | | | | | 46.0 | 100.0 | | | |
| | Component C | C-1 | PBW | | | | | | 1.0 | 7.5 | | 20.0 | 20.0 | 7.5 | 1.0 |
| | | C-2 | PBW | 7.5 | 7.5 | 7.5 | 7.5 | 7.5 | | | 7.5 | | | | |
| | Component D | D-1 | PBW | 0.6 | 0.6 | 0.6 | 0.6 | 0.6 | 0.2 | 0.6 | 0.6 | 0.6 | 0.6 | 1.2 | 0.6 |
| | Others | STB-1 | PBW | 0.1 | 0.1 | | 0.1 | 0.1 | | 0.1 | 0.1 | 0.1 | 0.1 | 0.1 | 0.1 |
| | | STB-2 | PBW | 0.1 | 0.1 | | 0.1 | 0.1 | | 0.1 | 0.1 | 0.1 | 0.1 | 0.1 | 0.1 |
| | | WAX | PBW | 0.3 | 0.3 | | 0.3 | 0.3 | | 0.3 | 0.3 | 0.3 | 0.3 | 0.3 | 0.3 |
| Total amount of sodium and potassium ions contained in the composition | | | ppm | 7.3 | 11.3 | 9.3 | 8.3 | 7.3 | 2.3 | 7.3 | 16.5 | 35.6 | 15.6 | 7.3 | 1.5 |
| Characteristics | Charpy impact strength | Before water exposure test | kJ/m² | 58 | 24 | 50 | 23 | 39 | 60 | 33 | 50 | 26 | 15 | 41 | 61 |
| | | After water exposure test | kJ/m² | 44 | 18 | 36 | 16 | 26 | 36 | 21 | 35 | 17 | 10 | 27 | 41 |
| | | Retention rate | % | 76 | 75 | 72 | 70 | 67 | 60 | 64 | 70 | 65 | 67 | 66 | 67 |
| | Flame retardancy | Before water exposure test | - | V-0 | V-0 | V-0 | V-0 | V-0 | V-0 | V-0 | V-0 | V-0 | V-0 | V-0 | V-0 |
| | | After water exposure test | - | V-0 | V-0 | V-0 | V-0 | V- 0 | V-0 | V-0 | V-0 | V-0 | V-0 | V-0 | V-0 |
| | | Total burning time after water exposure | sec | 30 | 32 | 31 | 31 | 36 | 28 | 33 | 27 | 25 | 39 | 30 | 18 |
| | Heat-resistance | Load deflection temperature | °C | 128 | 128 | 128 | 128 | 135 | 133 | 145 | 128 | 133 | 136 | 128 | 129 |

[Table 4]

| Item | | | Unit | Rex II-1 | Rex II-2 | Comparative example | | | | | | |
|---|---|---|---|---|---|---|---|---|---|---|---|---|
| | | | | | | II-1 | II-2 | II-3 | II-4 | II-5 | II-6 | II-7 |
| Composition | Component A | A-1 | PBW | 100 | 100 | 100 | 100 | 100 | 100 | 100 | 100 | 100 |
| | Component B-2 | B-2-2 | PBW | 46.0 | | 0.5 | 130.0 | 46.0 | 46.0 | | 46.0 | 46.0 |
| | | B-2-4 | PBW | | | | | | | 100.0 | | |
| | Component X | X-1 | PBW | | 46.0 | | | | | | | |
| | Component C | C-2 | PBW | | | 1.0 | 20.0 | | | 40.0 | 7.5 | 7.5 |
| | | C-3 | PBW | | | | | 7.5 | | | | |
| | | C-4 | PBW | | | | | | 7.5 | | | |
| | Component D | D-1 | PBW | 0.6 | 0.6 | 0.6 | 0.6 | 0.6 | 0.6 | 0.6 | | 2.1 |
| | Component Y | Y-1 | PBW | 7.5 | 7.5 | | | | | | | |
| | Others | STB-1 | PBW | 0.1 | 0.1 | 0.1 | 0.1 | 0.1 | 0.1 | 0.1 | 0.1 | 0.1 |
| | | STB-2 | PBW | 0.1 | 0.1 | 0.1 | 0.1 | 0.1 | 0.1 | 0.1 | 0.1 | 0.1 |
| | | WAX | PBW | 0.3 | 0.3 | 0.3 | 0.3 | 0.3 | 0.3 | 0.3 | 0.3 | 0.3 |
| Total amount of sodium and potassium ions contained in the composition | | | ppm | 7.3 | 4.1 | 1.3 | 18.6 | 5.7 | 5.7 | 40.2 | 7.3 | 7.3 |
| Characteristics | Charpy impact strength | Before water exposure test | kJ/m² | 23 | 18 | 39 | 13 | 36 | 33 | 9 | 43 | 33 |
| | | After water exposure test | kJ/m² | 8 | 4 | 26 | 6 | 17 | 13 | 3 | 31 | 16 |
| | | Retention rate | % | 35 | 22 | 67 | 46 | 47 | 39 | 33 | 72 | 48 |
| | Flame retardancy | Before water exposure test | - | V-0 | V-0 | V-0 | V-0 | V-0 | V-0 | V-0 | V-2 | V-0 |
| | | After water exposure test | - | V-1 | not V | V-0 | V-1 | V-0 | V-1 | V-0 | not V | V-0 |
| | | Total burning time after water exposure | sec | 80 | 330 | 36 | 63 | 33 | 53 | 22 | 310 | 29 |
| | Heat-resistance | Load deflection temperature | °C | 123 | 110 | 125 | 138 | 132 | 130 | 98 | 133 | 126 |

(Embodiment III) (Specific example using component B-3 as component B)

[Example III-1 to III-21, Reference Example III-1, Comparative Example III-1 to III-8]

A mixture having the composition shown in Tables 5 to 7 was fed from the first supply port of the extruder. The above mixture was obtained by mixing the following premix (i) with other components using a V-type blender. That is, (i) is a

mixture of an anti-drip agent (component D) and a polycarbonate resin (component A), and is uniformly mixed in a polyethylene bag by shaking the entire bag so that the component D is 2.5 wt% with respect to the amount of the mixture. The amount of the mixture supplied was precisely measured using a measuring instrument (CWF manufactured by Kubota Corporation). Extrusion was performed using a vent-type twin-screw extruder with a diameter of 30 mm (TEX30-α-38.5BW-3V manufactured by The Japan Steel Works, Ltd.) for melt-kneading at a screw rotation speed of 230 rpm, a discharge rate of 25 kg/h, and a vent vacuum of 3 kPa to obtain pellets. Note that the extrusion temperature was 280°C from the first supply port to the die portion. A portion of the obtained pellets was dried in a hot air circulation dryer at 90 to 100°C for 6 hours, and then molded into ISO bending test pieces (ISO179) and UL test pieces using an injection molding machine at a cylinder temperature of 280°C and a mold temperature of 70°C.

Adhesion evaluation of the above molded products was performed after plating was applied in accordance with the conditions shown below. After printing the obtained test piece at a width of 5 mm using MDX-2000 manufactured by Keyence Corporation using a 1064 nm YVO4 laser at a frequency of 80 kHz, a speed of 2 m/s, an output of 1.45 W, a laser spot diameter of 60 μm, and an overlap of 30 μm, the following operations were performed as a plating process.

(a) Degreasing (5 minutes at 45°C) OPC cleaner MIC* 150 ml/L
(b) Ultrasonic washing with water (2 minutes at room temperature)
(c) Electroless copper (55°C, 10 minutes) OPC copper MIC-ST*
(d) Washing with water (1 minute)
(e) Activation (30°C, 1 minute) ICP Accera 200 mIlL, 35% hydrochloric acid 85 ml/L
(f) Washing with water (1 minute)
(g) Electroless nickel (80°C, 10 minutes) ICP Nicoron GM-M 120 mIlL,
ICP Nicoron GM-1 50 ml/L
(h) Drying

(The processing solution marked with * is a trade name of Okuno Chemical Industry Co., Ltd.)

Note that the components indicated by alphanumericals in Table 1 are explained as follows.

(Component A)

A-1: Aromatic polycarbonate resin (polycarbonate resin powder with a viscosity average molecular weight of 20,900 prepared from bisphenol A and phosgene by a conventional method, Panlite L-1225WS (product name) manufactured by Teijin Ltd.)
A-2: Recycled polycarbonate resin (recycled polycarbonate resin pellets with a viscosity average molecular weight of 20,000, recycled from a polycarbonate resin sheet)
A-3: Recycled polycarbonate resin (recycled polycarbonate resin pellets with a viscosity average molecular weight of 20,500, recycled from polycarbonate resin headlamp lenses) A-4: Recycled polycarbonate resin (recycled polycarbonate resin pellets with a viscosity average molecular weight of 20,000, recycled from polycarbonate resin water bottles)

(Component B-3)

B-3-1-1: PAN-based carbon fiber (HTC422 manufactured by Teijin Ltd., urethane bundle 2.5 parts by weight, average fiber length 6 mm, fiber diameter 7 μm). The amount of sodium ion contained in component B-3-1-1 is 35 ppm.
B-3-1-2: Nickel coated carbon fiber (HT C923 6 mm manufactured by Teijin Ltd., major axis 7 μm, cut length 6 mm, epoxy/urethane sizing agent). The amount of sodium ion contained in component B-3-1-2 was 40 ppm.
B-3-1-3: Ketjen black (EC-600JD (product name) manufactured by Lion Corporation, DBP oil absorption 495 ml/100 g, BET specific surface area 1270 $m^2/g$). The amount of sodium ion contained in component B-3-1-3 was 280 ppm.
B-3-1-4: Graphite subjected to thermal expansion treatment (CSF400R, manufactured by MARUTOYO Co., Ltd). The amount of sodium ion contained in component B-3-1-4 was 230 ppm.
B-3-2-1: Talc (Victorilite TK-RC manufactured by Shokozan Mining Co., Ltd., average particle size (D50) 4.7 μm). The amount of sodium ion contained in component B-3-2-1 was 35 ppm.
B-3-2-2: Mica (MT200B (trade name) manufactured by KINSEI MATEC CO., LTD., average particle size about 35 μm). The amount of sodium ion contained in component B-3-2-2 was 2500 ppm.

B-3-2-3: Wollastonite (KGP-H40 manufactured by Kansai Matec Co., Ltd.). The amount of sodium ion contained in component B-3-2-3 was 35 ppm.
B-3-3-1: Glass fiber, irregular cross-section chopped glass fiber (CSG 3PA-830 (trade name) manufactured by Nitto Boseki Co., Ltd., major axis 28 μm, minor axis 7 μm, cut length 3 mm, epoxy sizing agent).

The amount of sodium ion contained in component B-3-3-1 was 1900 ppm.

B-3-3-2: Thin glass flakes (average thickness 0.7 μm, average particle size 160 μm, surface treatment agent amount 3 wt%, surface treatment agent: silane coupling agent and epoxy resin). The amount of sodium ion contained in component B-3-3-2 was 1100 ppm. B-3-4-1: Titanium oxide (DCF-T-17007 (trade name) manufactured by Resino Color Co., Ltd., average particle size 0.2 μm, with organic surface treatment (surface treatment amount 2.0 wt%)). The amount of sodium ion contained in component B-3-4-1 was 160 ppm.
B-3-5-1: Boron nitride (HS (product name) manufactured by Dandong Chemical Engineering Institute, average particle size 20 μm). The amount of sodium ion contained in component B-3-5-1 was 30 ppm.
B-3-6-1: Complex oxide of copper and chromium (Black 1G manufactured by Shepherd Color Japan Inc.). The amount of sodium ion contained in component B-3-6-1 was 1 ppm.

(Component C)

C-1: Cyclic phenoxyphosphazene having the trimer with k=1 at a content of 100 mol%, of the following formula (21)
C-2: Cyclic phenoxyphosphazene having the trimer with k = 1 at a content of 98.5 mol%, the tetramer with k = 2 at a content of 1 mol%, and the multimer with k = 3 or more at a content of 0.5 mol%, of the following formula (21)
C-3: Cyclic phenoxyphosphazene having the trimer with k = 1 at a content of 98 mol%, the tetramer with k = 2 at a content of 1.5 mol%, and the multimer with k = 3 or more at a content of 0.5 mol%, of the following formula (21)
C-4: Cyclic phenoxyphosphazene having the trimer with k = 1 at a content of 70 mol%, the tetramer with k = 2 at a content of 20 mol%, and the multimer with k = 3 or more at a content of 10 mol%, of the following formula (21)

[Chem. 25]

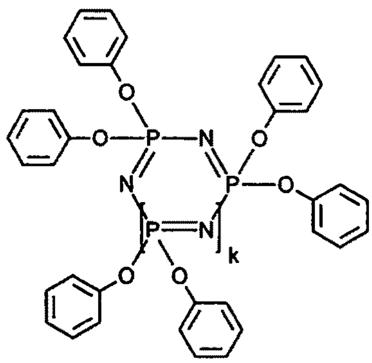

··· (21)

(Component D)

D-1: Anti-drip agent (polytetrafluoroethylene, Polyflon MPA FA500H (trade name) manufactured by Daikin Industries, Ltd.)
D-2: Coated anti-drip agent (polytetrafluoroethylene coated with styrene-acrylonitrile copolymer (polytetrafluoroethylene content 50 wt%), SN3307PF (trade name) manufactured by Shine Polymer)

(Component E)

E-1: ABS resin (UT-61 (trade name) manufactured by NIPPON A&L Co., Ltd., free AS polymer component approximately 80 wt%, ABS polymer component (acetone insoluble gel content) approximately 20 wt%, butadiene rubber component approximately 14 wt%, weight average rubber particle size 0.56 μm, produced by bulk polymerization)

E-2: A rubbery polymer substantially not containing styrene (Kane Ace M-711 (trade name) manufactured by Kaneka Corporation, a graft copolymer with core of 80 wt% polybutadiene and shell of methyl methacrylate and ethyl acrylate, weight average particle size 0.23 μm)

E-3: Polystyrene-poly(ethylene/butylene) block-polystyrene copolymer (SEBS) (Septon 8006 (trade name) manufactured by Kuraray Co., Ltd., (styrene content 34 wt%))

(Component F)

F-1: Acid-modified polyolefin (Diacama-DC30M manufactured by Mitsubishi Chemical Corporation)

(Component G)

G-1: Phosphorous heat stabilizer (ethyl diethyl phosphonoacetate JC-224 (product name) manufactured by Johoku Chemical Co., Ltd.)

(Component H)

H-1: Benzotriazole ultraviolet absorber (Tinuvin234 manufactured by CIBA SPECIALTY CHEMICALS)

(Other components)

STB-1: Phenolic heat stabilizer (octadecyl-3-(3,5-di-tert-butyl-4-hydroxyphenyl)propionate, molecular weight 531, Irganox 1076 (product name) manufactured by BASF Japan Ltd.)

WAX: Fatty acid ester mold release agent (Rikemal SL900 (product name) manufactured by Riken Vitamin Co., Ltd.)

(Component X)

X-1: Phosphate ester flame retardant (bisphenol A condensed phosphate ester, CR-741 (product name) manufactured by DAIHACHI CHEMICAL INDUSTRY CO., LTD.)

[Table 5]

(BWE: Before water exposure, AWE: After water exposure)

| Item | | | Unit | Examples | | | | | | | | | |
|---|---|---|---|---|---|---|---|---|---|---|---|---|---|
| | | | | III-1 | III-2 | III-3 | III-4 | III-5 | III-6 | III-7 | III-8 | III-9 | III-10 |
| Composition | Component A | A-1 | PBW | 100 | | | | 100 | | 100 | 100 | 100 | 100 |
| | | A-2 | PBW | | 100 | | | | | | | | |
| | | A-3 | PBW | | | 100 | | | | | | | |
| | | A-4 | PBW | | | | 100 | | | | | | |
| | Component B-3 | B-3-1-1 | PBW | 45.0 | 45.0 | 45.0 | 45.0 | | | | | | |
| | | B-3-1-2 | PBW | | | | | 45.0 | 45.0 | | | | |
| | | B-3-1-3 | PBW | | | | | | | 12.0 | | | |
| | | B-3-1-4 | PBW | | | | | | | | 45.0 | | |
| | | B-3-2-1 | PBW | | | | | | | | | 0.1 | 45.0 |
| | Component C | C-1 | PBW | | | | | 7.5 | 1.5 | | | | |
| | | C-2 | PBW | 7.5 | 7.5 | 7.5 | 0.7 | | | 4.5 | 7.5 | 4.0 | 7.5 |
| | Component D | D-1 | PBW | 0.4 | 0.4 | 0.4 | 0.4 | 0.4 | | 0.4 | 0.4 | 0.2 | |
| | | D-2 | PBW | | | | | | 1.2 | | | | 1.5 |
| | Component E | E-1 | PBW | | | | | | | | | | |
| | | E-2 | PBW | | | | | | | | | | |
| | | E-3 | PBW | | | | | | | | | | 3.0 |
| | Component F | F-1 | PBW | | | | | 0.05 | 1.00 | | | | 3.00 |
| | Component G | G-1 | PBW | | | | | | 0.1 | | 0.1 | | 0.2 |
| | Component H | H-1 | PBW | | | | | | 0.4 | | 10.0 | | 0.5 |
| | Others | STB-1 | PBW | | | | | | 0.1 | 0.1 | | | |
| | | WAX | PBW | | | | | | 0.1 | 0.1 | | | |
| Important Characteristics | Charpy impact strength | BWE test | kJ/m² | 7 | 7 | 7 | 7 | 7 | 7 | 7 | 6 | 10 | 15 |
| | | AWE test | kJ/m² | 4 | 4 | 4 | 4 | 4 | 4 | 4 | 3 | 6 | 8 |
| | | Retention rate | % | 57 | 57 | 57 | 57 | 57 | 51 | 51 | 53 | 58 | 53 |
| | Flame retardancy | BWE test | - | V-0 | V-0 | V-0 | V-0 | V-0 | V-0 | V-0 | V-0 | V-0 | V-0 |
| | | AWE test | - | V-0 | V-0 | V-0 | V-0 | V-0 | V-0 | V-0 | V-0 | V-0 | V-0 |
| | | Total burning time AWE | sec | 32 | 34 | 34 | 33 | 29 | 33 | 33 | 27 | 19 | 27 |
| | Surface nature | Appearance | | OK | OK | OK | OK | OK | OK | OK | OK | OK | OK |
| Other Characteristics | Thermal conductivity | Thermal conductivity | W/m·k | 2.3 | 2.3 | 2.3 | 2.3 | 1.3 | 1.4 | 0.2 | 10.0 | 0.2 | 1.0 |
| | Conductivity | Volume resistivity | Ωcm | 1.0E+0 | 1.0E+0 | 1.0E+0 | 1.0E+0 | 1.0E-3 | 1.0E-3 | 1.0E+6 | 1.0E+6 | >1.0E+15 | >1.0E+15 |
| | Electromagnetic shielding performance | 1 GHz | - | NG | NG | NG | NG | OK | OK | NG | NG | NG | NG |
| | Light reflection properties | Light reflectance | - | NG | NG | NG | NG | NG | NG | NG | NG | NG | NG |
| | Plating properties | Adhesion | - | NG | NG | NG | NG | NG | NG | NG | NG | NG | NG |

[Table 6]

(BWE: Before water exposure, AWE: After water exposure)

| | Item | | Unit | Examples | | | | | | | | | | |
|---|---|---|---|---|---|---|---|---|---|---|---|---|---|---|
| | | | | III-11 | III-12 | III-13 | III-14 | III-15 | III-16 | III-17 | III-18 | III-19 | III-20 | III-21 |
| Composition | Component A | A-1 | PBW | 100 | 100 | 100 | 100 | 100 | 100 | 100 | 100 | 100 | 100 | 100 |
| | Component B-3 | B-3-2-1 | PBW | | | | | | | | | | 85.0 | |
| | | B-3-2-2 | PBW | 45.0 | | | | | | | | | | 60.0 |
| | | B-3-2-3 | PBW | | 45.0 | | | | | | | | | |
| | | B-3-3-1 | PBW | | | 45.0 | 100 | 150.0 | | | | | | 85.0 |
| | | B-3-3-2 | PBW | | | | | | 45.0 | | | | | |
| | | B-3-4-1 | PBW | | | | | | | 26.0 | | | | |
| | | B-3-5-1 | PBW | | | | | | | | 45.0 | | 60.0 | |
| | | B-3-6-1 | PBW | | | | | | | | | 12.0 | | |
| | Component C | C-1 | PBW | | | | | | 7.5 | | 7.5 | | | |
| | | C-2 | PBW | 7.5 | 0.7 | 7.5 | 35.0 | 19.0 | | 7.0 | | 4.5 | 15.0 | 32.0 |
| | Component D | D-1 | PBW | 0.4 | 0.4 | 0.4 | | 2.5 | 0.4 | 0.4 | 0.4 | 0.4 | 2.5 | |
| | | D-2 | PBW | | | | 0.8 | | | | | | | 3.0 |
| | Component E | E-1 | PBW | | | | | | | | | | | 40.0 |
| | | E-2 | PBW | | | | 8.0 | | | | | | | |
| | | E-3 | PBW | | | | | | | | | | | |
| | Component F | F-1 | PBW | | 1.00 | | | | | 1.00 | | | 15.00 | |
| | Component G | G-1 | PBW | | 0.1 | | 0.1 | | | 0.1 | | | 0.3 | 0.3 |
| | Component H | H-1 | PBW | | 0.4 | | | | | 0.4 | | | 8.0 | 8.0 |
| | Others | STB-1 | PBW | | 0.1 | | 0.1 | | | 0.1 | | | 0.3 | 0.3 |
| | | WAX | PBW | | 0.1 | | 0.1 | | | | | | 0.3 | 0.3 |
| Important Characteristics | Charpy impact strength | BWE test | $kJ/m^2$ | 9 | 8 | 10 | 10 | 10 | 6 | 10 | 6 | 6 | 6 | 9 |
| | | AWE test | $kJ/m^2$ | 5 | 4 | 6 | 6 | 5 | 3 | 6 | 3 | 3 | 3 | 5 |
| | | Retention rate | % | 51 | 53 | 64 | 59 | 54 | 55 | 56 | 52 | 53 | 53 | 56 |
| | Flame retardancy | BWE test | - | V-0 | V-0 | V-0 | V-0 | V-0 | V-0 | V-0 | V-0 | V-0 | V-0 | V-0 |
| | | AWE test | - | V-0 | V-0 | V-0 | V-0 | V-0 | V-0 | V-0 | V-0 | V-0 | V-0 | V-0 |
| | | Total burning time AWE | sec | 29 | 33 | 22 | 23 | 25 | 25 | 29 | 25 | 24 | 30 | 29 |
| | Surface nature | Appearance | | OK | OK | OK | OK | OK | OK | OK | OK | OK | OK | OK |
| Other Characteristics | Thermal conductivity | Thermal conductivity | W/m·k | 0.3 | 0.2 | 0.3 | 0.3 | 0.3 | 0.3 | 0.3 | 3.0 | 0.2 | 3.0 | 0.3 |
| | Conductivity | Volume resistivity | Ωcm | >1.0E+15 | >1.0E+15 | >1.0E+15 | >1.0E+15 | >1.0E+15 | >1.0E+15 | >1.0E+15 | >1.0E+15 | >1.0E+15 | >1.0E+15 | >1.0E+15 |
| | Electromagnetic shielding performance | 1 GHz | - | NG | NG | NG | NG | NG | NG | NG | NG | NG | NG | NG |
| | Light reflection properties | Light reflectance | - | NG | NG | NG | NG | NG | NG | OK | NG | NG | NG | NG |
| | Plating properties | Adhesion | - | NG | NG | NG | NG | NG | NG | NG | NG | OK | NG | NG |

[Table 7] (Rex: Reference example, BWE: Before water exposure, AWE: After water exposure)

| Item | | | Unit | Rex | Comparative example | | | | | | | |
|---|---|---|---|---|---|---|---|---|---|---|---|---|
| | | | | III-1 | III-1 | III-2 | III-3 | III-4 | III-5 | III-6 | III-7 | III-8 |
| Composition | Component A | A-1 | PBW | 100 | 100 | | | | 100 | 100 | 100 | 100 |
| | | A-2 | PBW | | | 100 | | | | | | |
| | | A-3 | PBW | | | | 100 | | | | | |
| | | A-4 | PBW | | | | | 100 | | | | |
| | Component B-3 | B-3-1-1 | PBW | 45.0 | | 180.0 | 45.0 | | | | | |
| | | B-3-1-2 | PBW | | | | | 45.0 | | | | |
| | | B-3-2-1 | PBW | | | | | | 0.1 | | 85.0 | |
| | | B-3-3-1 | PBW | | | | | | | 100.0 | | 200.0 |
| | | B-3-5-1 | PBW | | | | | | | | 60.0 | |
| | Component C | C-1 | PBW | | 4.0 | | | | | | | |
| | | C-2 | PBW | | | 7.5 | | | | 50.0 | 15.0 | 19.0 |
| | | C-3 | PBW | | | | 7.5 | | | | | |
| | | C-4 | PBW | | | | | 1.5 | | | | |
| | Component D | D-1 | PBW | 0.4 | 0.2 | 0.4 | 0.4 | | 0.2 | | | 2.5 |
| | | D-2 | PBW | | | | | 1.2 | | 0.8 | | |
| | Component E | E-2 | PBW | | | | | | | 8.00 | | |
| | Component F | F-1 | PBW | | | | | 1.00 | | | 15.00 | |
| | Component G | G-1 | PBW | | | | | 0.1 | | 0.1 | 0.3 | |
| | Component H | H-1 | PBW | | | | | 0.4 | | | 8.0 | |
| | Others | STB-1 | PBW | | | | | 0.1 | | 0.1 | 0.3 | |
| | | WAX | PBW | | | | | 0.1 | | 0.1 | 0.3 | |
| | | X-1 | PBW | 4.5 | | | | | | | | |
| Important Characteristics | Charpy impact strength | BWE test | kJ/m² | 7 | 10 | 4 | 7 | 7 | 50 | 10 | 7 | 12 |
| | | AWE test | kJ/m² | 3 | 6 | 2 | 3 | 3 | 31 | 4 | 3 | 8 |
| | | Retention rate | % | 43 | 61 | 53 | 47 | 43 | 62 | 41 | 46 | 67 |
| | Flame retardancy | BWE test | - | V-1 | V-1 | V-0 | V-0 | V-0 | Not-V | V-0 | V-2 | V-0 |
| | | AWE test | - | Not-V | V-1 | V-0 | V-1 | V-1 | Not-V | V-0 | V-2 | V-0 |
| | | Total burning time AWE | sec | 71 | 51 | 49 | 55 | 64 | 360 | 22 | 41 | 29 |
| | Surface nature | Appearance | | OK | OK | NG | OK | OK | OK | OK | OK | NG |
| Other Characteristics | Thermal conductivity | Thermal conductivity | W/m·k | 2.3 | 0.2 | 3.4 | 2.3 | 1.4 | 0.2 | 0.3 | 4.0 | 0.3 |
| | Conductivity | Volume resistivity | Ωcm | 1.0E+0 | >1.0E+15 | 1.0E-1 | 1.0E+0 | 1.0E-3 | >1.0E+15 | >1.0E+15 | >1.0E+15 | >1.0E+15 |
| | Electromagnetic shielding performance | 1 GHz | - | NG | NG | NG | NG | OK | NG | NG | NG | NG |
| | Light reflection properties | Light reflectance | - | NG | NG | NG | NG | NG | NG | NG | NG | NG |
| | Plating properties | Adhesion | - | NG | NG | NG | NG | NG | NG | NG | NG | NG |

[Industrial Applicability]

The flame-retardant polycarbonate resin composition of the present invention satisfies impact strength, flame retardancy, and durability at high levels, and thus is widely useful for housing equipment, building materials, daily life materials, infrastructure equipment, automobiles, OA/EE, and other various fields, especially in outdoor applications where durability is required.

## Claims

1. A flame-retardant polycarbonate resin composition comprising:

   (A) 100 parts by weight of polycarbonate resin (component A); and with respect to (A);
   (B) (B-1) 1 to 30 parts by weight of ABS resin (component B-1-1) and 1 to 10 parts by weight of methyl methacrylate-butadiene-styrene copolymer (component B-1-2), (B-2) 1 to 100 parts by weight of aromatic polyester resin (component B-2), or (B-3) 0.1 to 160 parts by weight of inorganic filler (component B-3);
   (C) 1 to 45 parts by weight of phosphazene (component C) containing 98.5 mol% or more of phosphazene cyclic trimer; and
   (D) 0.05 to 4 parts by weight of anti-drip agent (component D)

2. The flame-retardant polycarbonate resin composition according to claim 1, wherein the resin composition contains (A) 100 parts by weight of polycarbonate resin (component A); and with respect to (A); (B) (B-1)1 to 30 parts by weight of ABS resin (component B-1-1) and 1 to 10 parts by weight of methyl methacrylate-butadiene-styrene copolymer (component B-1-2); (C) 1 to 30 parts by weight of phosphazene (component C) containing 98.5 mol% or more of phosphazene cyclic trimer; and (D) 0.05 to 2 parts by weight of anti-drip agent (component D).

3. The flame-retardant polycarbonate resin composition according to claim 1 or 2, wherein the total amount of sodium ion and potassium ion contained in the resin composition is 1 to 40 ppm.

4. The flame-retardant polycarbonate resin composition according to claim 1 or 2, wherein the total amount of sodium ion and potassium ion contained in component B-1-1 and component B-1-2 in the resin composition is 0.1 to 30 ppm.

5. The flame-retardant polycarbonate resin composition according to claim 1 or 2, wherein component B-1-1 is an ABS resin produced by a bulk polymerization method.

6. The flame-retardant polycarbonate resin composition according to the claim 1, wherein the resin composition contains (A) 100 parts by weight of polycarbonate resin (component A); and with respect to (A); (B) (B-2) 1 to 100 parts by weight of aromatic polyester resin (component B-2); (C)1 to 30 parts by weight of phosphazene (component C) containing 98.5 mol% or more of phosphazene cyclic trimer; and (D) 0.05 to 2 parts by weight of anti-drip agent (component D).

7. The flame-retardant polycarbonate resin composition according to claim 1 or 6, wherein component B-2 is at least one aromatic polyester resin selected from the group consisting of polyarylate resins and liquid crystal polyester resins.

8. The flame-retardant polycarbonate resin composition according to claim 7, wherein the polyarylate resin of component B-2 is a polyarylate resin containing a polymerized unit represented by one of the following formulas (1) to (3).

[Chem. 1]

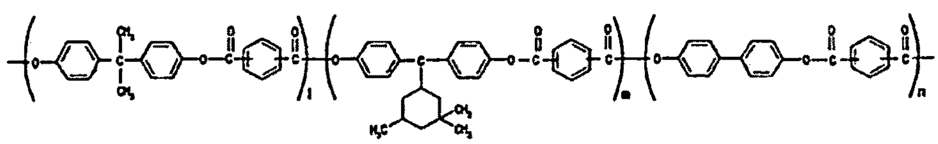

· · · (1)

.

(Wherein, l, m, and n are positive integers satisfying l+m+n=100, l:n=50:50 to 70:30, and (l+n):m=75:25 to 40:60. )

[Chem. 2]

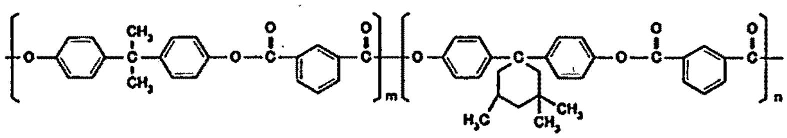 ・・・(2)

(Wherein, m and n are positive integers satisfying m/n = 8/2 to 2/8.)

[Chem. 3]

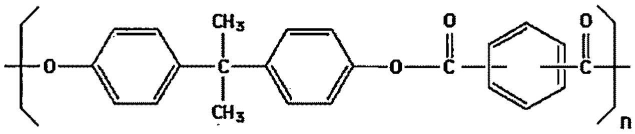 ・・・(3)

(Wherein, n is a positive integer.)

**9.** The flame-retardant polycarbonate resin composition according to claim 1 or 6, wherein the total amount of sodium ion and potassium ion contained in the resin composition is 1 to 40 ppm.

**10.** The flame-retardant polycarbonate resin composition according to claim 1 or 6, wherein the total amount of sodium ion and potassium ion contained in component B-2 is 0.1 to 40 ppm.

**11.** The flame-retardant polycarbonate resin composition according to claim 1, wherein the resin composition contains (A) 100 parts by weight of polycarbonate resin (component A); and with respect to (A); (B) (B-3) 0.1 to 160 parts by weight of inorganic filler (component B-3); (C) 1 to 45 parts by weight of phosphazene (component C) containing 98.5 mol% or more of phosphazene cyclic trimer; and (D) 0.05 to 4 parts by weight of anti-drip agent (component D).

**12.** The flame-retardant polycarbonate resin composition according to claim 1 or 11, wherein component B-3 is at least one inorganic filler selected from the group consisting of a carbon-based filler, a silicate mineral, a glass-based filler, an additive, containing at least two types of metals, for molding Laser Direct Structuring (LDS) resin, a metal oxide, and a boron-based filler.

**13.** The flame-retardant polycarbonate resin composition according to claim 1 or 11, wherein component B-3 is at least one inorganic filler selected from the group consisting of carbon fiber, carbon black, Ketjen black, graphite, mica, talc, wollastonite, kaolin, glass fiber, glass flake, a compound containing at least two metals selected from the group consisting of chromium, tin, and antimony, titanium oxide, and boron nitride.

**14.** The flame-retardant polycarbonate resin composition according to claim 1 or 11, further comprising, with respect to 100 parts by weight of component A, (E) as an impact modifier, 0.1 to 50 parts by weight of a rubbery polymer (component E-1) or an aromatic vinyl-(hydrogenated) conjugated diene type block copolymer (component E-2).

**15.** The flame-retardant polycarbonate resin composition according to claim 14, wherein component E-1 is a rubbery polymer obtained by copolymerizing, in the presence of at least one rubber component selected from the group consisting of diene rubber, ethylene rubber, acrylic rubber, and silicone rubber, an acrylic monomer, an aromatic vinyl monomer, a mixture of an acrylic monomer and a monomer copolymerizable with an acrylic monomer, or a mixture of an aromatic vinyl monomer and a monomer copolymerizable with an aromatic vinyl monomer, and component E-2 is one or more aromatic vinyl-(hydrogenated) conjugated diene type block copolymer(s) selected from the group consisting of SEBS (polystyrene-poly(ethylene/butylene) block-polystyrene copolymer), SEPS (polystyrene-poly(ethylene/propylene) block-polystyrene copolymer), SEP (polystyrene-poly(ethylene/propylene) block copolymer) and SEEPS (polystyrene-poly(ethylene-ethylene/propylene) block-polystyrene copolymer).

**16.** The flame-retardant polycarbonate resin composition according to claim 1 or 11, further comprising, with respect to 100 parts by weight of component A, (F) 0.01 to 20 parts by weight of an acid-modified polyolefin resin (component F)

having a carboxyl group and/or acid anhydride group thereof.

**17.** The flame-retardant polycarbonate resin composition according to claim 1 or 11, further comprising, with respect to 100 parts by weight of component A, (G) 0.001 to 1 part by weight of a phosphorus stabilizer (component G).

**18.** The flame-retardant polycarbonate resin composition according to claim 1 or 11, further comprising, with respect to 100 parts by weight of component A, (H) 0.01 to 15 parts by weight of an ultraviolet absorber (component H).

**19.** The flame-retardant polycarbonate resin composition according to claim 1, 2, 6 or 11, wherein component A contains a recycled polycarbonate resin.

**20.** A molded product obtained by molding the resin composition according to any one of claims 1 to 19.

**INTERNATIONAL SEARCH REPORT**

International application No.
**PCT/JP2022/047542**

**A. CLASSIFICATION OF SUBJECT MATTER**

***C08L 69/00***(2006.01)i; ***C08K 3/013***(2018.01)i; ***C08K 3/04***(2006.01)i; ***C08K 3/10***(2018.01)i; ***C08K 3/34***(2006.01)i; ***C08K 3/38***(2006.01)i; ***C08K 3/40***(2006.01)i; ***C08K 5/5399***(2006.01)i; ***C08L 51/04***(2006.01)i; ***C08L 67/00***(2006.01)i
FI: C08L69/00; C08L51/04; C08K3/013; C08K5/5399; C08K3/04; C08K3/10; C08K3/34; C08K3/40; C08K3/38; C08L67/00

According to International Patent Classification (IPC) or to both national classification and IPC

**B. FIELDS SEARCHED**

Minimum documentation searched (classification system followed by classification symbols)

C08L69/00; C08K3/013; C08K3/04; C08K3/10; C08K3/34; C08K3/38; C08K3/40; C08K5/5399; C08L51/04; C08L67/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | WO 2020/066535 A1 (TEIJIN LIMITED) 02 April 2020 (2020-04-02)<br>claims, paragraphs [0167]-[0177], examples | 1, 5-6, 11-20<br>3-4, 9 |
| Y | JP 2013-1801 A (TEIJIN CHEMICALS LTD) 07 January 2013 (2013-01-07)<br>claims, paragraph [0004], examples | 1-6, 9, 11-20 |
| Y | JP 2008-163315 A (TEIJIN CHEMICALS LTD) 17 July 2008 (2008-07-17)<br>claims, examples | 1-3, 5-20 |
| Y | JP 2003-342482 A (POLYPLASTICS CO) 03 December 2003 (2003-12-03)<br>claims, paragraph [0284], examples | 1-3, 5-20 |
| Y | WO 2021/228636 A1 (COVESTRO DEUTSCHLAND AG) 18 November 2021 (2021-11-18)<br>claims, p. 9, line 26 to p. 12, line 11, examples | 1-20 |
| Y | JP 2015-21070 A (TEIJIN LIMITED) 02 February 2015 (2015-02-02)<br>paragraphs [0075], [0107] | 3-4, 9-10 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **07 February 2023** | **21 February 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**

International application No.
**PCT/JP2022/047542**

| C. DOCUMENTS CONSIDERED TO BE RELEVANT | | |
|---|---|---|
| Category* | Citation of document, with indication, where appropriate, of the relevant passages | Relevant to claim No. |
| Y | JP 2014-105276 A (TEIJIN LIMITED) 09 June 2014 (2014-06-09) paragraphs [0071], [0104] | 3-4, 9-10 |

Form PCT/ISA/210 (second sheet) (January 2015)

**INTERNATIONAL SEARCH REPORT**
**Information on patent family members**

International application No.
**PCT/JP2022/047542**

| Patent document cited in search report | Publication date (day/month/year) | Patent family member(s) | Publication date (day/month/year) |
|---|---|---|---|
| WO 2020/066535 A1 | 02 April 2020 | US 2022/0112369 A1<br>claims, paragraphs [0177]-[0184], examples<br>EP 3858919 A1<br>CN 112752797 A<br>TW 202026359 A | |
| JP 2013-1801 A | 07 January 2013 | (Family: none) | |
| JP 2008-163315 A | 17 July 2008 | CN 101200584 A<br>TW 200837141 A | |
| JP 2003-342482 A | 03 December 2003 | (Family: none) | |
| WO 2021/228636 A1 | 18 November 2021 | (Family: none) | |
| JP 2015-21070 A | 02 February 2015 | (Family: none) | |
| JP 2014-105276 A | 09 June 2014 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2032154 A
- JP 2115262 A
- JP 11256022 A
- JP 2002030209 A
- JP 9278990 A
- JP 2015108119 A
- JP 2013001801 A
- WO 2020066535 A
- JP 2000026741 A
- JP 2010024312 A
- JP 2015137308 A
- WO 2020118478 A
- WO 2020212245 A
- JP 2015108120 A
- JP 2015137307 A
- JP 6172508 A
- JP 8027370 A
- JP 2001055435 A
- JP 5306336 A
- EP 728811 A
- WO 9740092 A
- US 4379910 A
- JP 60258263 A
- JP 63154744 A
- JP 4272957 A
- JP 6220210 A
- JP 8188653 A
- JP 9095583 A
- JP 11029679 A
- JP 3469391 B
- JP 8301929 A
- JP 7233160 A


### Non-patent literature cited in the description


- *Journal of Chemical Engineering of Japan*, 1984, vol. 48 (6), 415
- *Journal of Chemical Engineering of Japan*, 1989, vol. 53 (6), 423